# EUROPEAN PATENT APPLICATION

(11) **EP 1 413 946 A2**
(43) Date of publication of application: **28.04.2004**
(21) Application number: 03019100.1
(22) Date of filing: 15.05.1992
(51) Int. Cl.: G06F 1/32

(54) **Computer system having a reduced power control circuit**

(30) Priority: 17.05.1991 US 705039; 17.05.1991 US 703026; 30.08.1991 US 752342; 03.04.1992 US 865048; 03.04.1992 US 866787
(62) Divisional of application: 92912984.9
(71) Applicant: Packard Bell NEC, Inc., Woodland Hills, CA 91367 (US)
(72) Inventor: Foster, Mark J., Stevensville, MI 49127 (US); Fakhruddin, Saifudden T., Saint Joseph, MI 49085 (US); Walker, James L., Benton Harbor, MI 49022 (US); Mendelow, Matthew B., Saint Joseph, MI 49085 (US); Sun, Jiming, Saint Joseph, MI 49058 (US); Brahman, Rodman S., Saint Joseph, MI 49085 (US); Krau, Michael P., Benton Harbor, MI 49022 (US); Willoughby, Brian D., Stevensville, MI 49127 (US); Maddix, Michael D., Saint Joseph, MI 49085 (US); Belt, Steven L., Stevensville, MI 49127 (US); Hovey, Scott A., Saint Joseph, MI 49085 (US); Ruthenbeck, Mark A., Stevensville, MI 49127 (US); Mart, Gregory Allen, Saint Joseph, MI 49085 (US); Vanderheyden, Randy J., Saint Joseph, MI 49085 (US); Grabon, Robert J., Berrien Springs, MI 49103 (US); Pandya, Chandrakant H., Saint Joseph, MI 49085 (US); Terry-Gray, Neysa K., Baroda, MI 49101 (US)
(74) Representative: Lieck, Hans-Peter, Dipl.-Ing.

(57) **Abstract**

A computer system (310; 3010) having a reduced power control circuit (311; 3011) which operates in a first reduced power state in which power is reduced to at least one peripheral (318, 321, 322, 327, 331; 3021, 3022, 3023, 3026, 3028, 3031) and in a second reduced power state in which the operating speed of said CPU (311; 3011) is reduced to further limit power to said computer system (310; 3010).

## Description

### TECHNICAL FIELD

This invention relates generally to a computer system having suspend/resume capability in a protected mode.

### BACKGROUND ART

There are existing microprocessors which have the capability to operate in'both a protected mode and an unprotected mode. In the unprotected mode, a program running in the microprocessor has access to all operational capabilities of the microprocessor, whereas in one or more protected modes the program has different degrees of accessibility to the operational capabilities of the microprocessor. While computer systems based on protected mode microprocessors have been adequate for most purposes, they have not been satisfactory in all respects.

One problem with systems based on protected-mode processors is that it is normally not possible to change certain features of the system configuration while running an application program under existing multi-tasking operating systems. One must exit an application program and operating system, make necessary system configuration adjustments, and then re-enter the multi-taking operating system in the application program, which is tedious and time-consuming.

A further consideration is that some operating systems maintain time and date information separate from the time and date information maintained in hardware, and while the hardware will automatically keep its time and date accurate during a suspend, the time and date in the operating system may become static at the point suspend is entered.

A further consideration is that, while the system is in the suspend mode, a user may remove a floppy disk which was present in a floppy disk drive of the system at the time was powered down, and may even replace it with a different disk. When the interrupted application program is resumed at the end of the suspend mode, there is the danger that it will not realize that the original disk has been replaced with a new disk, and attempt to write data to the new disk with the assumption that it is really the original disk, thereby destroying information on the new disk which the user did not wish to lose.

It may be desirable for a battery-operated system to automatically enter suspend mode when the system is not being actively used in order to conserve battery power, but this can be annoying to the user, and is not absolutely necessary where the system is temporarily operating on AC power.

While separate switches can be used to turn system power on and off and to place the system in suspend mode, this adds to the cost of the hardware and presents the risk that the user may inadvertently actuate the power-off button and thus lose the current operational state of the system in a situation where the user basically intends to always enter and leave suspend mode without losing the existing state of the system.

A further consideration is that, when a user loans his system to another user and the latter changes the system configuration, the configuration set by the original user is lost and the original user is thus faced with the tedious task of attempting to restore his configuration when the system is returned to him.

A further problem is that a user may wish to leave his system for a brief period of time without exiting the application program or turning the system off, and yet want to prevent others from using the keyboard (or other input device) to make alterations or to examine information in the computer system.

A further factor is that conventional floppy disk drives often have internal registers which can be written but cannot be read. If such a disk drive is turned off in order to save power during a suspend mode, the contents of the internal register must be restored when the disk drive is turned back on at the end of suspend mode. However, it is not possible to read the register before suspend mode is enter in order to determine its contents. The desire of users to have a computer system which is compatible with pre-exiting disk drives makes it impractical to simply design a new drive in which all the registers are readable.

A further consideration is that it is often desirable to be able to upgrade the firmware in a computer system from time-to-time in order to obtain new features, but sometimes upgraded firmware is compatible only with more recent versions of the hardware. Unfortunately, the current state of the hardware must normally be determined by dissembling the unit and studying a revision code on the circuit board in order to determine whether upgraded firmware will be compatible with the board, which is a tedious and time consuming process.

When implementing suspend mode, maintaining power to the main memory is commonly viewed as necessary in order to avoid losing the current state of the application program which has been temporarily interrupted, but the maximum duration of the suspend interval is less than it might otherwise be as a result of the fact that a battery powering the system will lose power faster when it has to maintain the main memory than when it does not.

Commercially available hard disk drives can often be selectively programmed in different ways. For example, there are hard disk drives which can be programmed to a multiple mode setting which allows data transfer to occur in multiple sector blocks with only one interrupt at the end of the block. Also, there are drives which can be given a predetermined time value and, whenever this time period elapses without an access to the drive, the drive automatically stops its motor, and does not start the motor again until a further access occurs. Moreover, there are hard disk drives which can be configured for a specific number of tracks per disk, sectors per track and number of heads. In a commercially available drive, these features are initialized by sending commands/data to the drive, but the drive usually does not provide any way for the system to subsequently obtain from the drive an indication of how these features have been set. It is assumed that the operating system already knows how it has set these features.

In order to use a hard disk of this type with a system having suspend/resume capability, and since the electronic circuitry in the drive will forget its current status during the suspend operation because of the fact that power to the drive circuitry is turned off, it is important that the exact status of the hard disk drive prior to the suspend operation be stored before the suspend, and that this status be restored in the hard disk drive when operation subsequently resumes. otherwise, the hard disk drive will operate differently after the suspend operation than it did before the suspend operation, which in turn may cause the application program to operate differently and/or improperly, which would obviously defeat the entire purpose of the suspend/resume capability.

Consequently, it is important for the hardware of a computer system (including the firmware in read only memory) to be designed so that it maintains externally of the hard disk drive a record of the specific settings to which the drive has been programmed. Thus, in a traditional system of the IBM compatible type, the firmware program commonly referred to as the basic input/output system (BIOS) would maintain this external record of the disk settings. So long as the operating system communicated with the disk drive only through the routines of the BIOS, the BIOS could maintain this record with no difficulty whatsoever. However, there are commercially available operating systems such as OS/2 and UNIX, which bypass the BIOS routines and directly set parameters in the hard disk drive. When the BIOS is bypassed, it obviously cannot maintain an accurate record of the specific settings programmed in the hard disk drive. consequently, a system which implements suspend/resume capability and uses a conventional hard disk drive cannot guarantee proper operation with certain pre-existing programs such as OS/2 and UNIX. On the other hand, it is desirable to avoid the design of a new hard disk drive which would permit proper operation of OS/2 and UNIX in a system with suspend/resume capability, but which is incompatible with existing interface and cabling standards.

If a user inadvertently closes the lid without remembering to turn off the power, the system can continue to operate and will run down the battery. One solution to this problem is to provide a lid switch which, in response to movement of the lid to the closed position, shuts off power to the system. However, this can be disadvantageous because, if the user unintentionally bumps the lid and causes it to close, the contents of the volatile semiconductor memory in the computer will be lost, and thus the user may lose important data or program information which he or she did not wish to lose.

An alternative known approach is to respond to the close of the lid by producing an audible beep rather than shutting off power to the system. This permits the user to reopen the lid and continue operation without any loss of data or program information. Nevertheless, if the user does not hear the beep or forgets to open the lid following the beep, the battery may run down and cause the contents of the semiconductor memory to be lost.

When the known system enters the standby mode, it is very visible to the user that the standby mode has been entered, because the computer turns the display off and halts program execution. Further, if the user presses a key or a push-button switch in order to exit standby mode and return to normal operation, a noticeable time interval usually elapses before the system is again running normally, which can be very annoying to a user.

One object of the present invention is to provide a system which is configured around a protected mode processor and is capable of properly carrying out a suspend and resume even when a restricted mode of operation is in effect.

A further object is to provide a system in which system configuration information can be changed even under a multi-tasking operating system without exiting an application program.

A further object is to provide a system which can ensure that time and date information in the active operating system is accurate following a suspend and resume.

A further object is to provide a system which can carry out a suspend and resume operation while reducing the risk the error due to the removal or exchange of a floppy disk present in a floppy disk drive of the system at the time of the suspend.

A further object is to provide a system which has respective sets of configuration parameters for use when the system is respectively operating under AC and DC power, and an arrangement for automatically switching between these respective configurations when the system is switched between AC power and DC power.

A further object is to provide a suspend/resume system having a single button which is deactuated to place the system in either a suspend mode or a power off mode, the system having an internal arrangement which specifies the effect of this button.

A further object is to provide a system having a multilevel configuration, so that after a first user loans the system to a second user and the second user changes the overall configuration, the first user can quickly and easily restore the configuration which was in effect at the time the system was loaned to the second user.

A further object is to provide a system which uses a conventional floppy disk drive without physical modification and which is capable of properly reconfiguring the floppy disk drive following a suspend and resume operation.

A further object is provide a system in which software or firmware can directly determine the current revision status of certain hardware in the system.

A further object is provide a system capable of carrying out a suspend and resume operation without maintaining power to the main system memory.

A further object of the present invention to provide a method and apparatus facilitating use of a hard disk drive in a computer system with suspend/resume capability so as to maintain compatibility with pre-existing programs, while simultaneously maintaining compatibility with existing interface and cabling standards.

A further object of the present invention to provide such a system in which the disk drive facilitates saving and restoring of its current status.

A further object of the invention to provide such an apparatus which involves little or no redesign of the circuitry of a hard disk drive and associated cabling, so that the disk drive has a cost comparable to that of pre-existing drives.

A further object of the invention is therefore to provide an arrangement for causing a system to enter and subsequently exit suspend mode in response to closing and subsequent opening of a lid.

A further object of the present invention to provide a computer system having a further mode which provides a level of power reduction over a normal operational mode but which is effectively imperceptible to the user.

### BRIEF DESCRIPTION OF THE DRAWINGS

Preferred embodiments of the present invention will be described in detail hereinafter with reference to the accompanying drawings, in which:
Figure 1 is a block diagram of a computer system which embodies features of the present invention;
Figure 2 is a state diagram for a state machine which is a component of the system of Figure 1;
Figure 3 is a diagram showing the organization of a main memory which is a component of the system of Figure 13;
Figures 4-14 are flowcharts showing respective portions of a program executed by a main processor of the computer system of Figure 1;
Figures 15 and 16 are diagrams representing the organization of respective memories used in an auxiliary processor which is a component of the system of Figure 1;
Figures 17-20 are flowcharts showing respective portions of a program executed by the auxiliary processor;
Figure 21 is a flowchart of pertinent portions of a program executed by a microprocessor in a hard disk drive of Figure 1;
Figure 22 is a flowchart of an alternative embodiment of the program represented by the flowchart of Figure 21;
Figure 23 is a flowchart of another alternative embodiment of the program of Figure 21;
Figure 24 is a block diagram of a computer system embodying the present invention;
Figures 25 and 26 are flowcharts of selected program segments executed by an auxiliary processor of the system of Figure 24;
Figures 27-31 are flowcharts of selected program segments executed by a main processor of the system of Figure 24;
Figure 32 is a block diagram of yet another alternative embodiment of the computer system of Figure 1;
Figures 33-36 are flowcharts which show respective portions of a program executed by a main processor which is a component of the system of Figure 32; and
Figures 37-40 are flowcharts of respective portions of a program executed by an auxiliary processor which is a component of the system of Figure 32.

### DETAILED DESCRIPTION

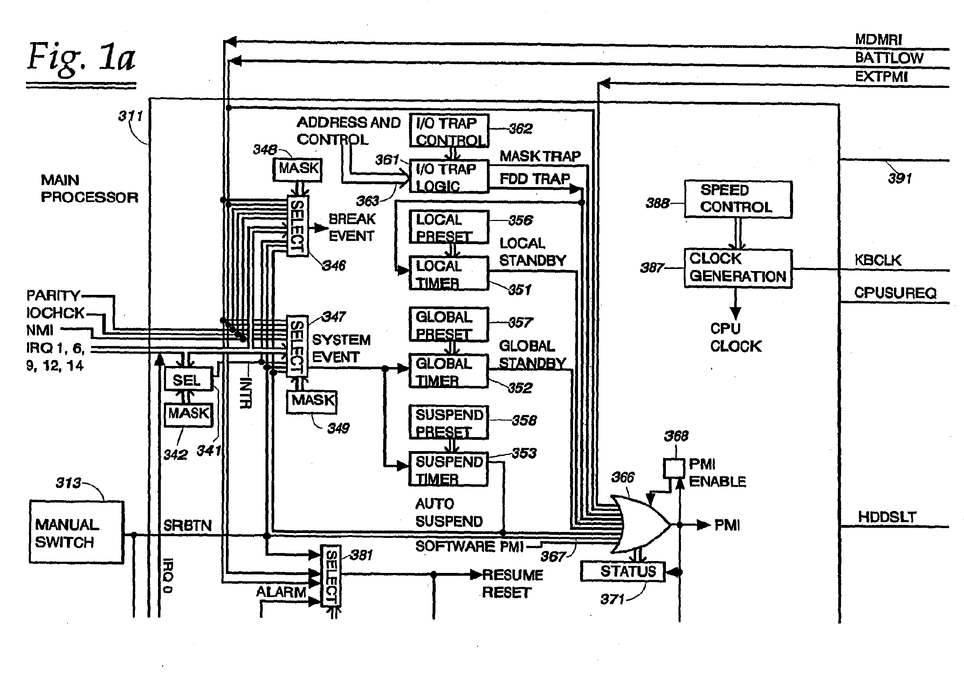

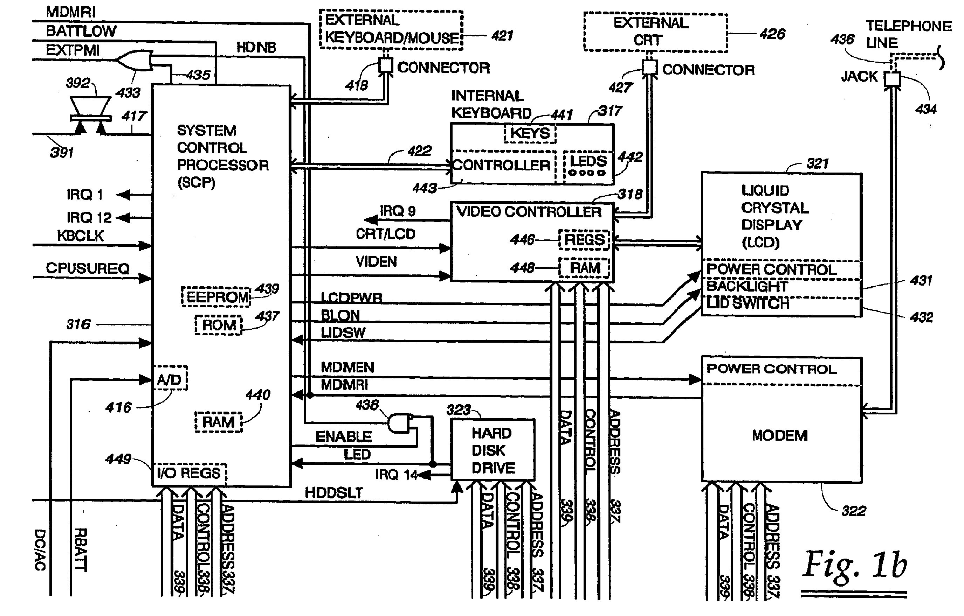

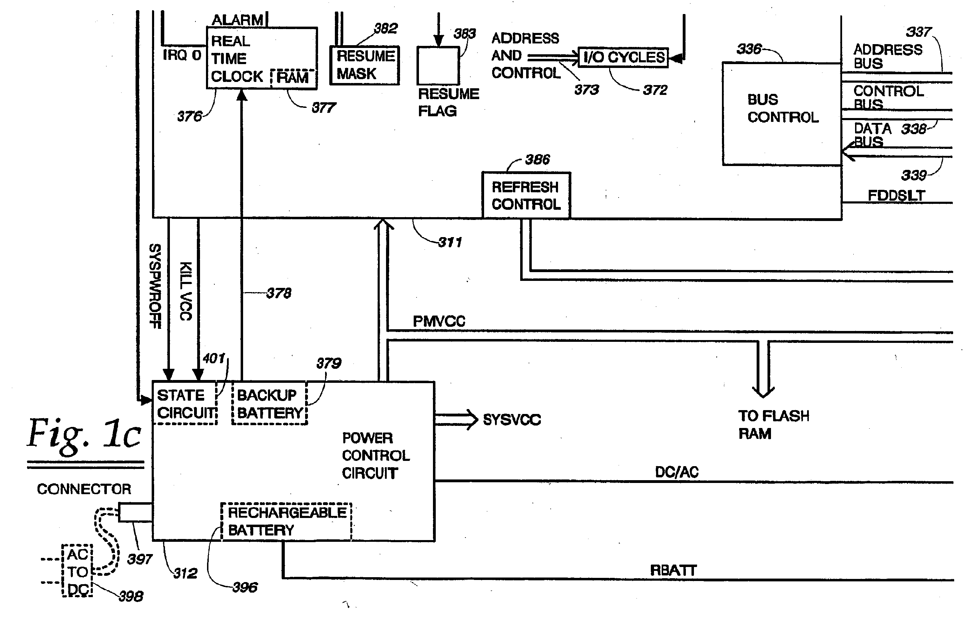

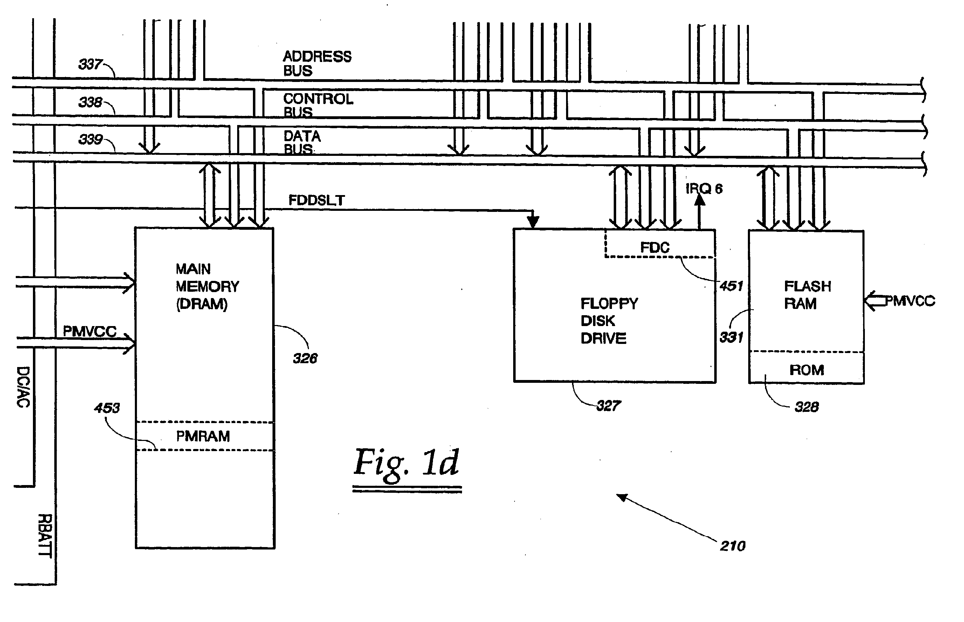

Figures 1 is a block diagram of a "notebook" type laptop computer system 310 which embodies features of the present invention. The computer system 310 includes a main processor 311, a power control circuit 312, a manually operable power control switch 313, a system control processor (SCP) 316, an internal keyboard 317, a video controller circuit 318, a monochrome liquid crystal display (LCD) unit 321, a modem 322, a hard disk drive (HDD) 323, a main memory 326 implemented with dynamic random access memory (DRAM) chips, a floppy disk drive (FDD) 327, a read only memory (ROM) 328, and a flash RAM 331.

A microprocessor suitable for use in the system 310 of Figure 1 is the Intel 386-SL, which was developed by Intel Corporation of Santa Clara, California under a license from the present Applicant. It will be recognized that other functionally equivalent microprocessors may be developed could also be used for the main processor 311. Since detailed information regarding the Intel 386-SL is available from Intel, the entire internal architecture thereof has not been shown and described in detail here. The processor 311 has an unrestricted mode and at least one restricted or "protected" mode. In Figure 1, only features which are important to an understanding of the present invention are depicted and described.

More specifically, the processor 311 includes a bus control circuit 336, which controls an address bus 337, a control bus 338 and a bidirectional data bus 339 coupling the processor 311 to other major component of the system. The processor 311 also includes an interrupt selector 341 having respective inputs to which are coupled six interrupt signals IRQ 0, 1, 6, 9, 12 and 14. An IRQ mask register 342 can be loaded by software with a mask having six bits which each correspond to a respective one of the six interrupt lines. When each mask bit is a binary "1", the selector 341 actuates its single INTR output line whenever the associated interrupt line is actuated, whereas if the mask bit is a binary "0", the selector 341 ignores the associated interrupt line.

A break event selector 346 and a system event selector 347 each have a plurality of inputs, and different signals are coupled to respective inputs of both of the selectors 346 and 347. These signals include the six IRQ interrupt signals, and the INTR signal from the interrupt selector 341. The other signals include a modem ring indicator signal MDMRI generated by the modem 322, a battery low warning signal BATTLOW generated by the SCP 316, a parity signal PARITY which can be controlled by a device such as the main memory 326 which carries out parity checking, an input/output (I/O) channel check signal IOCHCK which can be controlled by I/O devices, a non-maskable interrupt NMI which has a higher priority than the IRQ interrupt signals, the output signal SRBTN from the manual switch 313, and an AUTO SUSPEND signal which will be described in more detail later. Associated with each of the selectors 346 and 347 is a respective mask register 348 or 349 which is loaded by software, and each of the selectors 346 and 347 in the associated mask register 348 or 349 functions in a manner similar to that described above for the selector 341 and associated mask register 342. The break event selector 346 produces a BREAK EVENT output signal, and the system event selector 347 produces a SYSTEM EVENT output signal.

The processor 311 includes three hardware timers 351-353, in particular a local timer 351, a global timer 352, and a suspend timer 353. Associated with each timer is a respective preset register 356-358, which is controlled by software and can be set to enable or disable the associated timer. Further, each preset register includes a numerical value which defines the time interval which the associated timer is to measure. The SYSTEM EVENT signal is connected to each of the timers 352 and 353, and each time this signal is actuated it causes each of these timers which is enabled to restart the timing of its specified time interval. When a user is actively using the system, the SYSTEM EVENT signal will be actuated so frequently that the timers 352 and 353 will typically not be able to time out the full specified time interval. On the other hand, if the user walks away from the system for a period of time, the SYSTEM EVENT signal may remain deactuated for a long period of time, in which case the timers 352 and 353 may time out. When the timer 352 times out, it actuates an output signal GLOBAL STANDBY, and when the timer 353 times out it actuates the signal AUTO SUSPEND. Although the timer 353 is a hardware timer provided to time a suspend interval, in the preferred embodiment this hardware timer is kept disabled, and the suspend interval is timed by software in the SCP in a manner described in more detail later. The local timer 351 operates in a similar manner to the timers 352 and 353 and produces an output signal LOCAL STANDBY if it times out, but the signal used to restart the timer 351 is a different signal FDD TRAP, which is discussed below.

The processor 311 includes an I/O trap logic circuit 361 which receives address and control information at 363 from the bus control unit 336, and which is controlled by an I/O trap control register 362. The register 362 is set by software and, in the preferred embodiment, defines a range of I/O addresses assigned to control registers in the floppy disk drive 327, and the I/O address assigned to the system event mask register 349. Whenever the I/O trap logic 361 detects that one of these addresses is being accessed, it actuates its FDD TRAP output signal if the floppy drive is being accessed and its MASK TRAP signal if the mask register is being accessed, the FDD TRAP signal having the effect of restarting the local timer 351, as mentioned above.

The BATTLOW signal, the FDD TRAP signal, the MASK TRAP signal, the LOCAL STANDBY signal, the GLOBAL STANDBY signal, the AUTO SUSPEND signal and the SRBTN signal are all connected to respective inputs of an OR gate 366. A further input of the gate 366 is connected to an external power management interrupt signal EXTPMI from the SCP 316, and another input is connected at 367 to a power management interrupt signal which can be selectively actuated by software. A flip-flop 368 disables the output of the gate 366 when it is set, and can be controlled by software. When any one of the inputs to the gate 366 is actuated, the gate 366 generates at its output a power management interrupt signal PMI.

In response to actuation of the PMI signal, the PMI enable flip-flop is automatically set, and a status register 371 is automatically loaded with an image of the logical states of the inputs to the gate 366, so that software can subsequently examine the register 371 and identify one or more of the inputs to gate 366 which were responsible for generating the PMI interrupt signal. in addition, a circuit 372 receives address and control information at 373 from the bus control unit 336, and is effectively a first-in/first-out (FIFO) memory which stores the last several I/O bus cycles performed by bus control 336. In response to actuation of the PMI signal, the circuit 372 stops storing this information, and thus contains a static indication of the most recent I/O cycles.

The processor 311 also includes a real time clock (RTC) circuit 376, which includes a small amount of RAM 337 which is accessible to software. The RAM 337 contains the date, the time-of-day, and a certain amount of system configuration information. When the computer system 310 is completely turned off, the real time clock circuit 376 nevertheless receives a small amount of power at 378 from a back-up battery 379 in the power control circuit 312, so that the real time clock circuit 376 can keep the date and time information in RAM 337 accurate. The interrupt signal IRQ0 is generated by the real time clock circuit 376, and in particular is actuated in a periodic manner, so that an operating system or application program which maintains its own time or date can keep that time and date updated. The real time clock circuit 376 can also be programmed by software to actuate an ALARM output at a specified date and time.

The ALARM signal is connected to one input of a resume selector 381, the other three inputs of which are connected to the SRBTN signal from manual switch 313, the BATTLOW signal from SCP 316, and the modem ring indicator signal MDMRI from the modem 332. A resume mask register 382 which can be set by software is used to selectively mask the ALARM signal, the MDMRI signal, or the BATTLOW signal. It is not possible for the mask register 382 to directly mask the SRBTN signal from the switch 313. However, if the BATTLOW signal is actuated and is not masked by the mask register 382, it will mask all three of the signals SRBTN, ALARM and MDMRI. Summarizing, if the BATTLOW signal is masked or is not masked but is deactuated, the selector 381 will produce a RESUME RESET signal at its output in response to actuation of the signal SRBTN, and also in response to actuation of either of the signals ALARM and MDMRI when not masked by the register 382. The RESUME RESET signal is a special reset of the processor 311, which will be discussed again later. The processor 311 includes a hardware resume flag 383, which is forcibly set by the RESUME RESET signal and is forcibly cleared by other types of reset signals. The RESUME flag 383 can be tested and cleared by software.

The processor 311 also includes a refresh control circuit 386, which controls the refresh of the DRAM chips in the main memory 326. The refresh control circuit 386 can be set to refresh the memory chips at different rates, the power consumption of DRAM chips being lower for lower refresh rates than for higher refresh rates.

The processor 311 also includes a clock generation circuit 387 which generates a CPU clock signal, and a keyboard clock signal KBCLK which is supplied to an interrupt input of the SCP 316. A speed control register 388 can be set by software to select one of a range of frequencies for the CPU clock signal, or to completely stop the CPU clock signal. Power consumption within the processor 311 is dependent on its clock speed, and in particular is lower for lower clock speeds.

The processor 311 outputs a signal 391 which is connected to a conventional piezo speaker 392 and, when actuated, can cause the speaker 392 to beep. In addition, the processor generates a signal CPUSUREQ which is connected to the SCP and is described in more detail later. Further, the processor generates two signals FDDSLT and HDDSLT which, when deactuated, turn off or at least reduce power to the floppy disk drive 327 and hard disk drive 323, respectively. The processor also generates two control signals SYSPWROFF and KILLVCC which are connected to the power control circuit 312 and are described in more detail below.

As mentioned above, the power control circuit 312 includes a back-up battery 379. In addition, the power control circuit 312 has a rechargeable battery 396, and has a connector 397 to which can be releasably connected a conventional external AC to DC convertor 398 adapted to be plugged into a standard wall socket. When the convertor 398 is present and supplying power to the power control circuit 312, the power from the convertor 98 is used by the circuit 312 to provide power needed throughout the entire system 310, and to simultaneously recharge the rechargeable battery 396. When no convertor 398 is connected to the connector 397, power required throughout the system 310 when the system is on is drawn from the rechargeable battery 396. In the event no convertor 398 is present and the rechargeable battery 396 either becomes discharged or is removed for replacement, the back-up battery 379 is used to supply enough power to maintain the system in at least a low power mode.

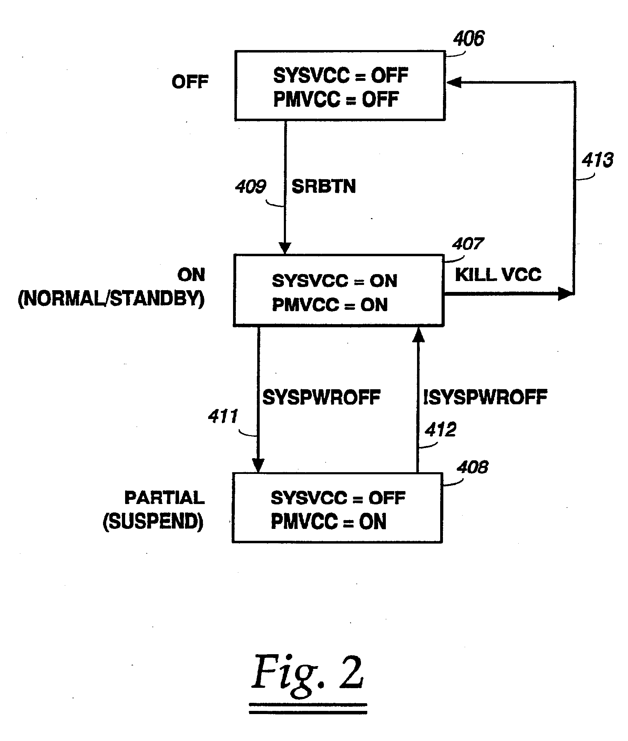

The power control circuit 312 has a power output PMVCC on which it supplies power to the processor 311, main memory 326, and flash RAM 331, and has a power output SYSVCC on which it supplies power to other system components. The supply of power to these two power outputs is controlled by a state circuit 401. Figure 2 is a state diagram showing the basic operation of the state circuit 401 of the power control circuit 312. The state diagram includes three states 406-408. The state 406 represents a situation where the computer system 310 of Figure 1 is entirely off. In this state, SYSVCC and PMVCC are both off, and only the real time clock circuit 376 in the processor 311 and the state circuit 401 in the power control circuit 312 are receiving power. The second state 407 corresponds to normal operational modes of the computer system 310, and also corresponds generally to a global standby mode in which certain system components are placed in a low power mode and the processor 311 stops operating in order to conserve power, as described in more detail later. In this state SYSVCC and PMVCC are both on, the real time clock circuit drawing its power from PMVCC rather than from the battery 379. The third state 408 corresponds generally to a suspend mode. In state 408, the power output PMVCC is turned on, but the power output SYSVCC is turned off in order to conserve power.

Starting from a condition in which the system is off and the state circuit 401 is in state 406, when a user manually actuates the switch 313 in order to turn the system on, the state machine 401 proceeds at 409 to state 407, where it turns on both SYSVCC and PMVCC. If at some point in time the processor 311 intends to enter a suspend mode, it will actuate the signal SYSPWROFF to the state circuit 401, which will cause the state circuit 401 to transition at 411 to state 408, where it keeps PMVCC on but turns off SYSVCC. Since SYSVCC is used to supply power to virtually all components other than the processor 311, memory 326 and RAM 331, the power consumption of components normally powered by SYSVCC is reduced to zero. Meanwhile, PMVCC maintains the information in main memory 326 during the suspend mode, and also provides power to the processor 311 and RAM 331 so that it will be able to wake up from the suspend mode. When the processor 311 does wake up from the suspend mode, it deactuates the signal SYSPWROFF, so that the state machine 401 transitions from state 408 back to state 407 and turns the supply SYSVCC back on, thereby repowering the peripheral components of the system so that they can be used again. If it is determined at some point that the system is to be turned completely off, then the processor 311 ultimately actuates the signal KILLVCC to the state machine 401, which causes the state machine to transition at 413 from state 407 back to state 406, where it turns off both SYSVCC and PMVCC.

The power control circuit 312 produces a signal DC/AC to the system control processor (SCP) 316, to indicate whether the system is running on AC power from the convertor 398 or on DC power from battery 396 (or battery 397). The terminal voltage of rechargeable battery 396 is also supplied in the form of an analog signal RBATT to the SCP 316, so that the SCP 316 can monitor the state of the battery charge. In particular, the SCP 316 has an analog-to-digital (A/D) convertor 416, which converts the analog terminal voltage from battery 396 into a digital signal that can be analyzed by the SCP 316. When the SCP determines that the voltage is too low, it actuates the above-mentioned BATTLOW signal to the main processor 311.

Turning to the SCP 316, the SCP in the preferred embodiment is based on an Intel 87C51GB processor, but it Will be recognized that there are other commercially available processors which could be used for the SCP. The SCP generates a speaker control signal 417 which is connected to the speaker 392 and can be used to cause the speaker 392 to beep. In addition, the SCP generates the signals IRQ1 and IRQ12, which as mentioned above are connected to interrupt inputs of the main processor 311. Further, the SCP 316 is coupled to an external connector 418, to which can optionally be coupled a conventional external keyboard or mouse 421. The SCP 316 is also coupled at 422 to the internal keyboard 317. The SCP outputs to the video controller 318 a signal CRT/LCD, which indicates whether the video controller 318 should consider the active display unit to be the liquid crystal display unit 321 or a conventional external CRT 426 which can be optionally wired to a connector 427 coupled to the video controller 318. The SCP 316 sends the video controller 318 a signal VIDEN which, when disabled, causes the video controller 318 to turn itself off or to at least reduce its power consumption.

The SCP sends to the liquid crystal display unit 321 a signal LCDPWR, which turns on and off the power to the liquid crystal display in the unit 321. The display includes a backlight 431 which illuminates the liquid crystal display. The display unit 321 is provided on a lid of the laptop computer which, in a conventional manner, can be moved between positions covering and exposing the keys of the internal keyboard 317, and a lid switch 432 is provided to indicate whether the lid is open or closed. The SCP 316 generates a signal BLON which turns on and off the backlight 431 of the display unit 321, and receives from the lid switch 432 a signal LIDSW which indicates whether or not the switch is actuated and thus whether or not the lid is open or closed.

The SCP 316 also generates a signal MDMEN which causes a power control section of the modem 322 to shut off power to the modem 322, or to at least place the modem in a low power consumption state. The SCP 316 receives from the modem 322 the previously-mentioned modem ring indicator signal MDMRI, which is actuated when an incoming telephone call reaches the modem through a telephone jack 434 to which the modem 322 is coupled, the jack 434 of the system 310 being adapted to be optionally coupled to a standard telephone line 436.

The hard disk drive 323 produces an output signal LED which is used in a conventional manner to control a conventional and not-illustrated light emitting diode in order to provide the computer user with a visual indication of the activity of the hard disk drive. This LED signal is connected to the SCP and to one input of a two-input AND gate 438, the hard disk not busy output HDNB of which is connected to an input of an OR gate 433 and indicates that the hard disk is not busy. The other input of the gate 438 is coupled to an ENABLE output signal of the SCP 316, and thus the SCP can selectively enable and disable the gate 438. The SCP also produces an output signal at 435 which is connected to a second input of the OR gate 433, and the output of the OR gate 433 serves as the previously-mentioned EXTPMI signal to the main processor 311. The hard disk drive 323 also generates the interrupt signal IRQ14, which as mentioned above is coupled to the main processor 311.

The internal keyboard 317 includes a set of keys 441 which form a standard laptop computer keyboard, four light emitting diodes (LEDs) 442 which are visible to the system user and provide typical status information, and a controller circuit 443 which interfaces the keys 441 and LEDS 442 to the SCP 316.

The video controller 318 includes control registers 446, and a video RAM 448 which is coupled to the buses 337-339 and is a 128 KB memory arranged as 64K by 16 bits.

The SCP 316 includes an electrically programmable read only memory (EEPROM) 439, in which it stores configuration information, a password, an extended set-up information, as discussed in more detail later. Further, the SCP includes a ROM 437 which stores a program executed by the SCP, and a RAM 440 in which the SCP can store and retrieve information during system operation. The SCP also includes several I/O registers, which can be used to pass data between the main processor 311 and the SCP 316.

The flash RAM 331 is a conventional semiconductor device which can be electrically modified, but is not volatile and will retain the information stored in it when power to it is turned off. The flash RAM 331 is 128 KB, and contains the basic input/output system (BIOS) program, as well as factory configuration settings. The ROM 328 contains a program which is normally not used, but which can be used to control the system while the flash RAM 331 is reloaded in the event an unusual circumstance causes the contents of the flash RAM to be lost.

The conventional floppy disk drive 327 includes a floppy disk controller (FDC) circuit 451, which controls the floppy disk drive and can also generate the interrupt signal IRQ6 to the processor 311.

The main memory 326 includes a portion PMRAM 453. The bus control unit 336 of processor 311 automatically prevents software from accessing the PMRAM section 453 of the main memory 326, except in two specific situations. First, the service routine for the power management interrupt PMI is stored in the PMRAM section 463 of the main memory 326, and in response to a PMI the bus control unit 336 automatically permits access to the PMRAM 453 so that the state of the processor 311 can be stored there and so that the service routine there for the PMI can be executed. Second, software running in the unrestricted mode of the processor 311 can selectively enable and disable the capability to access to the PMRAM 453, so that the PMRAM can be initialized.

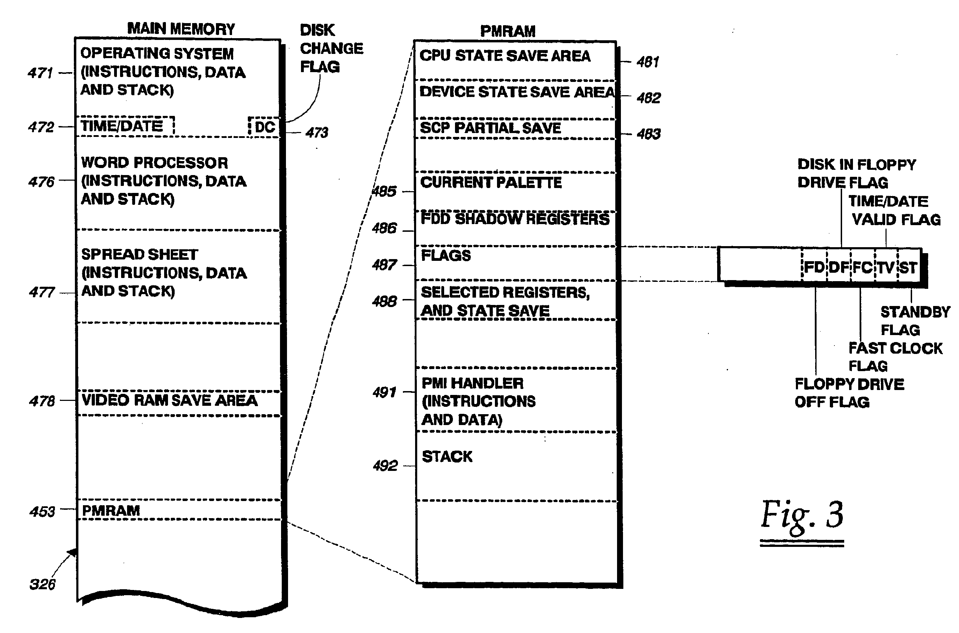

Figure 3 is a diagrammatic representation of some of the information stored in the main memory 326. The organization of this information shown in Figure 3 is exemplary, and it will be recognized that the format in which the information is stored could be reorganized without departing from the present invention. Further, there may be additional information which is stored in the main memory 326 but is not essential to an understanding of the present invention, and which is therefore not illustrated and described in detail.

A portion 471 of the main memory is used to store an operating system, for example Disk Operating System (DOS) available from Microsoft Corporation. The operating system maintains time and date information at 472, and also maintains a disk change (D/C) flag 473 which is used to indicate that a disk has been changed. Two additional portions 476 and 477 in the main memory each contain a respective application program, the portion 476 containing the stack, instructions and data for a word processor, and the portion 477 containing the stack, instructions and data for a spreadsheet. A further portion 478 of the main memory is used to store an image of the video RAM 448, as will be described in more detail later.

The PMRAM portion 453 of the main memory includes a state save portion 481, where the processing unit 311 automatically saves its state in response to a PMI interrupt. A further portion 482 is used to save information regarding other devices, and a portion 483 is used for a partial state save of the SCP 316 which will be discussed later. A portion 485 is used to record the current palette being used for the LCD 321, as will be described later, and a portion 486 serves as shadow registers which are used to maintain an image of all control registers within the floppy disk drive 327, as also described later.. A byte 47 is used for several one-bit flags, including a fast clock (FC) flag which is set to indicate that the user has selected a fast clock speed for the processor 311, a floppy off (FO) flag which is set to indicate that the power to the floppy disk drive is off, a disk in floppy drive (DF) flag which can be set to indicate that a disk is present in the floppy disk drive, a time/date valid TV flag which is set if the current operating system supports time and date information, and a standby (ST) flag which is set under certain circumstances to indicate to the processor whether it is to enter standby mode or suspend mode when a particular event occurs.

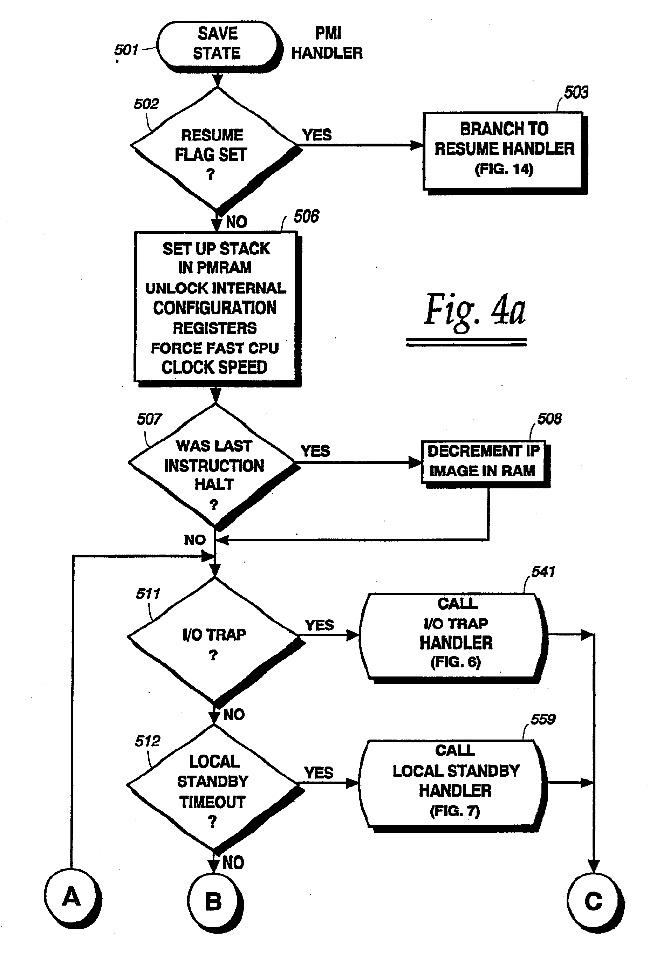

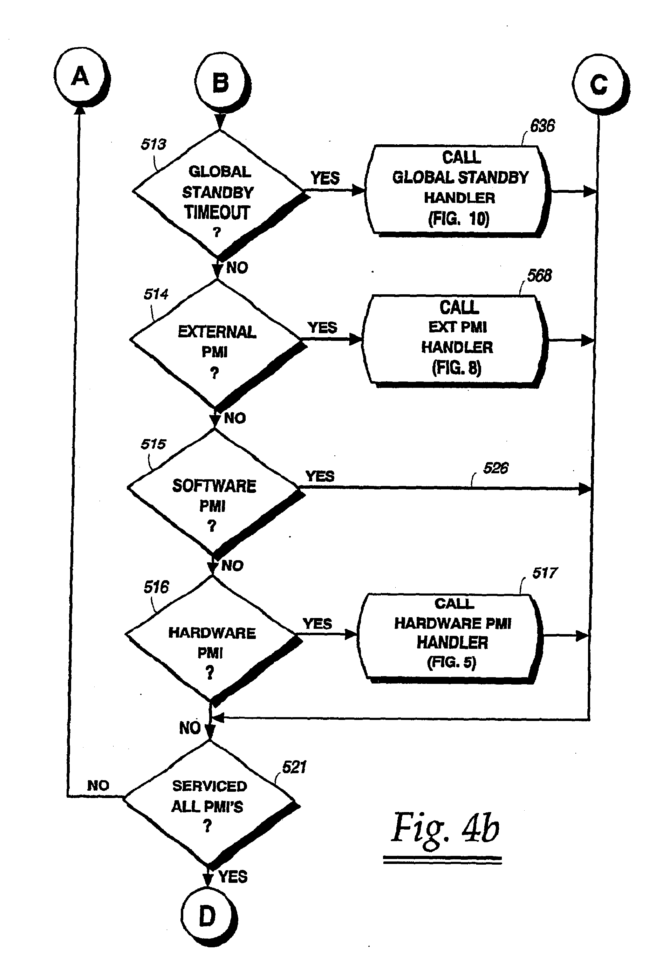

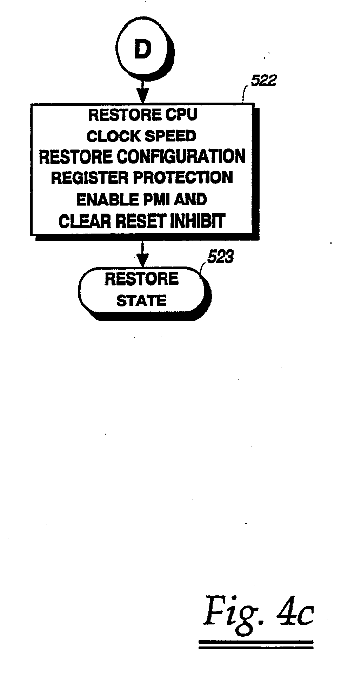

The software routine which handles the power management interrupt (PMI) is also stored in the PMRAM portion 453 of the main memory 326, as shown at 491 in Figure 3. A portion 492 of the PMRAM serves as a stack area for use by the PMI handler routine. Figures 4-14 are flowcharts showing the operation of the PMI handler routine and a reset handler routine.

Beginning with Figure 4, a PMI from any source causes the hardware of the processor 311 to automatically save its state in the state save area 481 of the PMRAM portion 453 of the main memory, as shown diagrammatically at 501 in Figure 4. Then, the processor 311 automatically begins execution of the PMI handler routine 491 in the PMRAM at a predetermined point, which is shown at 502 in Figure 4. Regardless of the source of the PMI, the first thing the PMI handler does is to check the resume flag 383 (Figure 1) in the processor 311 in order to see whether the processor 311 is in the process of resuming from a suspend state. If a resume is in progress, then at block 503 control is transferred to a resume handler, which will be discussed later.

In the case of any other PMI, control proceeds to block 506, where the processor sets itself up to use the stack 492 in the PMRAM, because the PMI handler routine must always be capable of proper operation, and has no way of knowing whether the current stack in the interrupted application program is a valid and usable stack. Then, the processor 311 unlocks certain internal configuration registers so that they can be altered, such as the control register 388 which can be used to change the speed of the CPU clock. Then, the processor changes the register 388 in order to force the CPU to run at a fast clock speed, so that the PMI routine will execute as fast as possible.

control then proceeds to block 507, where the processor checks to see whether the last instruction executed before the PMI was a HALT instruction. If it was, then the image of the instruction pointer register saved at 481 in the PMRAM is decremented at 508, so that when the PMI handler is exited the instruction which is fetched and executed is the HALT instruction rather than the instruction which follows the HALT instruction, in order to be certain that the processor again enters the HALT mode. Then, control proceeds to block 511, where the processor begins a successive check of the six possible sources of a PMI, as represented by the six blocks 511-516. Each of these will be discussed in more detail in a moment.

After detecting and servicing the source of the PMI, control proceeds to block 521, where the processor checks to see whether one or more other sources of the PMI are pending. If so, control returns to block 511, so that the processor can again scan for the particular source of each PMI, and service it. When it is determined at block 521 that every pending PMI has been serviced, control proceeds to block 522, where the processor restores the speed control register 388 to select the CPU clock speed which was in effect at the time the PMI occurred. The FC flag shown in Figure 3 indicates to the processor whether this was a fast or slow clock speed. Then, the processor restores the protection level (if any) which was in effect for the internal configuration registers, including the speed control register 388. The processor can determine the level of protection which was in effect by examining the image of the CPU state which is present at 481 in the PMRAM. Then, the processor enables the PMI, and clears an internal bit automatically set within the processor 311 by the PMI to prevent the processor from responding to a reset during servicing of the PMI. Then, at 523, the processor executes an instruction which ends the PMI handler routine by restoring the internal state of the processor from the state save area 481, which of course causes the processor to resume execution of the interrupted application program.

As previously explained, a software instruction can generate a PMI as shown diagrammatically at 367 in Figure 1, but in the preferred embodiment this capability is used only to reenter the PMI handler when the system is in the process of resuming from a suspend mode, and in that case control is routed from block 502 to block 503 as discussed above, and should never proceed to block 515. consequently, a software PMI should not normally be detected at block 515 in Figure 4. Nevertheless, since it is possible that some other program may execute a software instruction which generates a software PMI, block 515 will intercept this condition, but transfers control at 526 directly to block 521, thereby handling the software PMI without doing anything at all.

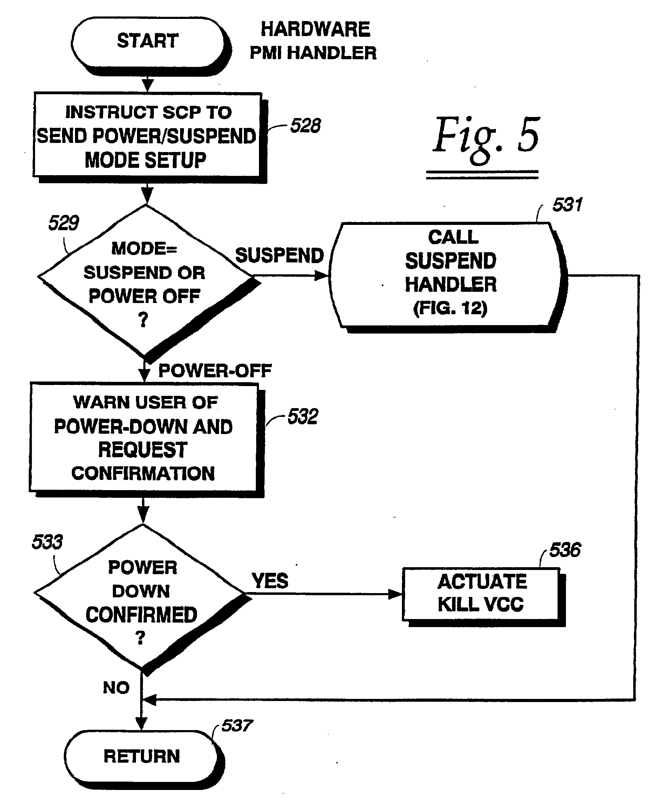

Block 516 checks for a hardware PMI, the sole source of which in the preferred embodiment is the manual switch shown at 313 in Figure 1. In particular, deactuation of this switch produces a PMI which is detected at block 516, and causes control to proceed to block 517, where a subroutine call is made to a hardware PMI handler routine, which is illustrated in Figure 5.

Referring to Figure 5, the processor begins at 528 by instructing the SCP 316 to send it a portion of the set-up information stored in EEPROM 439, in particular a bit which can be set by the user as part of the system configuration, and which specifies whether deactuation of the switch 313 is to cause the system 310 to completely turn itself off, or to enter the suspend state in which it is capable of resuming the interrupted application program. Whenever the processor needs to send a command to the SCP while servicing a PMI instruction, it first actuates the CPUSUREQ signal to the SCP so that the SCP will stop sending information to the processor and thus the interface will be clear. Once the command is accepted, the processor may deactuate the CPUSUREQ signal. Control proceeds to block 529, where the processor checks the information received back from the SCP. If the user has specified that deactuation of the switch 313 is to place the system in suspend mode, the system proceeds to block 531, where it calls a suspend handler which will be described in detail later. On the other hand, if the user has specified that in response to deactuation of the switch 313 the system is to be turned off, control proceeds from block 529 to block 532, where the processor 511 causes the video circuitry to display a warning which reminds the user that power will be turned completely off and requesting confirmation to proceed. This is because turning power off will cause the loss of everything in the main memory 326, and it is thus important to be certain that the user is not assuming that the system will be entering suspend mode, where this information would be maintained. The user response is checked at block 533, and if the user confirms that power is to be turned off then control proceeds to block 536 where the processor actuates the KILLVCC line so that the power control circuit 312 turns SYSVCC and PMVCC off in the manner described above in association with Figure 2. on the other hand, if it is determined at block 533 from the user response that the user did not want the power turned off, then control proceeds to block 537, where a return is made from the hardware PMI handler without taking any action at all.

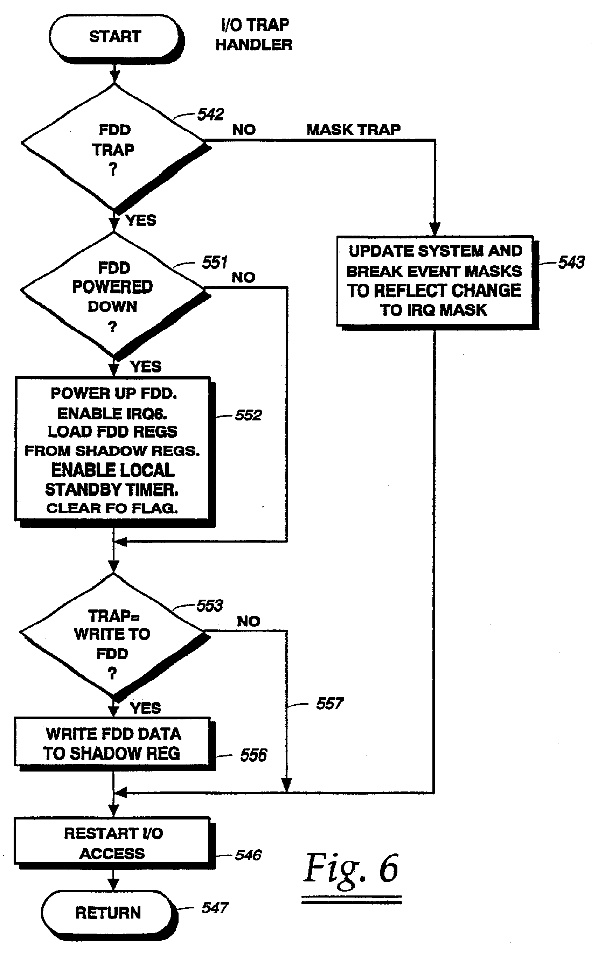

Referring again to Figure 4, if it is determined at 511 that the source of the PMI interrupt is an I/O trap condition, this means that one of the signals MASK TRAP or FDD TRAP shown in Figure 1 has been actuated and created the PMI. Block 511 therefore transfers control to block 541, where a subroutine call is made to an I/O trap handler routine, which is shown in Figure 6.

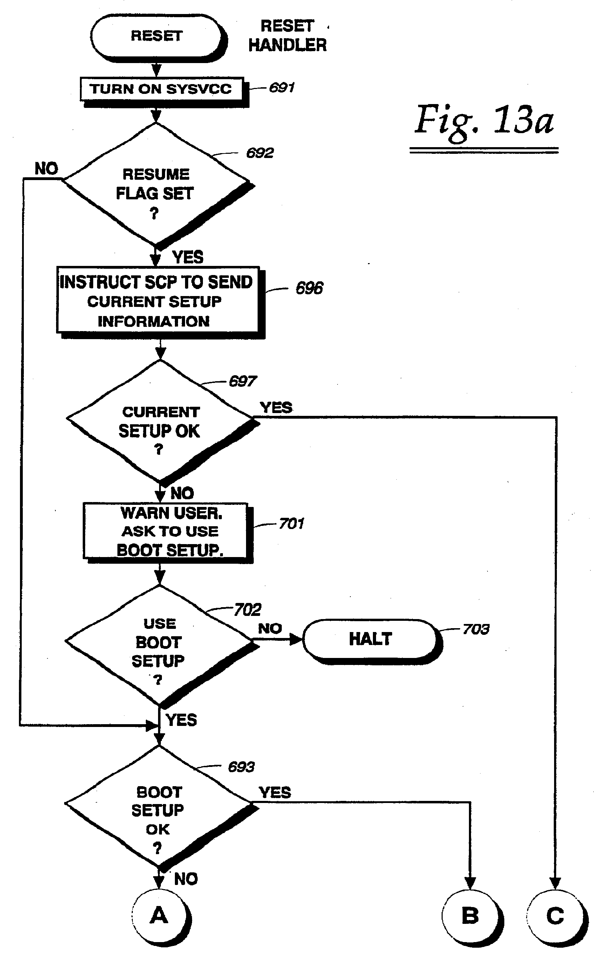

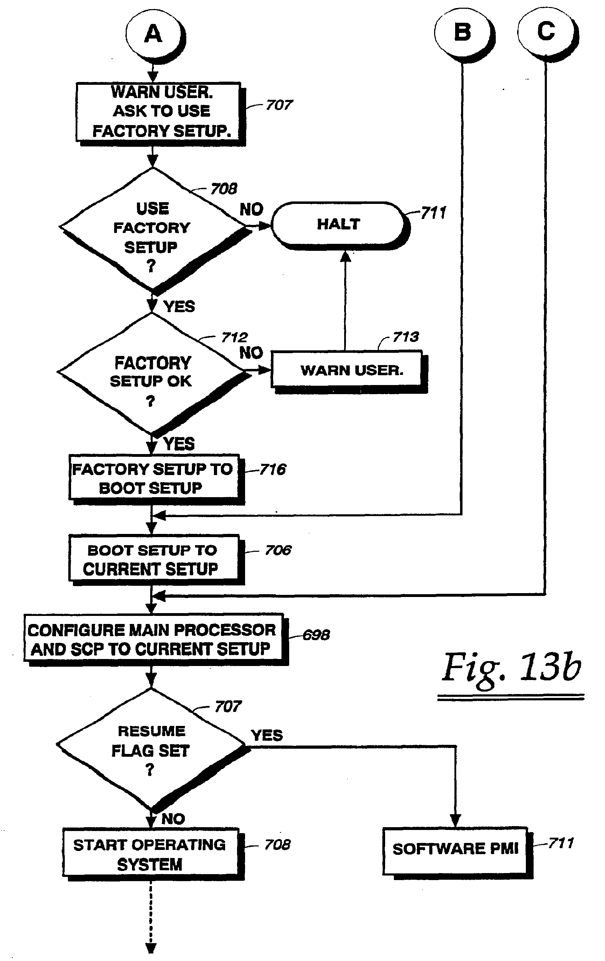

Referring to Figure 6, this routine begins at block 542 by checking the status register 371 (Figure 13) in order to determine whether the source of the interrupt was the FDD trap signal. If it was not, then it must have been the MASK TRAP signal, and control proceeds to block 543. The occurrence of the MASK TRAP signal means that the processor hardware has detected an access to the mask register 342 which controls the enabling and disabling of the various IRQ interrupt lines. If the purpose of the access to the MASK register 342 is to mask an IRQ interrupt, then at block 543 the system also updates the mask in system event mask register 349 to mask this IRQ interrupt. This avoids a system problem, because if the IRQ interrupt signal becomes actuated but is masked at 342, the normal interrupt servicing routine will not recognize the interrupt and thus the signal will remain actuated. If this IRQ interrupt is not masked at 349, then the continuously actuated signal will have the effect of preventing the SYSTEM EVENT line from changing, as a result of which the timers 352 and 353 will not be restarted and will time out even when the system is actually very active. Therefore, by conforming the mask register 349 to the mask register 342 at block 543, the disabled IRQ interrupt signal will be prevented from inhibiting the SYSTEM EVENT signal, and thus other active inputs to the selector 347 will be able to cause the SYSTEM EVENT signal to actively change in response to system activity so that the timers 352 and 353 are properly restarted by system activity.

After the processor sets the mask at block 543, control proceeds to block 546, where the processor restarts the I/O access to the mask register 342. In particular, the PMI trap interrupt intercepted the access to the mask register 342, and thus this mask register was not in fact actually changed. However, and as previously discussed, the I/O cycles which would have accessed this register have been captured at 372 (Figure 1), and thus in block 546 the processor uses this information to restart the I/O access to register 342 so that it properly completes. Then, at block 547, control is returned to the main routine of Figure 4.

On the other hand, if it was determined at block 542 that the PMI was caused by the FDD TRAP signal, then control proceeds to block 551. This means that an I/O access to a control register of the floppy disk drive 327 has been intercepted. As will be described later, the system turns the floppy disk drive 327 off if a specified period of time elapses without any system access to the floppy disk drive. Thus, it is possible that the intercepted access to the floppy disk drive was an attempt to access the floppy drive while it does not have any power. Accordingly, at block 551, the processor checks the FO flag (Figure 3) in order to determine whether the floppy disk drive is powered down. If it does have power, then block 552 is skipped. Otherwise, block 552 is entered in order to bring up the floppy disk drive.

In particular, the processor 11 actuates the FDDSLT line to restore normal power to the floppy disk drive 327, and enables interrupt IRQ 6 which is used by the floppy disk drive in a conventional manner during normal operation. Then, the processor loads control registers in the controller circuit 451 of the floppy disk drive 327 from the shadow registers 486 in the PMRAM. As will be described in a moment, the shadow registers contain an image of the internal state of the floppy disk drive just before its power was turned off. Then, the processor enables the local standby timer 351 (Figure 1), which as described in more detail later as the timer used to monitor the length of time since the last access to the floppy disk drive so that a decision can be made as to when it should be powered down. Finally, the processor clears the Fo flag (Figure 3) to indicate that the floppy disk drive is currently up and running.

Control then proceeds from block 552 to block 553. As just mentioned, the shadow registers 486 (Figure 3) are an image of the control registers in the floppy disk drive 451. Every time any program stores anything in these control registers, the same information must be stored in the shadow registers 486 so that the shadow registers contain an accurate image of the actual registers in the floppy disk drive. Thus, at block 553, the processor checks to see whether the intercepted I/O access to the control registers of the floppy drive constitute a write of information into a register, as opposed to a read of information from the register. If it is determined that control information is being written into the floppy disk drive, then at 554 the same information is written into the shadow register area 486. On the other hand, if data is being read from the floppy disk drive, then block 556 is skipped at 557. In either case, control ultimately proceeds to block 546, where the I/O access to the floppy drive is restarted as discussed above so that the hardware completes the interrupted I/O access. Then, at 547, control returns to the routine of Figure 4.

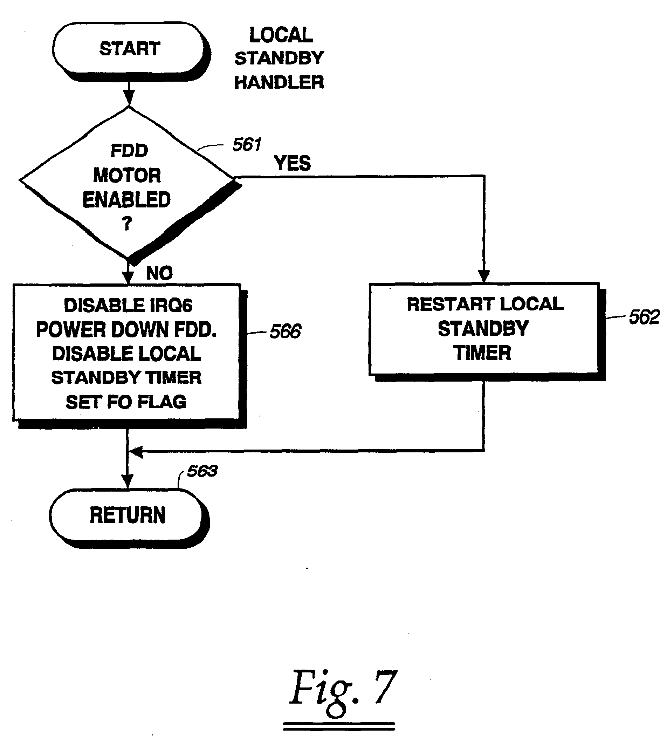

In Figure 4, if it is determined at block 512 that the local standby timer 351 has expired, then control proceeds to block 559, where a subroutine call is made to a local standby handler routine, which is shown in Figure 7. Referring to Figure 7, the fact that the local standby timer has timed out is an indication that the floppy disk drive has not been accessed for a specified period of time and is thus probably not currently in use and can be turned off in order to conserve power. However, it is first important to make sure that the floppy disk drive motor is not running, because power should preferably not be shut off while the motor is running. Therefore, at block 561, the processor reads a register in the floppy disk drive 327, which in a conventional manner includes an indication of whether the motor is currently enabled. If it is, control proceeds to block 562, where the processor simply restarts the local standby timer 351 at 562 and then returns at 563 to the routine of Figure 4. Typically, however, the motor will not be running, and control will thus usually proceed to block 566, where the floppy disk drive will be powered down in order to conserve power. In particular, the processor disables interrupt IRQ 6, which is used by the floppy drive, and then deactuates the FDDSLT signal so that the floppy disk drive turns itself off or at least enters a low power state. Then, the processor disables the local standby timer 351, and sets the FO flag (Figure 3) in order to indicate that power to the floppy drive is currently off. Then, the processor returns at 563 to the calling routine shown in Figure 4.

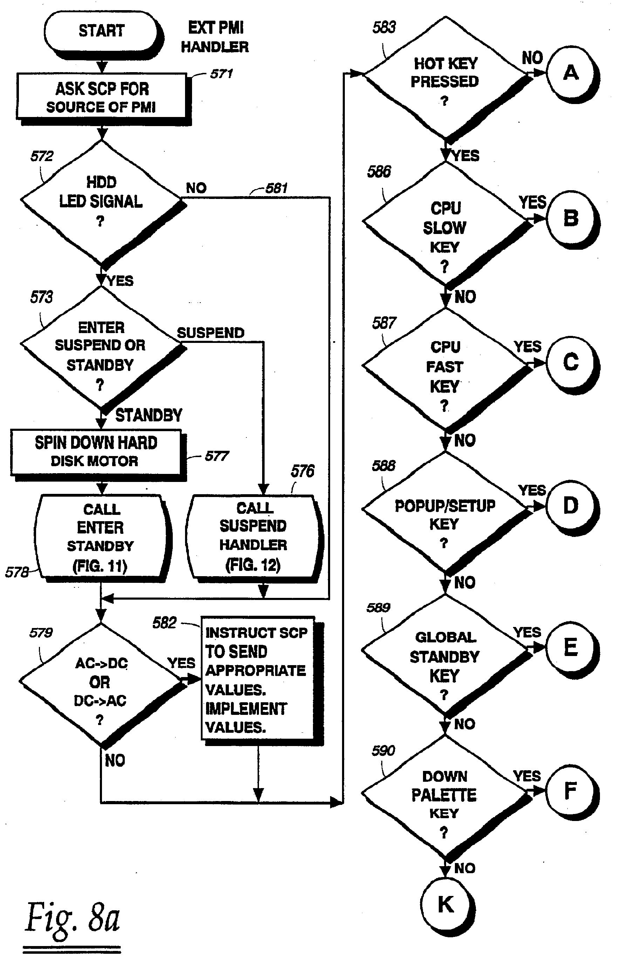

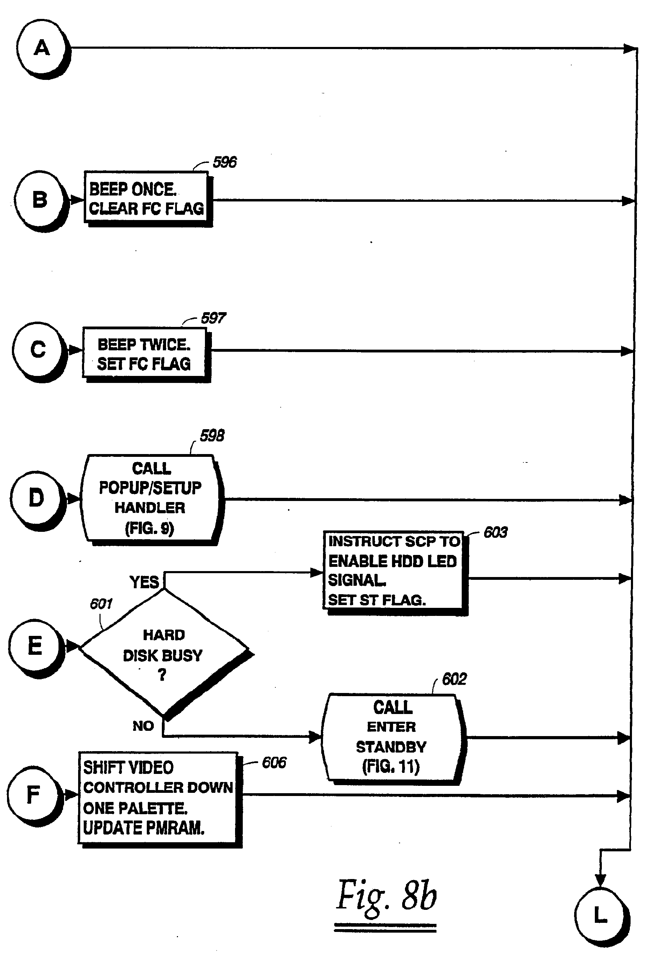

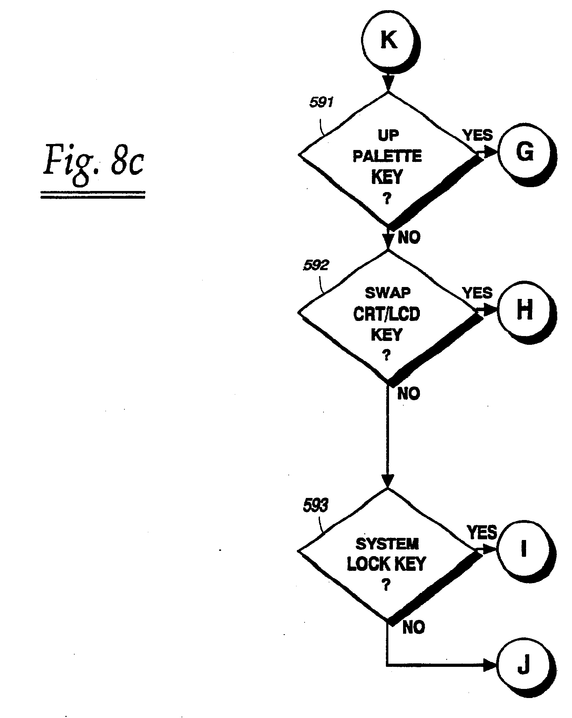

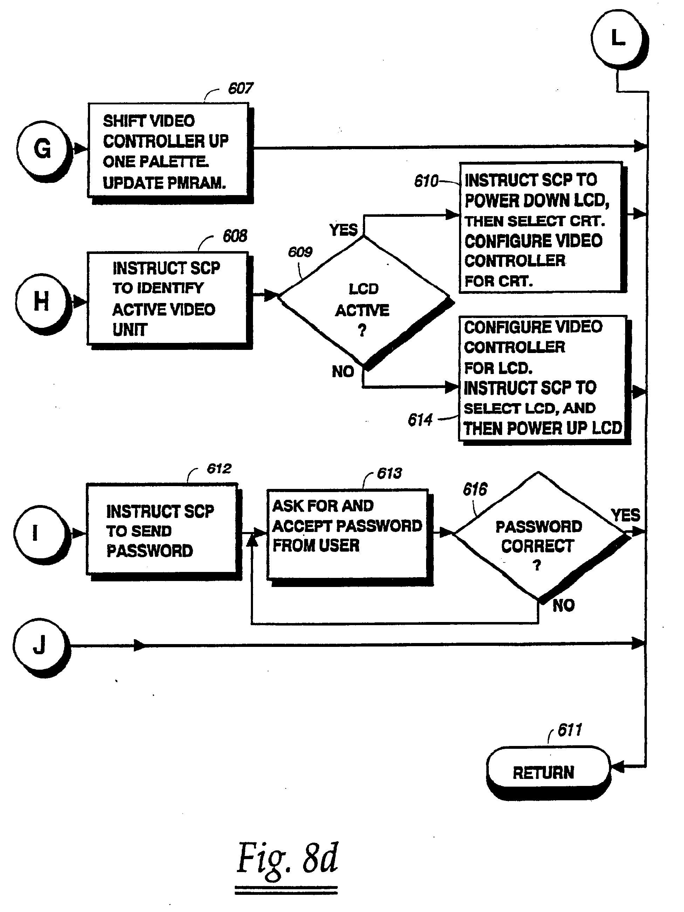

In Figure 4, it may be determined at block 514 that the source of the PMI was created by the SCP 316 using the line EXTPMI, in which case control proceeds to block 568, where a subroutine call is made to the EXTPMI handler routine shown in Figure 8. There are three possible reasons why the SCP may have initiated a PMI. Therefore, at 571 in Figure 8, the processor begins by asking the SCP 316 to send a byte indicating which of the three conditions was the reason for the PMI. Upon the receipt of this byte, the processor proceeds to block 572, where it checks for the first of these conditions.

In order to discuss this first condition, it is important to understand that, if the system has attempted to enter either the global standby mode or the suspend mode, and if it found that the hard disk drive 323 was still busy, then as described in more detail below and in the previously-mentioned copending application, the SCP will actuate the ENABLE line to the gate 438, and then return to the interrupted application program. Then, the instant the hard disk drive 323 finishes what it is doing and deactuates the LED line which controls its light emitting diode, the gate 438 will actuate the HDNB line to gate 433 which in turn will actuate the EXTPMI line.

Consequently, at block 572, the processor 311 checks the information received from the SCP in order to see whether the reason for the PHI was the signal from the hard disk. If it was, then control proceeds to 573, where the processor checks the ST flag (Figure 3) in order to determine whether it was previously attempting to enter suspend mode or global standby mode when it found that it had to wait for the hard disk. If the flag is not set because the system was attempting to enter the suspend mode, then control proceeds to block 576, where a subroutine call is made to the suspend handler routine, which will be described in more detail later. On the other hand, if it is determined at 573 that the system is attempting to enter global standby mode, then at 577 the processor instructs the hard disk 323 to spin down its motor, and control then proceeds to block 578 where a subroutine call is made to a routine which causes the processor to enter the global standby mode, as discussed in detail later. Upon termination of the suspend mode or the global standby mode, control proceeds from block 576 or 578 to block 579. Also, if it had been determined at block 572 that the source of the PMI was not a signal from the hard disk, then control would have proceeded at 581 directly to block 579. In 579, the processor checks for the second condition which may have caused the SCP 316 to initiate the PMI. In particular, the SCP monitors the DC/AC signal from the power control circuit, which indicates whether the system is currently receiving DC power from the battery 396 or is receiving AC power from the converter 398. When the SCP detects that a change has been made from AC power to DC power, or from DC power to AC power, it actuates the EXTPMI signal to the main processor. If it is determined at block 579 that this is the reason for the PMI, then control proceeds to block 582. A feature of the system is that the SCP maintains configuration data for use under AC power which is different from the configuration information it maintains for use under DC power. For example, when operating on AC power, power consumption is less of a concern, and thus the user may elect to keep the floppy disk drive 327 powered up all the time when operating under AC power, and to allow the system to automatically power it down when not in use as described above only when operating under DC power. Accordingly, at block 582, the main processor instructs the SCP to send it appropriate configuration values, namely AC values if a switch has been made to AC mode and DC values if a switch has been made to DC mode. Then, the processor implements these values in the system configuration, for example by reloading the preset registers 356 and 357 with their AC preset values rather than their DC preset values. The processor sends two timer preset values back to the SCP for use in a suspend timer and a backlight timer maintained by the SCP, as described later. Control then proceeds to block 583. Control also proceeds directly from block 579 to block 583 if it is determined at block 579 that the source of the PMI was not a change between AC and DC power.

In block 583, the processor checks for the third of the conditions which would cause the SCP to initiate a PMI. In particular, some of the keys 441 of the internal keyboard 317 can be pressed simultaneously, and the SCP is capable of detecting these special multi-key or hot key combinations. When the processor detects one of several special multi-key combinations, it actuates the EXTPMI line to the main processor, so that any program in progress is immediately interrupted, a special function is carried out, and then the program in progress is resumed. If it is found at 583 that one of the special multi-key or hot key combinations has been pressed, control proceeds to block 586, which is the first in a sequence of eight blocks 586-593 checking for each of the special multi-key combinations which can cause the SCP to initiate a PMI. This information is in a coded field in the byte sent by the SCP at 571 to indicate the reason for the PMI.

In block 586, the processor checks to see if the multi-key or hot key combination was one which indicates that the user wants the CPU to run at a slow clock speed. In a situation where the user is operating on battery power and is running a program which does not require fast processor speed, intentionally reducing the processor speed will reduce power consumption and thus permit the user to operate the system longer before the battery requires recharging. Thus, in block 596, the processor actuates line 391 (Figure 1) to cause the speaker 392 to beep once, and then clears the FC flag (Figure 3) in order to indicate that the selected CPU speed is a slow speed. The processor does not immediately change the clock speed because, as mentioned above in association with blocks 506 and 522 in Figure 4, the PMI handler routine always executes at a fast clock speed. The slower speed selected in block 596 by clearing the FC flag will be implemented in block 522 as the processor prepares to leave the PMI handler routine. On the other hand, if the hot key is not a request for slow CPU operation, then control proceeds from block 586 to block 587, where a check is made to see if the hot key is a request for fast CPU operation. If it is, control proceeds to block 597, where the processor causes the speaker 392 to beep twice and then sets the FC flag in order to indicate that a fast processor speed is desired.

If it is determined in block 587 that the hot key is not a request for a fast processor speed, then control proceeds to block 588, where a check is made to see if the hot key is a request for a pop-up/set-up screen, which permits the user to change system set-up information in the middle of an application program. If this is the hot key pressed, then control proceeds to block 598, where a subroutine call is made to a pop-up/set-up handler routine. This handler routine will be described after the other hot keys shown in Figure 8 have been described.

If the actuated hot key is not the pop-up/set-up key, then control proceeds to block 589, where a check is made to see if the hot key pressed is a user request that the system enter the global standby mode. A user might want to enter global standby mode when he knows that he will not be using the system for a short period of time and wants to conserve power, but does not want to enter full suspend mode. If it is found that the user has requested intentional entry to global standby, then control proceeds from block 589 to block 601, where the processor reads a status register in the hard disk drive 323 in order to see if the hard disk drive 323 is busy. If the hard disk drive is not busy, then control proceeds directly to block 602, where a subroutine call is made to a routine which guides the system into standby mode, this routine being described in detail later.

On the other hand, if the hard disk is busy, then the entry to standby mode must wait until the hard disk is not busy. Therefore, control would proceed from block 601 to block 603, where the processor instructs the SCP to actuate the ENABLE signal in order to enable the gate 438, as previously mentioned. The processor also sets the ST flag (Figure 3) in order to indicate that, when the hard disk is no longer busy, the system should enter global standby mode rather than suspend mode, in particular as already discussed above in association with block 572 of Figure 8. Thus, after block 603, the PMI handler routine will continue and will eventually return control to the interrupted application program, and then when the hard disk drive 323 ultimately finishes what it is doing and deactuates its LED control line, a further PMI will be generated and will cause the system to eventually reach previously-described blocks 572, 573, 577 and 578 in order to enter the standby mode.

If it is determined at block 589 that the hot key pressed is not the request to intentionally enter the global standby mode, the processor proceeds to block 590, where a check is made to see if the hot key is a request by the user for a change in the palette used for the LCD 321 (Figure 1). In this regard, the LCD 321 in the preferred embodiment is a monochrome display rather than a color display, and the flash RAM 331 contains 16 predefined palettes which represent respective variations of the gray scale capabilities of the monochrome LCD 321. Since most application programs are written to operate with color displays, the screens they produce can sometimes be somewhat difficult to read when presented on a monochrome display. However, the screens may be easier to read with some gray scale palettes than with others.

The present system permits a user to quickly run through an adjustment of palettes while within an application program, where he can immediately see the effect of each palette. In pre-existing systems, it was typically necessary to exit the application program, adjust the palette selection in the set-up data, and then re-enter the application program to see the effect of the new palette, which is obviously tedious and time consuming when there are several possible palettes which need to be tried. Thus, if it is determined at 590 that the user wants to shift down one palette in the table of 16 palettes, control is transferred to block 606, where the processor retrieves an identification of the current palette stored at 485 in the PMRAM, obtains the next lower palette from the table of 16 palettes in the flash RAM 331, configures the registers 446 of the video controller 318 to implement this new palette, and records an identification of this new palette at 485 in the PMRAM.

If it is determined at 590 that the hot key is not a request to shift down a palette, control proceeds to block 591 where a check is made to see if the request is to shift up one palette. If so, control proceeds to block 607, where the processor carries out a sequence similar to that in block 606 except that it shifts up one palette in the table rather than down one palette. If it is determined at block 591 that the actuated hot key is not a request to shift up a palette, then control proceeds to block 592, where a check is made to see if the hot key pressed is a request that the current display device be swapped, in particular from the LCD 321 to an external CRT 426 if the LCD is currently active, or from the external CRT to the LCD if the CRT is active. If the user has requested this change, then control proceeds from block 592 to block 608, where the processor instructs the SCP to identify the active video unit. The response from the SCP is examined at 609, and if the LCD is active control proceeds to block 610, where the processor instructs the SCP to deactuate the line LCDPWR to power down the LCD, and to set the CRT/LCD line to select the CRT. Then, the processor configures the video controller for operation with the CRT. On the other hand, if the CRT is found to be active at 609, then control proceeds to 614, where the processor configures the video controller for operation with the LCD, and then instructs the SCP to set the CRT/LCD line to select the LCD, and to actuate the LCDPWR line to power up the LCD.

If it is determined at block 592 that the actuated hot key is not a request for a display swap, then control proceeds to block 593, where a check is made to see if the hot key pressed is a request to temporarily lock up the system. If it is not, then control proceeds to block 611, which is the common return from the EXTPMI handler to the calling routine of Figure 4. Otherwise, control proceeds from block 593 to block 612, where the processor 311 instructs the SCP 316 to send a system password which is stored in the EEPROM 439 of the SCP. Then, at block 613, the processor uses the display to ask the user to enter a password, waits for a line of information, and accepts the line of information entered by the user on the keyboard. Then, at block 616, the system compares the passwords from the user and the SCP, in order to see whether they are the same. If they are not, the system continues to loop through blocks 613 and 616. Otherwise, control proceeds from block 616 to the return at 611. By using this hot key, the user can essentially leave his system when it is up and running while preventing another from using it while he is gone, because the system will not respond unless the correct password is entered. When the user returns, he enters the correct password, and then can return to whatever he was doing.

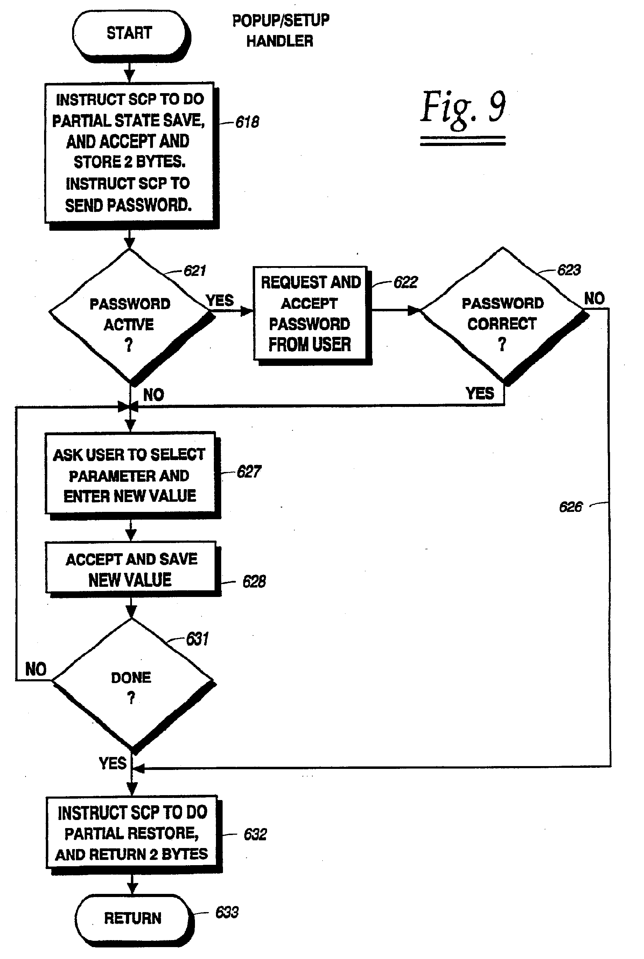

Referring back to block 598 in Figure 8, the pop-up/set-up handler is shown in Figure 9, and will now be described. Execution begins at block 618 in Figure 9, where the processor instructs the SCP to do a partial state save, in response to which the SCP sends the processor two bytes containing mode information. For example, the mode information indicates whether the interrupted application program currently has the keyboard disabled. Obviously, the keyboard needs to be enabled where the PMI handler needs to obtain input from the user through the keyboard, and thus this mode information is saved so that the SCP can change its mode of operation to meet the needs of PMI handler, and after meeting these needs the original mode information is restored as described below so that the system will be returned to the interrupted application program in the same mode it was in when the application program was interrupted. After receiving the two bytes of mode information at 618 from the SCP, the processor stores them at 483 (Figure 3) in the capital PMRAM. Then, the processor instructs the SCP to send the current password. If it is determined at block 621 that the password is active, the user enters the password and it is checked at blocks 622 and 623 in a manner similar to that described above in association with blocks 613 and 616 of Figure 8. If the user enters a password which is not correct, then the portion of the handler which permits the user to change set-up information is skipped at 626. However, if the password is found to be correct at 623, or is found not to be active at 621, control proceeds to block 627, where the user is presented with a menu or menu system which permit the user to specify a set-up parameter to be changed and to then enter a new value for that parameter. At block 628, the processor accepts and saves this parameter. The types of parameters which can be entered include an AC value and a DC value for the preset time period for each of the timers 351 and 352, an AC value and a DC value for the suspend timer and backlight timer which are implemented in the software of the SCP (as described later), a user indication of whether the mask for the resume mask register 382 should permit a resume reset in response to an ALARM signal from the real time clock 376 or a modem ring signal MDMRI from the modem, a user indication of whether deactuation of the manual switch 313 should place the system in a suspend condition or a power-off condition, a user indication of whether the LCD or an external CRT should be used as the active display, and a user specification of a new password. other set-up information which is conventional and not pertinent to the present invention can also be entered. As each item is entered, the processor 311 sends it to the SCP 316 with a command instructing the SCP to store the information in the EEPROM 439. At 631, the processor can loop to continue to accepting information at 627 and 628 so long as the user wants to change set-up values. When the user is done, control proceeds to block 632, where the processor 311 instructs the SCP 316 to accept and restore the two mode bytes which the SCP sent to the processor 311 at block 618, and then follows the command with the two bytes. Then, at 633, a return is made to the calling routine.

Referring once more to Figure 4, if it is determined at block 513 that the source of the PMI is a time out of the global standby timer 352 (Figure 1), control proceeds from 513 to block 636. Time out of this timer means that there has been little or no activity in the system for a predetermined period of time, and therefore the system is going to automatically transition to a global standby mode in which the processor 311 places the number of system components in a reduced power mode and then halts itself in order to conserve power, or to the suspend mode.

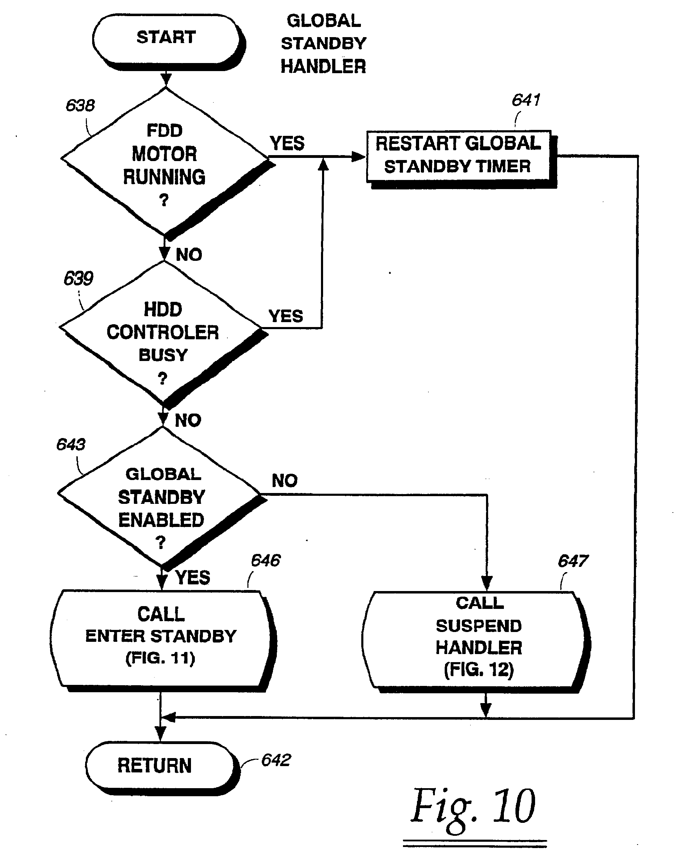

At block 636, a subroutine call is made to a global standby handler routine, which is shown in Figure 10. A condition for entering global standby mode is that the floppy disk drive 327 and the hard disk drive 323 be quiescent. Therefore, the processor reads status information from the floppy disk drive and the hard disk drive in a conventional manner, and checks this information at 638 and 639 of Figure 10 in order to determine whether the floppy disk drive motor is running or the hard disk drive controller circuitry is busy. If the motor is running or the circuitry is busy, then control proceeds to block 641, where the global standby timer 352 is restarted, and then at 642 a return is made to the calling routine without any entry to the standby mode or suspend mode.

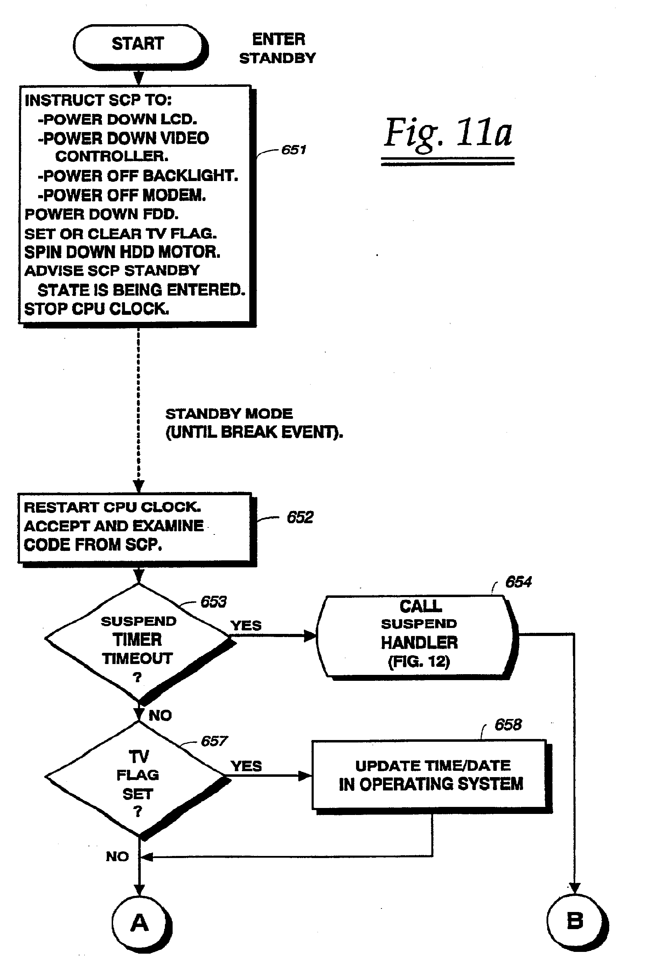

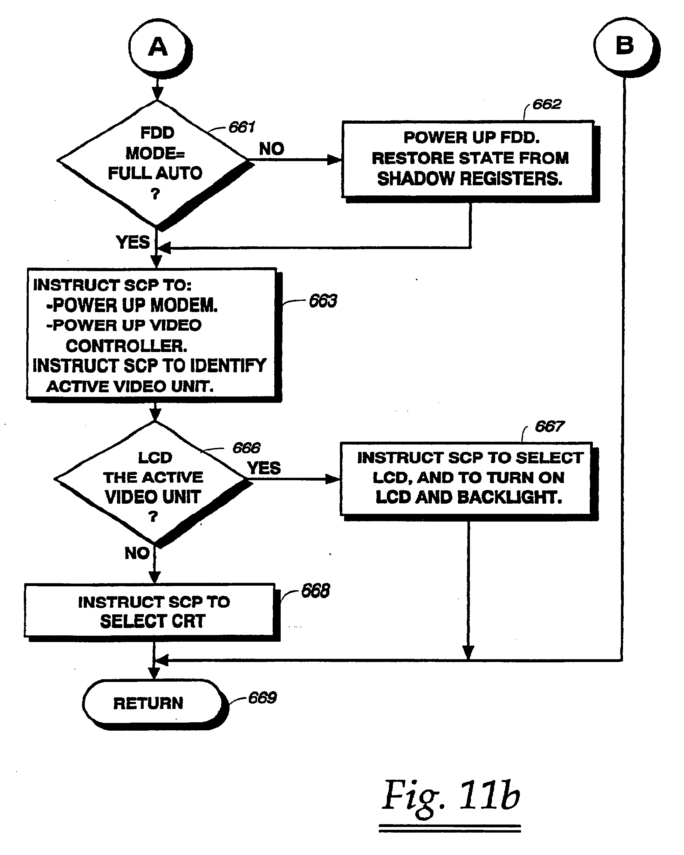

More typically, the floppy disk drive and the hard disk drive will not be busy, and thus control will proceed through blocks 638 and 639 to block 643, where the processor 311 checks the set-up information in the SCP in order to see whether the user has specified that time out of the global timer 352 is to be interpreted to mean that the system enters standby mode, or proceeds directly suspend mode. In particular, if the user has specified a standby preset, then a timeout of timer 352 means the system will enter standby mode. On the other hand, if the user has not specified a standby preset but has specified a suspend preset after which the system is to enter suspend mode, then the suspend preset is used for timer 352, and when it expires the system enters suspend mode. If the system is to go to suspend mode, then control proceeds to block 647, where a subroutine call is made to the suspend handler which places the system in suspend mode, as described in more detail later. On the other hand, the more common determination at 643 is that the user intends the system to go to standby mode, and thus control would proceed to block 646, where a subroutine calls is made to the previously-mentioned routine which guides the system into global standby mode. This routine will now be described in association with Figure 11.

In Figure 11, the system begins by sending commands to the SCP which instruct it to deactuate the LCDPWR line in order to power down the LCD display if the display is not already powered down, to deactuate the VIDEN line in order to power down the video controller, to deactuate the BLON line in order to power down the backlight for the LCD display, and to deactuate the MDMEN line in order to turn off the modem 322. Then, the processor 311 deactuates the FDDSLT line in order to power down the floppy disk drive. Then, the processor either sets or clears the TV flag (Figure 3) in order to indicate whether or not the operating system 471 (Figure 3) supports time and date information. Then, the processor 311 sends a command to the hard disk drive 323 which tells it spin down its motor, and sends a command to the SCP which advises the SCP that the processor 311 is entering the standby state, after which the processor 311 stops its clock. Thus, the processor 311 essentially stops operating. It remains in this state until some form of system activity causes the selector 346 to actuate the BREAK EVENT signal.

While the processor 311 is in this inactive state, the SCP 316 remains fully active, and in fact has the responsibility of waking up the main processor 311 in the event certain things occur. In particular, if a key on the keyboard 317 is pressed, then SCP will actuate interrupt signal IRQ1, as it normally does for a standard key press. The IRQ1 interrupt signal is connected to the selector 346, and will actuate the BREAK EVENT signal to wake up the processor 311. Also, the SCP 316 monitors the modem ring signal MDMRI from the modem 322, and will wake up the processor 311 in the event there is an incoming ring signal from a telephone line connected to the jack 434. Further, if the user has specified a suspend timer preset, the SCP will maintain a software timer starting from the point in time when the main processor 311 enters the standby mode. The basic philosophy is that, if the system has been in global standby mode for the specified time period with no activity sufficient to wake it up, it will automatically proceed to the suspend mode when the time interval expires in order to further conserve power. Of course, the user can specify that this timer is not to be active, in which case the system will simply remain in the standby mode. However, for purposes of explaining the present invention, it will be assumed that the user has enabled the suspend timer function, and that the SCP therefore maintains this timer in software. In the event this timer in the SCP expires, or in the event the SCP detects a modem ring signal, the SCP generates a false keystroke signal by actuating the interrupt signal IRQ1 in order to actuate the BREAK EVENT signal in the processor 311 and thus wake the processor up. Whereas in the case of a real keystroke the SCP sends the processor a coded representation of the particular key pressed, in the case of suspend timer expiration or a modem ring signal, the SCP sends one of two respective codes which do not correspond to any existing key on the keyboard and which the processor 311 is programmed to recognize as representing the timer expiration or the modem ring signal.

Thus, When the BREAK EVENT signal is eventually actuated in order to wake the processor up, the hardware of the processor 311 automatically restarts the CPU clock, and then the processor 311 proceeds at 652 with the software routine of Figure 11, in which it accepts and examines the code from the SCP. If it is determined at 653 that the code is an indication that the software suspend timer maintained by the SCP during standby has expired, then control proceeds to block 654, where a subroutine call is made to the routine which handles entry into the suspend mode, and thus the system proceeds automatically from standby mode into suspend mode. On the other hand, if it is determined at 653 that the BREAK EVENT signal was caused by any other condition, such as an actual keystroke on the keyboard or a modem ring indicator signal, then the processor 311 needs to return to the normal operational mode, and therefore proceeds to block 657.

In block 657, the processor 311 checks the TV flag (Figure 3), which it set before entering standby in order to provide an indication of whether the operating system maintains time and date information. If the flag is set to indicate that it does, then control proceeds to block 658, where the processor 311 extracts up-to-date time and date information from the real time clock circuit 376 (Figure 1), and updates the time/date information at 472 (Figure 3) in the operating system.

Control then proceeds to block 661, where the processor 11 checks the shadow register information at 486 (Figure 3) for the floppy disk drive, in order to determine the operational mode the floppy disk drive was in before the floppy disk drive was powered down for the standby state. The floppy disk drive can be operated in an ALWAYS ON mode in which it is never turned off except for standby and suspend, an AUTO ON mode in which it is left off when the system is powered up but will be turned on and then remain on if it is accessed at any point, and a FULL AUTO mode in which it is turned on and off as needed as a function of the extent to which it is being accessed, as already described above. With respect to the FULL AUTO mode, the I/O trap logic 361 and the local timer 351 are set to disable the FDD TRAP and the LOCAL STANDBY signals except when the floppy disk drive is being operated in the full-auto mode. If the floppy disk drive is not being operated in the FULL AUTO mode, then control proceeds from block 661 to block 662, where the processor 311 actuates the line FDDSLT in order to restore the power to the floppy disk drive 327, and restores the state of the floppy disk drive from the shadow registers stored at 486 (Figure 3) in the main memory. In either case, control proceeds to block 663, where the processor 311 instructs the SCP 316 to actuate the line MDMEN in order to restore power to the modem 322, and to actuate the line VIDEN in order to restore power to the video controller 318. The processor 311 then asks the SCP to identify whether the active video unit is the LCD 321 or an external CRT 426. If the reply from the SCP indicates that the active unit is the LCD, then control proceeds to block 667, where the processor 311 instructs the SCP to set the line CRT/LCD to select the LCD, and to actuate the signal BLON in order to turn on the backlight to the LCD. On the other hand, if the external CRT is the active unit, then control proceeds from block 666 to block 668, where the processor 311 instructs the SCP to set the line CRT/LCD to select the external CRT 426. In either case, control returns at 669 to the calling routine.

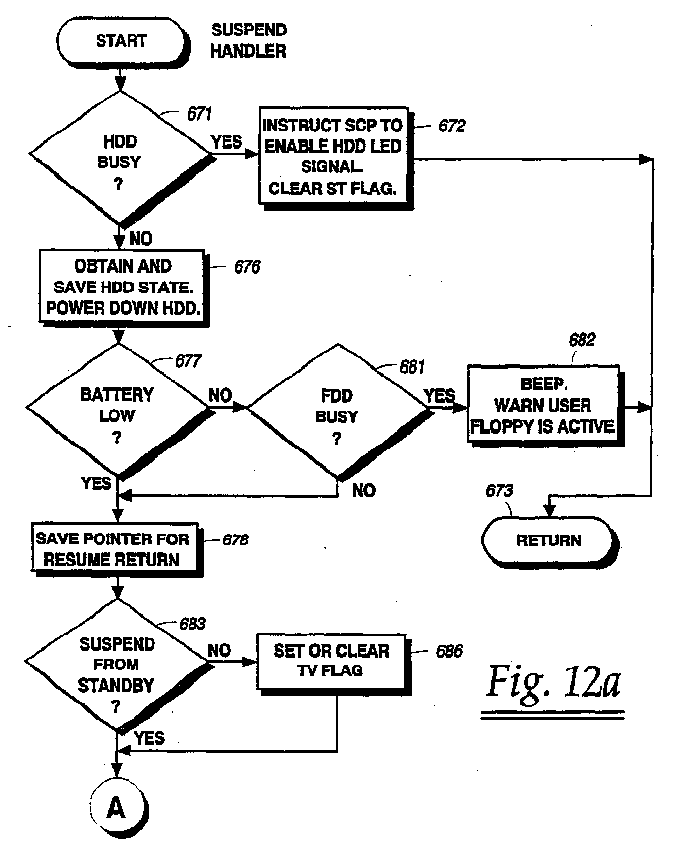

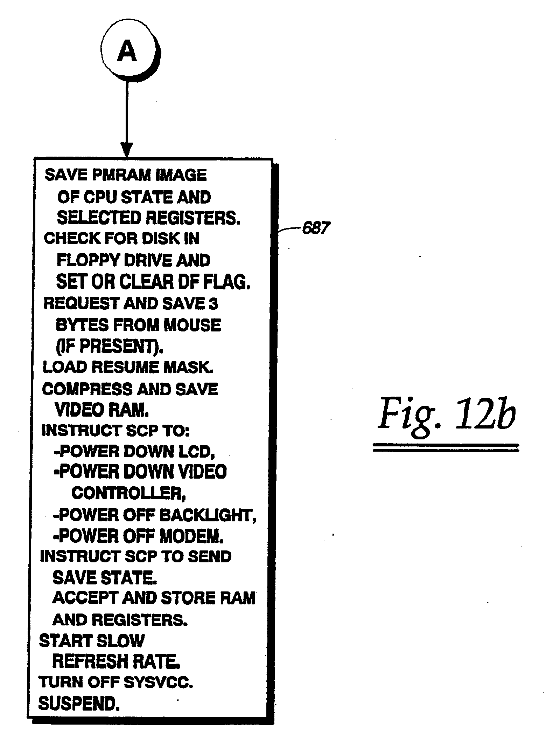

Subroutine calls to the suspend handler routine which guides the system into suspend mode have previously been mentioned in association with block 531 in Figure 5, block 576 in Figure 8, block 647 in Figure 10, and block 654 in Figure 11. The suspend handler routine will now be described in association with Figure 12. As previously mentioned, suspend mode is not entered while the hard disk is busy. Therefore, the processor 311 begins at 671 in Figure 12 by reading in a conventional manner certain status information from the hard disk drive 323 in order to determine whether it is busy. If it is, control proceeds to block 672, where the processor instructs the SCP to actuate the ENABLE signal to the gate 438, and then clears the ST flag (Figure 3) in order to indicate that, when the processor 311 is signalled that the hard disk is no longer busy, the processor will decide at block 573 in Figure 8 to enter the suspend mode at block 576 rather than the standby mode at block 578, as already described in association with Figure **8.** From block 672, control proceeds to 673, where a return is made from the suspend handler routine without entry into the suspend mode.

On the other hand, if the hard disk is not busy at block 671, then control proceeds to block 676, where the processor 311 reads the current status of the hard disk drive 323 and saves it in the portion 482 of the PMRAM (Figure 3). The precise manner in which this occurs is discussed later. After this information has been obtained from the hard disk and stored in the memory, the processor 311 deactuates the line HDDSLT in order to place the hard disk drive in a reduced power mode.

Control then proceeds to block 677, where the processor checks the BATTLOW line from the SCP in order to determine the state of the battery power. If it is determined that the battery power is waning, then control proceeds directly to block 678, which is described in a moment and causes the system to proceed into suspend mode. On the other hand, if the battery power is sufficient, then control proceeds to block 681, where the processor checks to see if the floppy disk drive is busy. If it is, then control will proceed to block 682, where the processor 311 actuates line 391 (Figure 1) in order to cause the speaker 392 to beep, and warns the user on the display that the floppy disk drive is active. Then, at 673, control is returned to the calling routine without entry into the suspend mode. On the other hand, if it is determined at block 681 that the floppy disk drive is not busy, then control proceeds to block 678 to begin the final sequence of entry into the suspend mode.

In block 678, the processor 311 extracts from its stack 492 (Figure 3) an indication of the point from which the suspend handler routine was called, in particular in the form of the value of the instruction pointer which has been saved on the stack and which indicates the point to which program control is to be returned. The processor 311 saves this in the main memory for use during a subsequent resume, as described later. Then, at block 683, the processor 311 checks to see whether it is carrying out an automatic entry to suspend mode from standby mode, in particular through block 654 in Figure 11. If it is, then the processor 311 has already addressed whether or not the operating system supports time and date information as part of its entry into the standby mode. On the other hand, if it is not entering suspend mode directly from standby mode, it proceeds to block 686, where it either sets or clears the TV flag (Figure 3) in dependence on whether or not the current operating system supports time and date information. In either case, control then proceeds to block 687.

In block 687, the processor 311 takes the CPU state saved at 481 (Figure 3), and creates a copy of it at 488. This is because a further PMI interrupt will be intentionally induced during a resume from the suspend mode in a manner described later, at which point the hardware will necessarily overwrite the information saved at 481. Since this information is needed to resume the interrupted application program, a copy of it is temporarily saved at 488. In addition, the processor 311 saves at 488 some selected internal registers which are not automatically saved at 481 in response to a PMI. This is because the PMI handler routine can service most PMI interrupts without altering these selected registers, and thus in order to speed up handling of most PMI interrupts the processor 311 does not save the selected registers. On the other hand, these registers must be saved in order to enter suspend mode, because the portion of processor 311 which contains them will be powered down during suspend mode and the contents of these registers would thus be lost. Therefore, before entering suspend mode, they are saved at 488.

continuing with block 687 in Figure 11, the processor reads status information from the floppy disk drive in order to determine whether a floppy disk is present in the floppy disk drive, and sets the DF flag (Figure 3) if a disk is present or clears the flag if a disk is not present. This is so that when operation resumes it will know if a disk should be present in the drive, because it is possible that a user might remove the disk while the system is in suspend mode or, worse yet, replace the disk with a different disk. If the interrupted application program were in the middle of writing data to the disk when the suspend occurred, it would have no way of knowing at resume that the disk had been changed, and might complete its task of writing data to the floppy disk drive without knowing that it was writing the data on to the wrong disk.

Then, still at block 687, the processor reads 3 bytes of status information in a conventional manner from the mouse 421 (if one is present), and stores the bytes at 482. An external keyboard, on the other hand, has no such status information which must be saved, but instead is always maintained in exactly the same configuration and mode as the internal keyboard. Then, the processor 311 configures and loads into mask register 382 (Figure 1) the resume mask which determines the events which will wake the processor up from the suspend mode. Then, the processor reads the video RAM 448 from the video controller 318, compresses the video information using a conventional data compression technique, and then stores the compressed data in the portion 478 (Figure 3) of the main memory. Then, the processor 311 sends a series of commands to the SCP which instruct the SCP to deactuate the line LCDPWR in order to power down the LCD display, to deactuate the line VIDEN in order to power down the video controller, to deactuate the line BLON to turn off the backlight for the LCD display, and to deactuate the line MDMEN in order to power down the modem. Then, the processor 311 sends the SCP a command which instructions the SCP to send the processor 311 the contents of its RAM 440 and certain internal registers. The processor 311 accepts this information from the SCP, and stores it at 482 (Figure 3) in the PMRAM. Then, the processor 311 sets the refresh control circuit 386 (Figure 1) to carry out extremely slow refresh to the main memory, and then deactuates the signal SYSPWROFF to the power control circuit 312 so that the power control circuit turns off the SYSVCC power to the SCP, keyboards, video controller, hard disk drive, LCD display, modem, floppy disk drive, and ROM 328. The power control circuit 312 is, of course, still supplying PMVCC power to the main memory 326, the processor 311, and flash RAM 331. Finally, the processor 311 executes a software instruction which causes it to enter suspend mode, as a result of which the processor 311 stops operating and internally turns off power to most of its circuits, with the exception of circuits such as the real time clock 376 which must continue to maintain time and date information, the resume control circuitry 381-383 which must be capable of detecting conditions causing operation to resume, and the refresh control circuit 386 which is maintaining the data in main memory 326.

If the user has specified that an ALARM signal from the real time clock 376 or a modem ring indicator signal MDMRI from the modem 322 is to be capable of waking up the processor, then the processor will have configured the resume mask 382 so that either of these events will produce a RESUME RESET signal. However, the most common cause for a resume is manual actuation of the switch 313 by a user.

The RESUME RESET signal sets the resume flag 383, whereas this flag is automatically reset by any other reset signal. Further, the RESUME RESET causes the processor 311 to internally restore power throughout its internal circuitry, and the processor automatically brings the refresh control circuitry 386 back to a normal state so that the main memory 326 can be accessed. In response to any type of reset, the processor 311 automatically goes to a predetermined location in the flash ram 331 and executes the first instruction of a reset handling routine stored there. This routine is shown in Figure 13. The processor 311 may begin by doing some internal diagnostics, but this is conventional and therefore not illustrated in Figure 13. For purposes of the present invention, the first significant step performed by the processor 311 is to deactuate SYSPWROFF in order to cause the power control circuit 312 to turn system power SYSVCC back on, so that the SCP, keyboard, video controller, LCD display, modem, hard disk drive and floppy disk drive again have access to a source of power.

Then, at 692, the processor checks the resume flag 383 (Figure 1). If it is set, then the processor will attempt to configure the system using the set-up information stored in the EEPROM 439 of the SCP. If it is not set, then the system is performing a cold boot and will attempt to configure itself using the set-up information stored in the RAM 377 of the real time clock circuit 376. More specifically, if the resume flag is set to indicate that the system is resuming from suspend mode, then control will proceed from block 692 to block 696, where the system will attempt configuration using the current set-up information stored in the EEPROM 439 of the SCP.

In particular, at block 696, the processor 311 instructs the SCP to send current set-up information to it. It performs a checksum on this information and compares it at 697 to a checksum value present in the set-up information itself in order to determine if the set-up information is. valid. If it is, then control proceeds directly to block 698, where the system will configure itself using this set-up information. On the other hand, if it is determined at block 697 that the current set-up information is not valid, then control proceeds to block 701, where the system warns the user that the current set-up information is not valid and asks for authorization to use the boot set-up information stored in the real time clock circuit 376. If the user refuses, then block 702 transfers control to block 703, where the system halts. The user would have the option of restarting the system with a conventional set-up disk in order to configure it in a desired manner. Typically, the user would approve use of the boot set-up information, and control would thus proceed from block 702 to block 693, where the processor 311 would run a checksum on the boot set-up information in the real time clock circuit 376 and compare the checksum to a checksum stored in the real time clock circuit 376. If the checksum was accurate, then control would proceed directly to block 706, where as described below the system would be configured using the boot set-up information. Otherwise, control proceeds to block 707, where the processor 311 warns the user that the boot set-up information is not valid and asks for authorization to use the factory default set-up information stored in the flash RAM 331. If the user refuses permission, then at 708 control is transferred to block 711, where the system halts.

Otherwise, control proceeds to block 712, where the processor runs a checksum on the factory default set-up information in the flash RAM 331 and compares the result to a checksum stored in the flash RAM. If an error is detected, control proceeds to 713, where the user is warned that the system has no usable set-up information, and then the processor halts at 711. However, if the factory default set-up information is found to be accurate at block 712, then control proceeds to block 716, where the factory default set-up information is copied from the flash RAM to the RAM 377 in the real time clock circuit 376. Then, at block 706, the set-up information in the real time clock circuit 376 is sent to the SCP, and the SCP stores it in the EEPROM 439 for use as the current set-up information. Then, at block 698, the processor 311 configures the system according to the set-up information which is stored in the SCP.

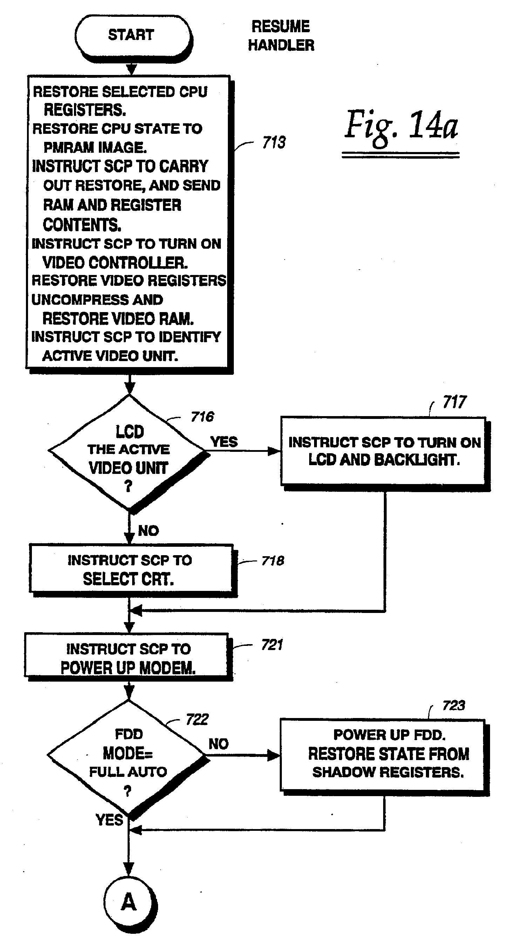

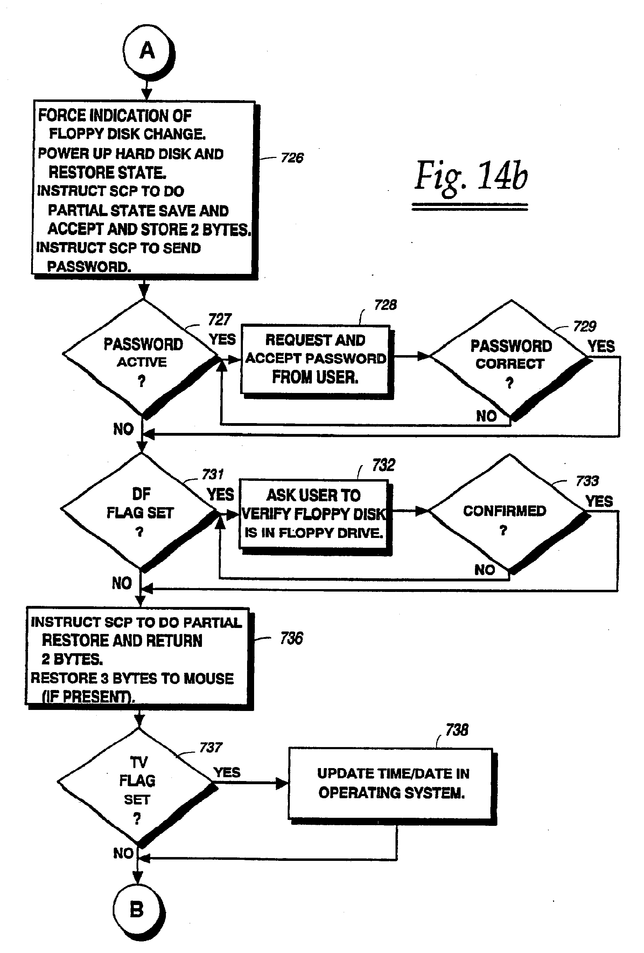

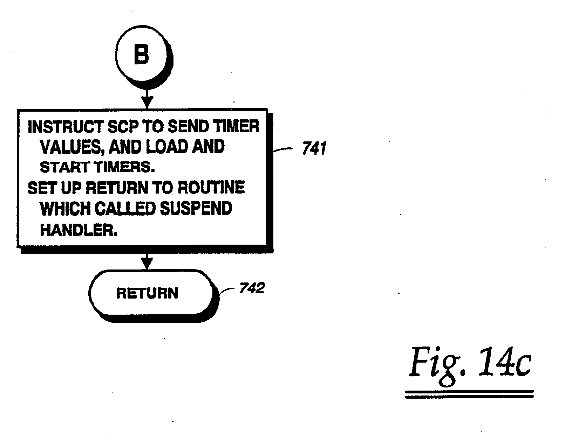

Then, at block 707, the processor again checks the resume flag 383 in order to determine if a resume is being performed. If it is not, then control proceeds to block 708, where the processor starts the operating system in a conventional manner. Otherwise, control proceeds from block 707 to block 711, where the processor 311 executes a software instruction which generates a PMI interrupt in order to invoke the previously-described PMI handler routine. Thus, the software PMI causes the processor to continue with the PMI handler routine shown in Figure 4. In particular, at previously-described block 502, the system checks the resume flag again in order to determine whether the PMI handler has been entered as a function of resuming from a suspend state, or for some other reason. Since in this case the flag will be set, control proceeds to block 503, where a branch is made to a resume handler routine which is shown in Figure 14.

At block 713 in the resume handler routine of Figure 14, the processor 311 begins by extracting from portion 488 (Figure 3) of the main memory the states of selected registers which it stored there, and restoring these values directly to the registers in the processor itself. Then, the processor transfers from the portion 488 to the portion 481 the states of the remaining processor registers, thereby overriding the information stored at 481 by the software PMI used to reenter the PMI handler, so that at the end of the resume handler the hardware will be able to find and restore these register states to the registers of the processor 311 when the PMI handler is terminated and the interrupted application program is resumed. Then, still at 713 in Figure 14, the processor instructs the SCP to carry out restoration of its state, and sends the SCP the contents of the SCP registers and RAM stored by the processor 311 in the main memory prior to entering suspend mode. Then, the processor instructs the SCP to actuate the VIDEN signal in order to turn on the video controller. Then, the processor restores the configuration of the video registers 446, and then uncompresses and restores the video RAM from the state of the video RAM saved at 478 in the main memory. Then, the processor 311 instructs the SCP to identify from the set-up information in EEPROM 439 the active video unit. Then, if the processor finds at block 716 that the LCD display is the active video unit selected by the user, it proceeds to block 717 where it instructs the SCP to actuate the LCDPWR signal in order to power up the LCD, and to actuate the BLON signal in order to turn on the backlight for the LCD display. On the other hand, if it is determined at 716 that the user has selected the external CRT 426 as the active video unit, control proceeds to block 718 where the processor instructs the SCP to set the CRT/LCD signal to select the CRT. In either case, at block 721 the processor then instructs the SCP to actuate the MDMEN line in order to power up the modem 322. Then, at block 722, the processor checks the shadow register information at 486 in order to determine if the floppy disk drive is being operated in FULL AUTO mode. In not, then at block 723 the processor actuates the FDDSLT line in order to power up the floppy disk drive, and sends the shadow registers stored at 486 to the floppy disk drive in order to restore the configuration of its control registers.

Control ultimately proceeds to block 726, where the processor sets the DC flag 473 (Figure 3) in order to force an indication to the operating system that a floppy disk change has occurred. This will force the operating system to reread certain standard tables from the disk to an image of the disk in memory, thereby ensuring that if a user has changed the disk while the system was in suspend mode, the image of these tables in memory will at least correspond to the tables of the disk which is actually present in the disk drive, as opposed to tables on a disk which is no longer present in the disk drive.

Then, still in block 726, the processor 311 actuates the line HDDSLT in order to power up the hard disk, and then sends the hard disk the information regarding the state of the hard disk which the processor obtained from the hard disk and stored before entering the suspend mode. This restores the hard disk to the state it was in before operation of the system was suspended. Then, the processor instructs the SCP to do a partial state save as previously discussed in association with block 618 of Figure 9. Then, the processor instructs the SCP to send it the current password, and then if it is determined at 727 that the password is an active password, the processor requests and accepts a password from the user at 728 and then compares the passwords at 729. If they do not compare, the processor remains at 728 and 729, in order to prevent an unauthorized user from using the system.

If they do compare, control proceeds to 731, where the processor checks the DF flag (Figure 3) in order to determine whether a disk was present in the floppy drive when the system was turned off. If a disk was present, then control proceeds to block 732, where the processor uses the active video unit to ask the user to verify that the same floppy disk is still in the floppy drive or has been reinserted in the floppy drive. A check is made at 733 to be sure that the user has confirmed that this floppy disk is present. If it is not, control remains at blocks 732 and 733. Once user confirmation is obtained, control proceeds to block 736, where the processor instructs the SCP to do a partial restore, and sends it the two bytes which were received at block 726. Also, if a mouse 421 is present, the processor takes from portion 482 of the main memory the 3 bytes obtained from the mouse before the suspend, and loads them back into the mouse in a conventional manner.

Then, at block 737, the processor checks the TV flag (Figure 3) in order to determine whether the operating system supports time and date information. If it does, then in block 738 the processor reads up-to-date time and date information from the real time clock 376 (Figure 1), and uses it to update the time and date information maintained at 472 (Figure 3) in the portion 471 of the main memory used for the operating system. Then, at 741, the processor instructs the SCP to send it the set-up information stored in the EEPROM 439 for the timers 351 and 352, and uses this information to configure the registers 356 and 357 for the timers 351 and 352 so that the timers start running (or to disable the timers if the timers will not be used). Then, at 741, the processor uses the pointer saved at block 678 in Figure 12 to modify its stack 492 so that, when it immediately thereafter does a subroutine return at 742, the processor 311 will return to the point from which the suspend handler subroutine was called before the processor entered the suspend mode, or in other words to one of the blocks 531, 576, 647 and 654 respectively appearing in Figures 5, 8, 10 and 11. Following the subroutine return, the system continues execution of the PMI handler routine from the point at which execution was placed on hold so that the system could enter and resume from the suspend mode. When execution of the PMI routine is eventually completed, the processor 311 will exit from the PMI handler at blocks 522 and 523 of Figure 4 in the manner previously described, so that execution of the interrupted application program resumes as though there had been no interruption at all.

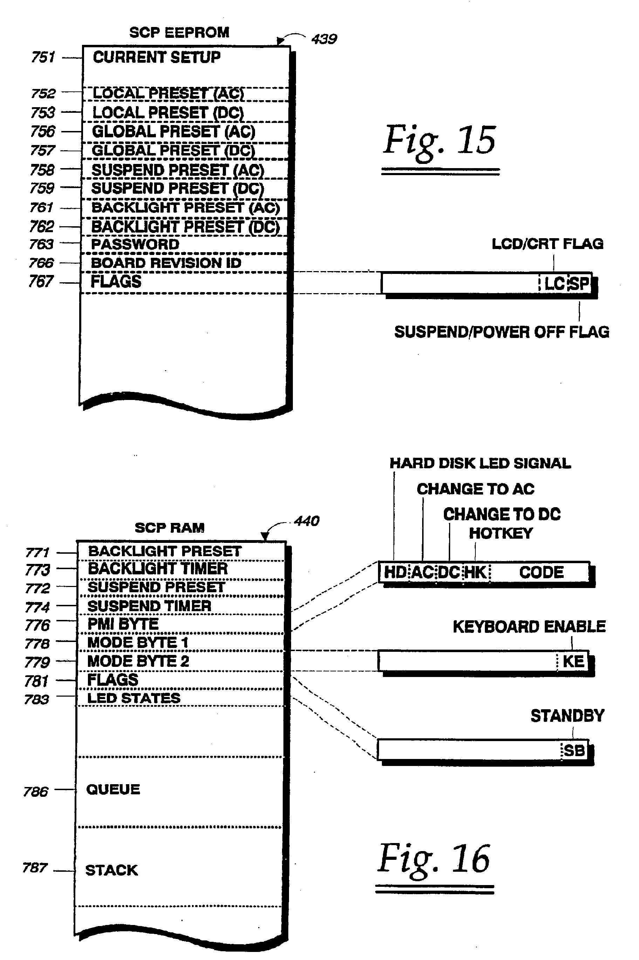

Turning now in more detail to the system control processor (SCP) 316, Figure 15 is a diagrammatic view of a portion of the information stored in the EEPROM 439 of the SCP. A portion 751 of this device is used to store current set-up information of the type commonly found in conventional and commercially available personal computers. In addition, portions 752 and 753 store two different values of a preset time for the local timer 351, one value being used when the system is operating on AC power and the other being used when the system is operating on DC power. Similarly, portions 756 and 757 store respective AC and DC values for use in the global standby timer 352, portions 758 and 759 store respective AC and DC values of a suspend timer preset for the suspend timer maintained in software by the SCP, and portions 761 and 762 contain respective AC and DC preset values for a backlight timer maintained by the SCP. A portion 763 contains the current system password, and a portion 766 contains a value representing a board revision number of the main circuit board on which the processor 311 and SCP 316 are mounted. A further portion 767 contains some flags, including an LC flag which indicates whether the LCD 321 or the external CRT 426 is presently the active display device, and an SP flag which indicates whether manual deactuation of the switch 313 is to place the system in suspend mode or the power off state.

Figure 16 is a diagrammatic view of the SCP RAM 440 and some of the information stored therein. In particular, a portion 771 stores a preset for the backlight timer. This is the value which is currently specified for use in operating the timer, and in particular is the AC back light preset stored at 761 in the EEPROM if the system is operating under AC power, and is the DC backlight preset stored at 762 if the system is operating under DC power. Similarly, the SCP RAM stores at 772 a suspend preset which is One of the AC and DC suspend presets stored at 758 and 759 in the EEPROM. The SCP RAM also includes locations 773 and 774 which respectively serve as the backlight timer and the suspend timer. Each timer is started by storing in the associated location the appropriate preset, which is a positive number representing the time interval to be timed. The number of each timer is then periodically decremented by software in a manner described later, and the timer expires when the value in the location reaches zero.

The SCP RAM 440 also includes a PMI byte 776. When the main processor asks the SCP to identify the source of an external PMI, the SCP sends the main processor the PMI byte 776. This byte includes an HD bit which is set to indicate that the hard disk LED signal was the source of the PMI, and AC bit which indicates that the power supply has just changed to AC power, a DC bit which indicates that the power supply has just changed to DC power, and a HK bit which indicates that a hot key multi-key combination has been pressed on the keyboard and was the reason for the PMI. In addition, the PMI byte includes a code which identifies the most recent hot key actuated on the keyboard.

The RAM also includes two mode bytes 778 and 779, which control modes in which the SCP and the keyboard operate. For purposes of understanding the present embodiment, a single bit from one of these bytes is shown, which is a keyboard enable (KE) flag. This KE flag indicates whether or not information is to be accepted from the keyboards. certain application programs may temporarily cause this flag to be cleared in order to prevent the user from entering information on the keyboard.

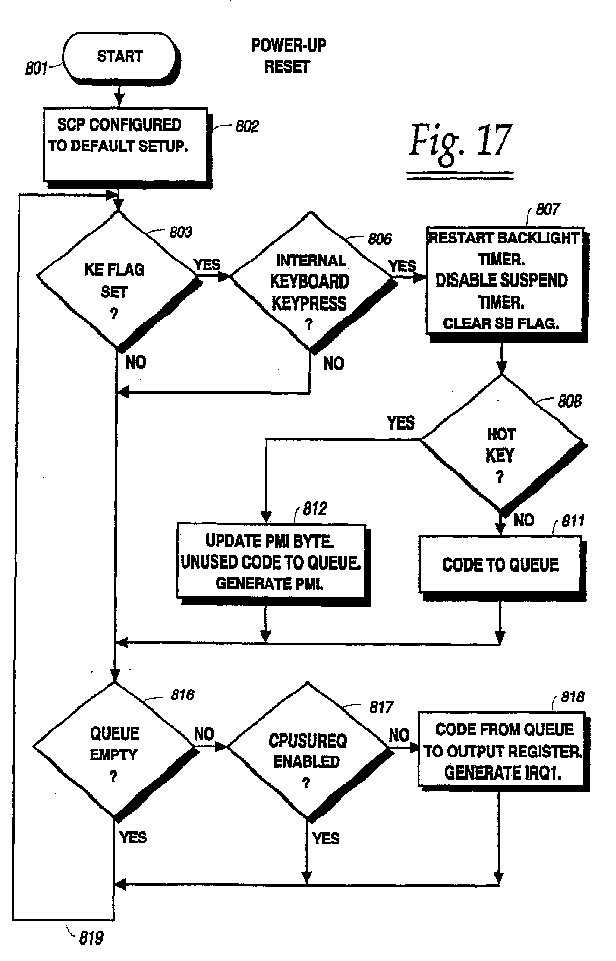

The RAM 440 also includes a portion 781 containing an additional flag, in particular a standby (SB) flag which is set to let the SCP know that the main processor is currently in standby mode. The RAM 440 also includes a portion 783 which has bits corresponding to each of the four LEDs 442 on the keyboard 317, and these bits each indicate whether the associated LED on the keyboard should presently be on or off for purposes of normal operation. The RAM 440 also includes a queue area 786, which is discussed below, and the usual stack area 787. Each time power to the SCP is turned on, including the situation where the system is resuming from the suspend mode, the hardware of the SCP automatically causes it to execute a program instruction stored at a predetermined location in the ROM 437, which is the first instruction of the firmware program which controls the SCP. Figures 17-20 are flowcharts of this firmware program. Following a power-up reset at 801, block 802 represents the first portion of the firmware program, in which the SCP configures itself to a default set-up. This includes turning power on to the video controller 318 and LCD 321, and turning on the backlight 431 for the LCD. This default configuration is carried out even if the system is resuming from a suspend mode which was entered while the active display unit was the external CRT 426 rather than the LCD 321. If the active display is in fact to be the external CRT 426, then it is up to the main processor 311 to send commands to the SCP to appropriately reconfigure it, in a manner described below.

After the SCP configures itself to a default set-up configuration, control proceeds from block 802 to block 803, where the SCP checks to see if the KE flag (Figure 16) is set to indicate that the keyboards are enabled and information can be accepted from them. If so, then control proceeds to block 806, where the SCP scans only the internal keyboard in order to determine if a key has been pressed. If one has, then control proceeds to block 807, Where the SCP restarts the backlight timer 773 (Figure 16) by taking the current backlight preset stored at 771 and storing it in the backlight timer location at 773. Thus, so long as keys are being pressed the timer will be periodically restarted before it can expire and thus will keep the backlight on, whereas if the backlight timer expires the SCP will turn off the backlight in a manner described below in order to conserve power.

Then, still at block 807, the system forcibly disables the suspend timer 774, even if this timer is already disabled, for example by storing a negative number in location 774. The fact that a key has been pressed means that, if the main processor 311 did happen to be in the suspend mode, the SCP would be waking it up in order to pass it the keystroke, and thus the suspend timer necessarily needs to be stopped because the main processor will be exiting standby mode and it is no longer necessary to measure the period of time it has been in standby mode. For similar reasons, the SB flag (Figure 16) is forcibly cleared to indicate that the main processor is not in the standby mode.

Then, at block 808, a check is made to see if the key which has been pressed is a hot key, or in other words one of several specific predefined multi-key combinations. If not, then at 811 a code representing the particular key pressed is placed in the queue section 786 of the SCP RAM 440, from which it will be sent in due course to the main processor. On the other hand, if it is determined at 808 that the key which has been pressed is a hot key, then control proceeds to block 812, where the SCP updates the PMI byte 776 (Figure 16) by setting the HK bit to indicate that a hot key has been pressed and by placing in the code section of the PMI byte a unique code corresponding to the particular hot key. Then, the SCP places an unused code in the queue, which will have the effect of waking up the processor if it is in the standby mode but which in any case will be discarded by the processor 311 if it ultimately reaches the processor 311. Then, still in block 812, the SCP produces an output signal which actuates the EXTPMI line in order to produce a PMI in the main processor.

Control ultimately proceeds to block 816, where the SCP checks to see if the queue 786 is empty. If it is not, then it contains information waiting to be sent to the main processor, and control proceeds to block 817, where the SCP checks to see if the CPUSUREQ line from the main processor is actuated to indicate that the main processor is about to send a command to the SCP. If it is actuated, the SCP does not send information from the queue, in order to keep the interface to the main processor clear so that the interface will be available for any information which the SCP needs to send back to the main processor in response to the command, while also avoiding the possibility that information from the queue being sent to the main processor at about the same time that the main processor issues a command will be misinterpreted by the main processor as being a response to the command. If it is determined at 817 that the CPUSUREQ line is not actuated, then at block 818 the SCP takes a code from the queue and places it in an output register in the interface to the main processor, and then generates an IRQ 1 interrupt signal in order to indicate to the main processor that the output register contains information for the main processor. In the event the main processor happens to be in standby mode, the IRQ 1 interrupt signal will wake it up from the standby mode, as already described above in association with the discussion of the main processor. The processor then loops at 819 through blocks 803 and 818, which constitutes the main loop of the program in the SCP.

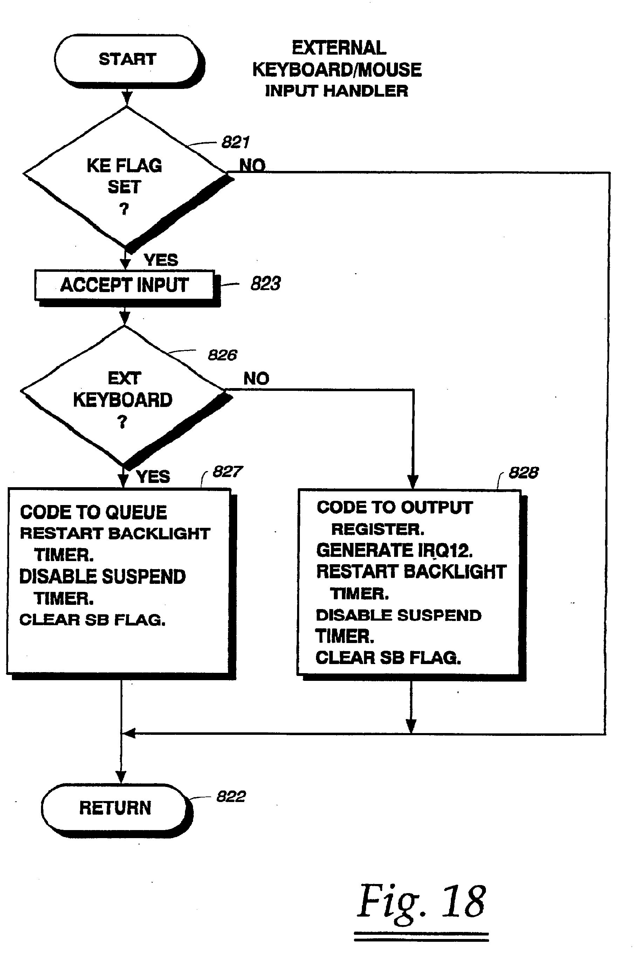

This main loop can be interrupted by different events, one of which is an attempt by an external keyboard or mouse 421 to send information to the SCP. In response to an interrupt caused by such an attempt to send information, the SCP executes the interrupt service routine shown in Figure 18. In this routine, the SCP first checks the KE flag at 821 in order to determine whether the user is currently allowed to input information. If the flag is not set, then control proceeds to 822, where a return is made from the interrupt handler without accepting the information. Typically, however, it will be determined at 821 that the information can be accepted, and therefore it will be accepted at block 823, and then at block 826 the system will determine whether it is dealing with an external keyboard or mouse, and if the device is a keyboard the SCP will proceed to block 827 where it places a code representing the actuated key in the queue 786. Hot keys are recognized only for the internal keyboard and not an external keyboard. If a hot key actuation were received from an external keyboard, it could be discarded. All valid codes are thus placed directly in the queue. Then, the SCP restarts the backlight timer, disables the suspend timer and clears the SB flag, for reasons similar to those discussed above in association with block 807, and then returns at 822 to the interrupted routine.

On the other hand, if it is determined at 826 that the external device is a mouse, control proceeds to block 828, where the code received from the mouse is placed in an output register, and then the SCP actuates interrupt line IRQ 12, which is reserved for use with a mouse and indicates to the processor that information from a mouse is being sent to the processor. Then, the SCP restarts the backlight timer, disables the suspend timer and clears the SB flag, and returns at 822.

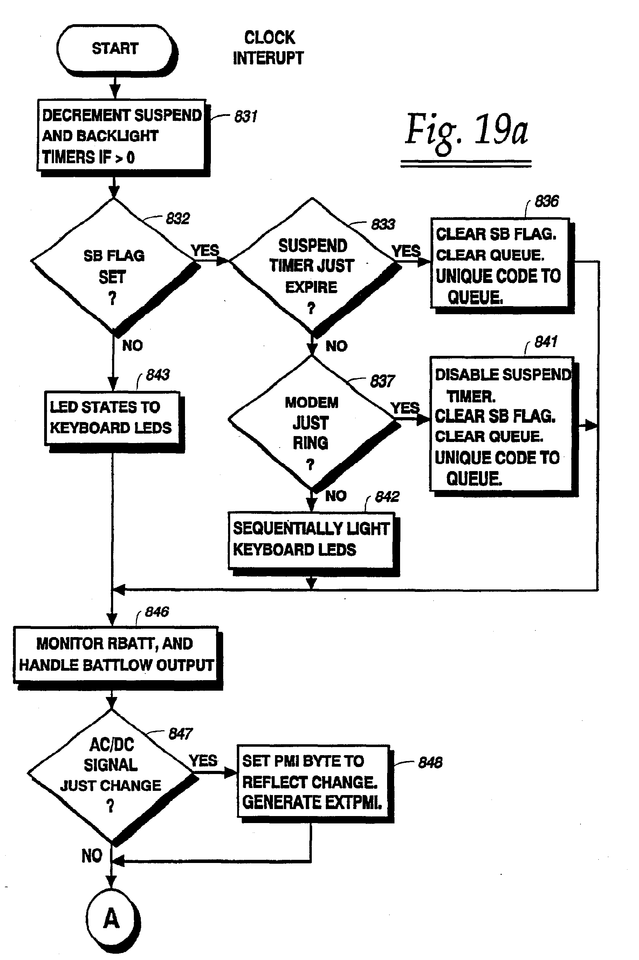

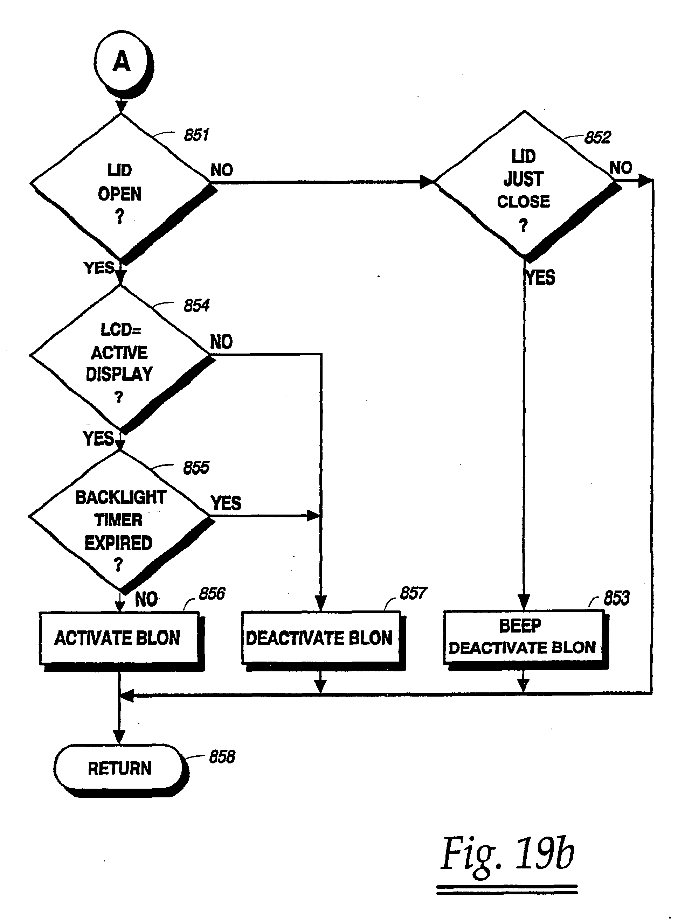

Another source of interrupts to the main routine shown in Figure 17 are pulses of the keyboard clock signal KBCLCK received from the clock generation circuitry in the main processor. This interrupt occurs at regular intervals and thus each occurrence of this interrupt represents the elapse of an amount of time equal to this interval. The occurrence of this interrupt is therefore used to keep track of time, as well as to perform some housekeeping functions. The firmware service routine for this interrupt is shown in Figure 19, where the SCP begins at 831 by decrementing the numbers in each of the timer locations 773 and 774 if they are greater than zero. As mentioned above, the expiration of each timer occurs when the positive value in it is decremented to a value of zero.

Then, at 832, the system checks to see if the SB flag is set, or in other words whether the main processor is currently in standby mode. If the main processor is in standby mode, then control proceeds to block 833, where the SCP checks to see if the suspend timer has just expired, or in other words whether the value in location 774 has just been changed from one to zero at block 831. If it has, then the system has remained inactive for a predetermined period of time while the main processor was in standby mode, and therefore the main processor is to be shifted to suspend mode in order to further conserve power until the user again begins using the system. Thus, at block 836, the SCP clears the SB flag in order to indicate that the main processor is no longer in standby mode, because the SCP is going to break the main processor out of standby mode so that the main processor can enter suspend mode. Then, the SCP clears the queue 786, so that the queue can be used to send the main processor a unique code which is not used by the keyboard and which indicates that the suspend timer has expired and that the main processor should transition from standby to suspend mode.

On the other hand, if it is determined at block 833 that the suspend timer has not yet expired, then at block 837 the SCP checks to see if the modem ring signal MDMRI from the modem 322 has just been actuated in order to indicate that there is an incoming call. If it has, then control proceeds to block 841, where the SCP turns off the suspend timer 774 and then takes the same actions described above in association with block 836, except that the unique code placed in the queue is a different unique code not used for the keyboard which will be interpreted by the main processor to mean that the modem ring signal has occurred.

If it is determined at 837 that no ring signal is being received from the modem, then control proceeds to block 842, where the four LEDs 442 on the keyboard are controlled in a manner which causes them to be sequentially lit, which serves as a visual indication to the user of the system that the main processor is in standby mode. In contrast, if it had been determined at block 832 that the SB flag was not set and that the main processor thus was not in standby mode, control would have proceeded directly to block 843, where the LED states stored at 783 in the SCP RAM would have been used to set the LEDs 442 in the keyboard 317 to their normal operational states.

In any event, control ultimately proceeds to block 846, where the SCP reads the value of the RBATT signal from the power control circuit 312 through the A/D converter 416, and then analyzes the state of the signal. The SCP preferably analyzes the rate of change of this signal over time, because an inherent characteristic of the rechargeable battery 396 is that its terminal voltage will drop very slowly while it has a strong charge, and will then begin dropping much more quickly a short period of time before the battery reaches a state where it would not have enough power to operate the system. Consequently, when it is determined that the rate of change of this signal has exceeded a predetermined reference value, the SCP actuates the BATTLOW signal to the main processor 311 as an indication that the battery power is getting low. However, it will be recognized that a detailed analysis of the RBATT signal is not necessary, and that the SCP could alternatively just determine whether the RBATT signal had dropped below a predefined voltage, and then actuate the BATTLOW signal to the main processor 311.

Thereafter, at block 847, the SCP checks the DC/AC signal from the power control circuit 312 in order to determine whether this signal has just changed from one state to another state. If it has, then control proceeds to block 848, where the SCP sets either the AC bit or DC bit in the PMI byte 776 to indicate the current source of system power is AC or DC. Then, the SCP outputs a signal at 435 which actuates the EXTPMI signal in order to generate a PMI in the main processor.

At block 851, the SCP checks the LIDSW switch from the lid switch 432 for the lid on which the LCD display 321 is mounted. If the lid is closed, then control proceeds to block 852, where the SCP checks to see if the lid has just been closed. If the lid was already closed then block 853 is skipped, but if the lid has just been closed control proceeds to block 853, where the SCP actuates line 417 to cause the speaker 392 to beep, and then deactuates the BLON line in order to turn the backlight 431 off. It should thus be noted that if the lid is closed during system operation the system does not automatically enter standby mode or suspend mode, but instead simply beeps to warn the user that the system is still active, and turns off the backlight for the LCD in order to conserve power.

If it was determined at block 851 that the lid is open, then at 854 the SCP checks to see if the LCD is currently the active display, and if it is checks at 855 to see if the backlight timer has expired, and if the backlight timer has not expired proceeds to block 856 where it ensures that the BLON signal is actuated in order to turn on the backlight 431. On the other hand, if the LCD display is not active or the backlight timer has expired, then at block 857 the SCP deactuates the BLON signal to turn off the backlight. Thus, if the user does not press any key for a predetermined period of time specified by the backlight preset at 771, the backlight is automatically turned off in order to conserve power, but will be automatically turned back on when the user again presses a key. After appropriately controlling the backlight, the SCP proceeds to 858, where control is returned to the calling routine.

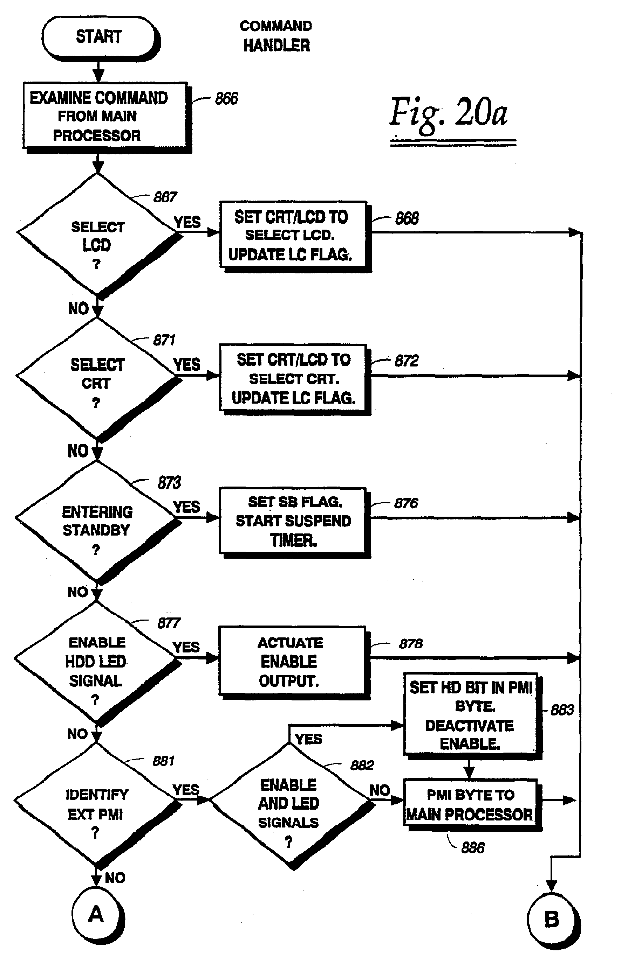

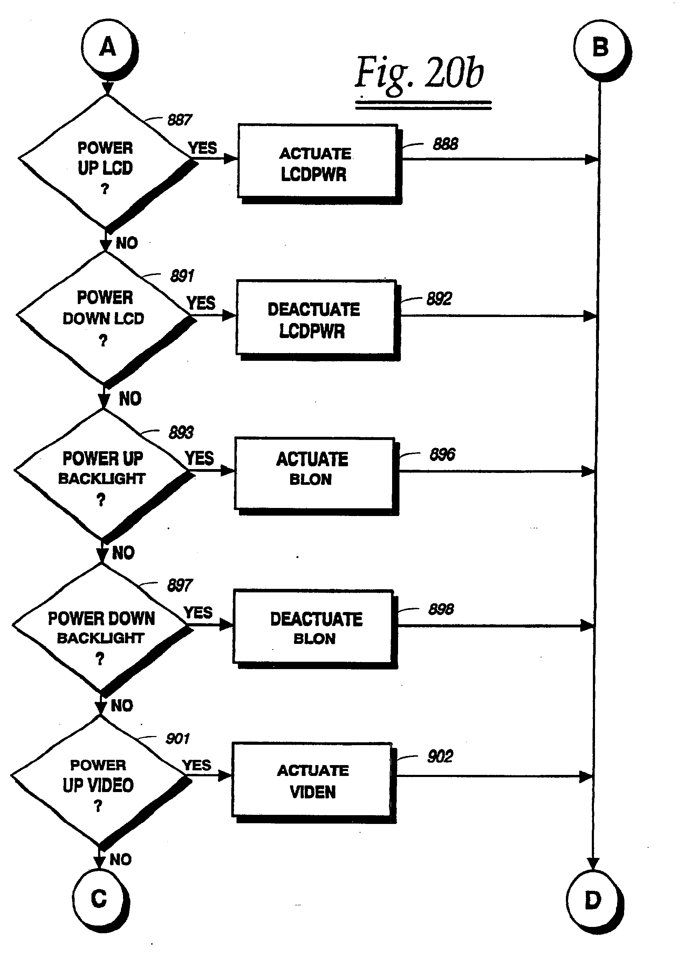

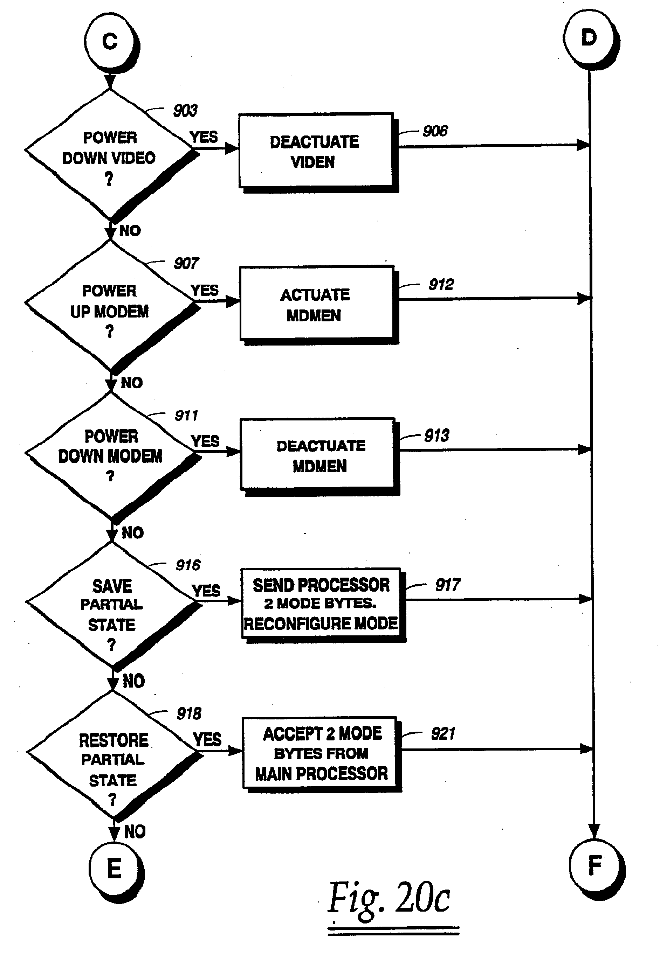

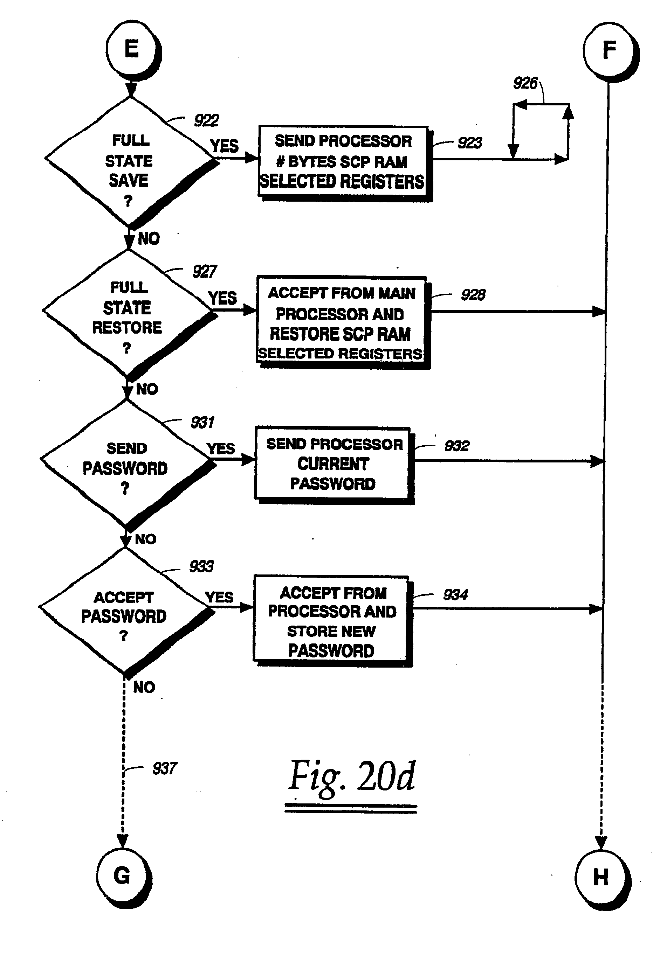

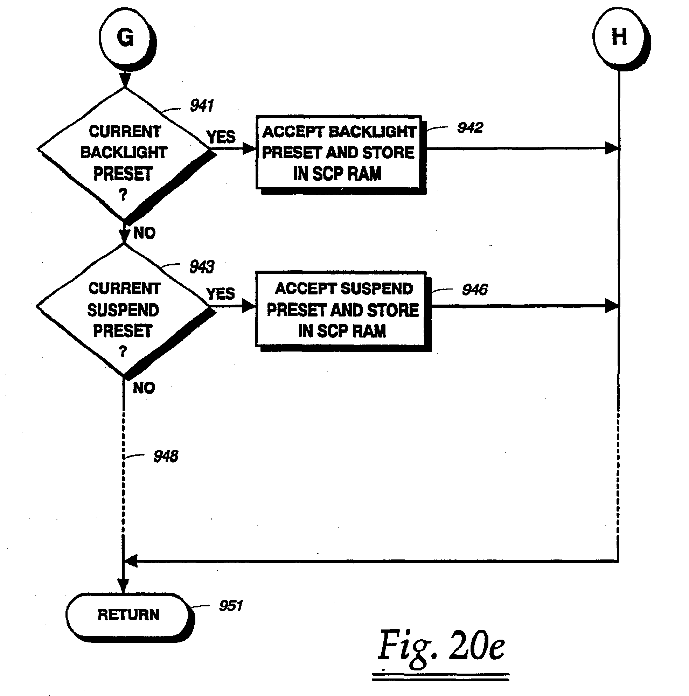

A further event which can interrupt the SCP from the main routine shown in Figure 17 occurs when the main processor sends a command to the SCP, the loading of this command into an interface register automatically generating an interrupt to the SCP. The interrupt routine which handles the command is shown in Figure 20. At 866 in Figure 20, the SCP examines the command which the main processor has sent it. At 867, if the command indicates that the SCP is to select the LCD as the active video display, control proceeds to block 868, where the SCP sets the CRT/LCD output to select the LCD 321, and then updates the LC flag (Figure 15) to reflect this setting. On the other hand, if it were determined at 867 that the command was not to select the LCD, but it was determined at 871 that the command was to select the external CRT 426 as the active display unit, then control would proceed to block 872, where the SCP would set the CRT/LCD line to select the CRT, and update the LC flag. Otherwise, control would proceed to block 873, where the SCP would check to see if the command was an indication that the main processor was entering standby mode, in which case the SCP would proceed to block 876, where it would set the SB flag to indicate that the main processor was in standby mode, and would take the preset value from location 772 (Figure 16) and place it in location 774 if it is a positive number, in order to start the suspend timer.

If it were determined at 877 that the command was to enable the LED signal from the hard disk, the SCP would actuate its ENABLE output to the gate 438 at block 878. Otherwise, if it were determined at block 881 that the command was a request for the SCP to identify the reason for generation of a PMI through actuation of the EXTPMI signal, control would proceed to block 882, where it would check to see if the ENABLE signal to the gate 438 and the LED signal from the hard disk 323 were both actuated, in which case it would proceed to block 883 and set the HD bit in the PMI byte 776. In either case, at 886 it would send the PMI byte to the main processor. If the SCP proceeded directly from block 881 to block 887, and determined there that the command was to power up the LCD, then at block 888 it would actuate the LCDPWR line to the LCD 321. Otherwise, it would proceed to block 891, and if it determined there that the command was to power down the LCD, at block 892 it would deactuate the LCDPWR line to the LCD.

If the SCP proceeded directly from block 891 to block 893 and determined there that the command was to power up the backlight, it would proceed to block 896 and actuate the line BLON in order to turn on the backlight. Otherwise, it would proceed to block 897, and if it determined there that the command was to power down the backlight, it would proceed to block 898 where it would deactuate the BLON line in order to turn off the backlight.

In a similar manner, if the SCP proceeded from block 897 to block 901 or 903 and determined that the command was to power up or power down the video controller, it would proceed to one of blocks 902 and 906 and either actuate or deactuate the VIDEN signal in order to appropriately control the power to the video controller. Likewise, if the SCP proceeded to block 907 or 911 and determined that the command was to power up or power down the modem, it would proceed to one of the blocks 912 and 913 and actuate or deactuate the MDMEN signal in order to appropriately control the power to the modem.

If the processor proceeded through blocks 907 and 911 to block 916 and determined that the command was to do a partial state save, control would proceed to block 917, where the SCP would send the main processor the two mode bytes 778 and 779 (Figure 16), and then set the location 778 and 779 in the RAM 440 to a default configuration which would ensure that information could be sent from the keyboard through the SCP to the main processor, and thus for example the KE flag would be set to indicate that the keyboard is enabled. Otherwise, the SCP would proceed to block 918, and if it determined there that the command was to do a partial restore of the SCP, it would accept two mode bytes from the main processor at 921 and place those mode bytes into locations 778 and 779 of the RAM 440.

If the SCP proceeded through blocks 916 and 918 to block 922, and determined there that the command was to effect a full state save of the SCP, it would proceed to block 923, where it would send the main processor a value representing the total number of bytes to be sent to the main processor, followed by the entire contents of the SCP RAM 440, and selected internal registers of the SCP. Then, the SCP would enter a continuous loop at 926 (for example by executing an instruction which performs an unconditional branch to itself), and wait for the main processor to turn off the power to the SCP as a part of the process of placing the system in the suspend mode.

If the SCP proceeded from block 922 to block 927, and determined that the command was to effect a full restoration of the state of the SCP, it would proceed to block 928, accept information from the main processor, and place this information in the SCP RAM and selected registers of the SCP.

If the SCP proceeded to block 931 and determined that the command was to send the main processor the current password, the SCP would proceed to block 932, and would take the password stored at 763 (Figure 15) in the EEPROM 439 and send it to the main processor. Otherwise, the SCP would proceed to block 933, and if it determined there that the command was to accept a new password from the main processor, it would proceed to block 934, where it would accept a new password from the main processor and store it in the location 763 of the EEPROM.

In a similar manner, each of the other items stored in the EEPROM 439 are capable of being sent to the main processor and updated by the main processor in response to respective commands. This is handled in a manner similar to that shown above for the password at blocks 931-934, and thus these separate commands are not all illustrated, but instead a broken line at 937 is provided to diagrammatically represent their existence. If the command is not any of these, then at 941 the SCP checks to see if the command is an instruction to accept a preset value for the backlight timer, in which case at 942 the SCP accepts the preset value and stores it at 771 in the SCP RAM 440. Similarly, if it is determined at 943 that the command is to accept a suspend timer preset, then at 946 the SCP accepts the suspend timer preset and stores it at 772 in the RAM 440.

There are other commands which are not pertinent to an understanding of the present embodiment and which are thus not illustrated and described in detail, but a broken line has been provided at 948 in order to diagrammatically represent their existence. Upon completing the execution of each command, control proceeds to block 951, which transfers control back to the calling routine.

Another alternate embodiment of the invention is best described in reference to Figure 14. In block 726, reinitialization of the hard disk drive requires several seconds to complete because the hard disk drive must be brought up to speed. In an alternate embodiment, reinitialization of the hard disk drive would be removed from block 726 except for asserting power to the hard disk drive, setting a flag indicating that hard disk accesses are not allowed, and starting a timer which will generate an interrupt two or three seconds later. At the timer interrupt, when the disk drive is up to speed, the disk initialization procedure is completed and the flag preventing hard disk drive access is cleared. Under this approach, all hard disk drive accesses must be trapped by the PMI handler, and the access flag must be checked before a hard disk drive access is allowed to proceed. This allows the processor to run the application program during the time required for the hard disk drive to get up to speed, rather than waiting for the hard disk drive to come up to speed before resuming execution of the application program. The net result is a much faster resumption from suspend mode for any application that does not require an immediate hard disk access upon resuming from suspend mode.

Turning now in more detail to the hard disk drive 323 of Figure 1, the hard disk drive includes a not-illustrated conventional microprocessor which controls the output lines LED and IRQ14, which is coupled to a not-illustrated ROM in drive 323 containing a program executed by the microprocessor and to a not-illustrated RAM in drive 323, which is interfaced to the busses 337-339 in order to communicate with the main processor 311, and which is interfaced to a conventional and not-illustrated physical drive located within disk drive 323. The physical drive includes conventional components such as one or more rotating magnetic platters, one or more movable read-write heads each engagable with a platter surface, a mechanism for moving each head relative to its platter, and the electrical support circuitry for each head. All of the signals which couple the hard disk drive to other parts of the system are part of an industry standard interface for hard disk drives, and thus the hard disk drive uses conventional cables and connectors. In fact, the hard disk drive 323 is a conventional hard disk drive, except that the program stored in its ROM and executed by the microprocessor includes some changes which are discussed in detail later.

The microprocessor of the hard disk maintains certain status information which can be passed to the main processor 311 on request, including a DRQ status bit which is set when the hard disk drive is carrying out a command and a BSY bit which can be repeatedly set and reset as a given command is carried out in order to provide handshaking information which facilitates transfer of data between the processor 311 and the hard disk drive 323. The DRQ bit is the bit tested at block 601 in Figure 8 and at 671 in Figure 12 in order to determine whether the hard disk drive is busy. The present invention involves changes to the program stored in the ROM of the hard disk drive, but aside from this the hard disk drive 323 is structurally conventional in all respects.

In order to facilitate an understanding of the operation of the hard disk drive, some additional detail is appropriate regarding a few of the flowchart blocks described above in association with Figures 12 and 14.

More specifically, in Figure 12, it has previously been explained that block 676 obtains and saves the internal state of the hard disk drive. In order to effect this, the processor 311 sends a SUSPEND command to the hard disk drive 323 in order to tell the hard disk drive that the system is going to enter the suspend state, subsequently sends a REQUEST command to the hard disk drive 323 in order to cause the hard disk drive 323 to send its internal state to the main processor 311 in the form of a 512 byte block of data, and then accepts the 512 byte block of data from the hard disk drive and saves it in the portion 482 of the PMRAM (Figure 3). Turning now to block 726 in Figure 14, it has previously been explained that the processor powers up the hard disk and restores its state. On a more specific level, after restoring power to the hard disk drive, the processor 311 sends the hard disk drive 323 a RESTORE command which tells the hard disk drive that the 512 byte block of data saved at block 676 in Figure 12 is about to be returned to the hard disk drive, and then sends the 512 byte block to the hard disk drive, the hard disk drive accepting the block and using the contents of the block to restore its registers and other volatile memory locations to the precise state which they had when entry to the suspend mode was initiated.

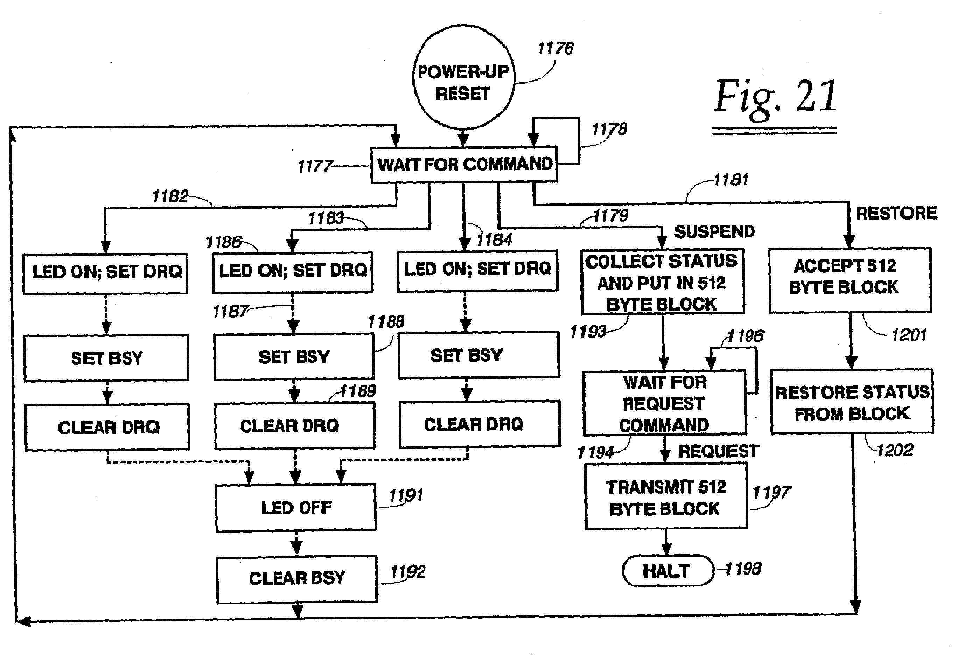

Figure 21 is a flowchart showing portions of the program which is stored in the ROM of the hard disk drive 323 and which is executed by the microprocessor of the hard disk drive. A power-up reset situation causes execution to start at 1176, and to proceed to 1177 where, as shown diagrammatically at 1178, the disk microprocessor waits for the processor 311 to send it a command. When a command is received, control proceeds to one of several different routines in dependence on the specific command. In particular, if the command is a SUSPEND command or a RESTORE command, control proceeds as shown respectively at 1179 and 1181, whereas other commands which are conventional cause control to proceed along respective paths designated at 1182, 1183 and 1184. For purposes of the present invention, it is sufficient to briefly describe one of these other commands, for example the command corresponding to a transfer at 1183 to block 1186. This might, for example, be a command instructing the hard disk drive 323 to accept a block of data from the processor 311 and to store this data on the hard disk of the physical drive section. At 1186, the microprocessor sets the LED line in order to turn its LED on, the LED providing visual indication that the hard disk drive is carrying out an operation. Then, the microprocessor sets the DRQ bit, so that if the processor 311 requests status information the DRQ bit will indicate that the hard disk drive is carrying out an operation. Then, as indicated diagrammatically by the broken line at 1187, the microprocessor carries out the specific steps necessary to carry out the command.

For example, in the case of a transfer of a block of data from the processor 311 to the hard disk in the physical drive section, the disk microprocessor can toggle the busy bit BSY to provide an indication of when it is ready to accept each byte, and the processor 311 can monitor the BSY bit and supply an additional byte each time the BSY bit is cleared. The microprocessor initially stores these received bytes in its RAM. After a predetermined number of bytes have been transferred, which may for example be equal to the number of bytes in a sector of the hard disk, the processor 311 may return to other processing while the disk microprocessor retrieves these bytes from the RAM and stores them on the hard disk in its physical drive section. Then, the disk microprocessor can send an IRQ14 signal in order to interrupt the processor 311, causing the processor 311 to send another portion of the data block which is to be stored. This is all represented diagrammatically in Figure 21 by the broken line 1187.

Toward the end of execution of the command, the disk microprocessor reaches a point at block 1188 where it sets the BSY bit for the last time, for example where it has accepted from the processor 311 the very last byte to be stored. It then proceeds to store this information on the hard disk in the physical drive section and to do any associated final housekeeping, and at some point during this process it clears the DRQ bit and, at block 1191, deactuates the LED line to turn the LED off. Thereafter, at 1192, the microprocessor clears the BSY bit. It is a requirement of the present invention that, at the completion of a command, the LED be turned off before the BSY bit is cleared, for the following reason.

As described above, when the system is attempting to enter the suspend mode, the processor 311 checks the DRQ bit (at 601 in Figure 8 and at 671 in Figure 12). If the drive microprocessor is in the middle of a command, for example at 1187 in Figure 21, the DRQ bit will be set, and thus the processor 311 will cause the LED line to be enabled and will then return control to the application program to wait for the hard disk drive 323 to complete what it is doing. It is important that the application program not be able to instruct the hard disk drive to start a new command. So long as the BSY bit is set, the application program which the processor 311 is executing will not try to send the hard disk drive 323 a new command. Further, as also described above, when the disk microprocessor turns off its LED using its LED line, the same signal will propogate through gates 438 and 433 to create another PMI interrupt which returns control of the processor 311 to the routine of Figure 4, at which point the application program no longer has control of the processor 311 and thus cannot tell the hard disk drive to begin a new command. Therefore, with reference to blocks 1191 and 1192 in Figure 21, keeping the BSY bit set at the end of the command until the LED is turned off ensures that the BSY bit will keep the application program from starting a new command until the deactuation of the LED occurs and creates an interrupt which shifts control of the processor 311 from the application program to the PMI handling routine, which can then proceed with the suspend operation.

At this point, the PMI handling routine would proceed to block 676 in Figure 12 where, as described above, the processor 311 sends the hard disk drive a SUSPEND command. In Figure 21, this causes the disk microprocessor to proceed at 1179 from block 1177 to block 1193, where it collects every facet of its current status and formulates in its RAM a 512 byte block of data which includes all of this status. The status may take up only a portion of the 512 available bytes, and the remaining bytes can in fact be "garbage". Then, at block 1194, the disk microprocessor waits for a request command from the processor 311, as shown diagrammatically at 1196. Eventually, the processor 311 sends the REQUEST command. In response to the REQUEST command, the disk microprocessor proceeds from block 1194 in Figure 21 to block 1197, where it transmits to the processor 311 the 512 byte block of data it formulated in its RAM. Then, at block 1198, the disk microprocessor halts, and waits for the processor 311 to shut off power to the hard disk drive 323 in the manner already described above.

When the processor 311 eventually exits from the suspend mode, it will turn the power to the hard disk drive 323 back on, as discussed above. In Figure 21, this produces a power-up reset event which forces the disk microprocessor to block 1176 in Figure 21, following which the microprocessor, typically after doing some initialization, proceeds to block 1177, where it waits at 1178 for a command from the processor 311. Meanwhile, the processor 311 sends the RESTORE command to the hard disk drive 323. This causes the disk microprocessor to proceed at 1181 from the block 1177 to the block 1201, where it accepts the 512 byte block which the processor 311 is transmitting. This is, of course, precisely the 512 byte block which the disk microprocessor sent to the processor 311 at block 1197, and thus at block 1202 the disk microprocessor can use the data in this block to completely restore every facet of the status which was present in hard disk drive before its power was turned off.

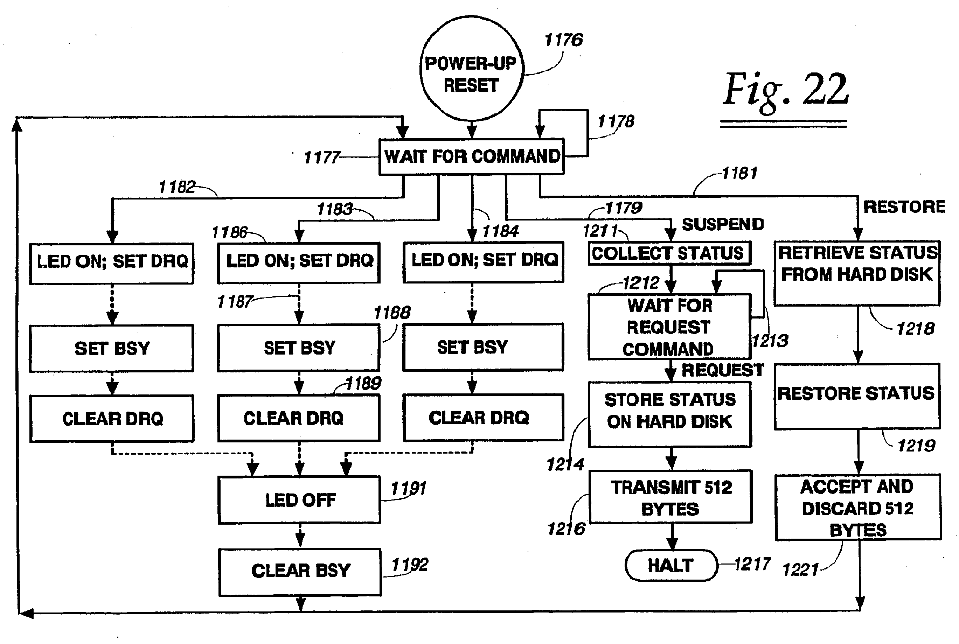

Figure 22 is a flowchart showing an alternative embodiment of the program of Figure 21. Equivalent elements in Figures 21 and 22 are designated with identical reference numerals. Only the differences are described in detail below.

More specifically, in response to the SUSPEND command, the disk microprocessor proceeds at 1179 from block 1177 to block 1211 of Figure 22. In block 1211, the microprocessor collects every facet of its status. Then, in block 1212, the disk microprocessor waits for the REQUEST command from the processor 311, as shown diagrammatically at 1213. When the REQUEST command is received, the disk microprocessor proceeds to block 1214, where it stores the collected status on a reserved portion of the hard disk in its own physical drive section. Then, at block 1216, it transmits 512 bytes to the processor 311. These 512 bytes may be undefined "garbage" data, and are transmitted only for purposes of compatibility (because the processor 311 expects to receive and store 512 bytes). Then, the microprocessor halts at 1217 and waits for its power to be turned off. After power is turned back on, the disk microprocessor receives the RESTORE command from the processor 311, and proceeds at 1181 from block 1177 to block 1218, where it retrieves the status information which it stored on the hard disk in block 1214, and then restores from this stored data at block 1219 every facet of the status which the hard disk drive 323 had before its power was turned off. Then, at block 1221, it accepts the 512 bytes which the processor 311 sends, but it simply discards this data because it has no need for it.

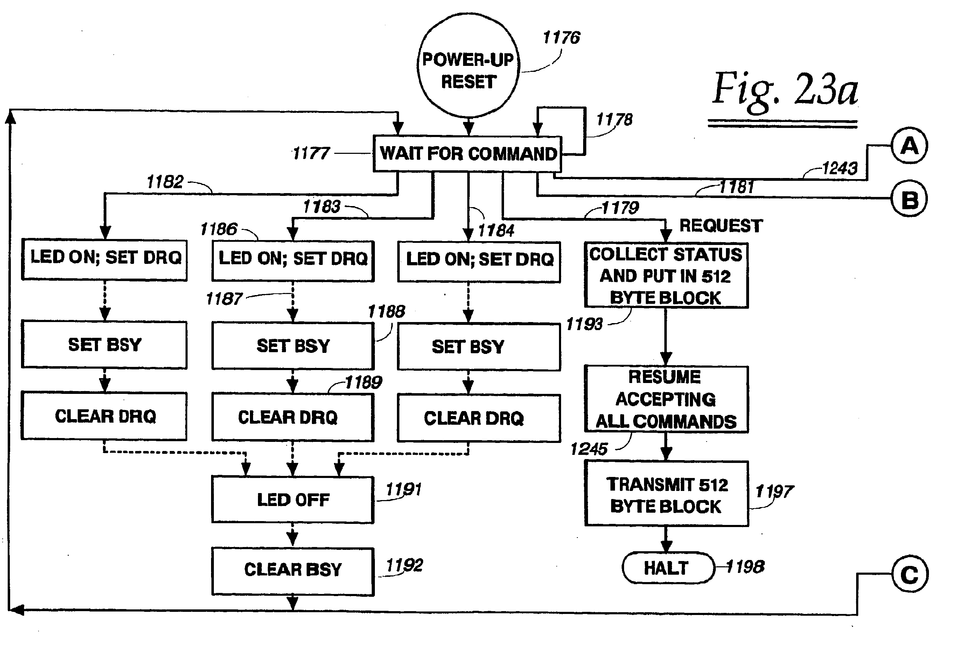

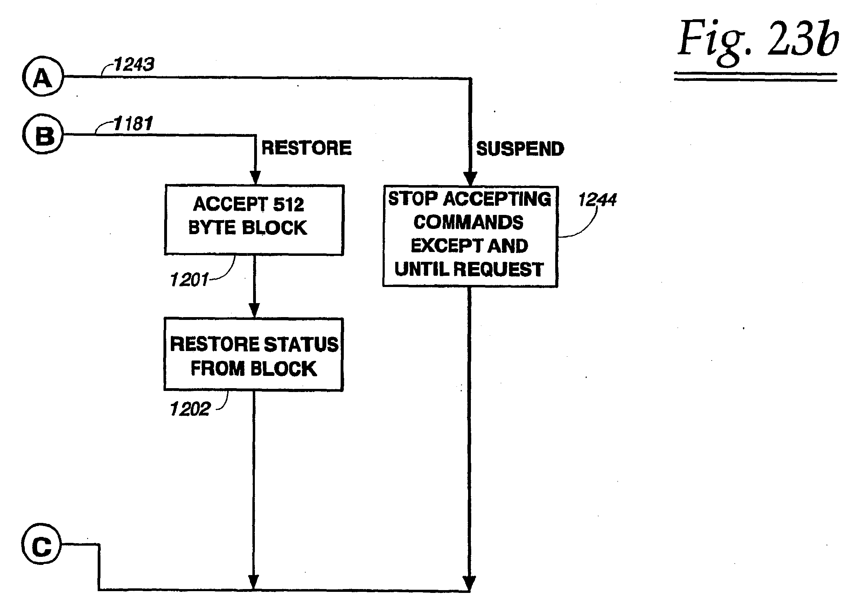

Figure 23 is a flowchart similar to Figure 21 but showing another alternative embodiment of the invention. Elements in Figure 23 which are equivalent to elements in Figure 21 are designated with the same reference numerals. Only the differences are described in detail below.

More specifically, in the embodiment of Figure 21, it is a requirement that the hard disk control its LED line in a specific manner, in particular by promptly deactuating it as soon as the current command has been completed. There are some disk drives which may have difficulty with this approach, but on the other hand it is possible to send these drives a command while they are in the process of executing another command. Thus, in Figure 12, regardless of whether it is determined in block 671 that the hard drive is busy, a SUSPEND command is immediately sent to the disk drive at 672 or 676.

In Figure 23, receipt of the SUSPEND command causes control to proceed at 1243 to block 1244, where the disk drive enters a mode where it ignores further commands other than the REQUEST command. While waiting for the REQUEST command, the drive completes the activity which is already in progress. Then it deactuates its LED line in order to indicate that at some point the activity has been completed, after which the processor sends the REQUEST command. In response to the REQUEST command, the disk drive formulates the 512 byte block at 1193, then resumes accepting all commands at block 1245, and then at block 1197 transmits the 512 byte block to the processor.

In the embodiment disclosed in Figures 1-20, power is supplied to the main memory 326 during suspend in order to maintain the information stored there. In a variation, a portion of the hard disk 323 is reserved, the entire contents of the main memory are written to the reserved portion of the hard disk after the status of all devices had been saved to the main memory, then both the hard disk and main memory are powered down, and then the processor enters the suspend state. Upon resuming, steps with the opposite effect are carried out in reverse order to restore the system. This is slower than the approach taken in the preferred embodiment, but uses less power and thus allows the system to remain in suspend longer on a single battery charge. By using conventional compression techniques on the data from the main memory being stored on the disk, the amount of space required on the disk could be reduced, but the time required to enter and exit from suspend mode would increase as a result of the extra time required for compression and uncompression of the data.

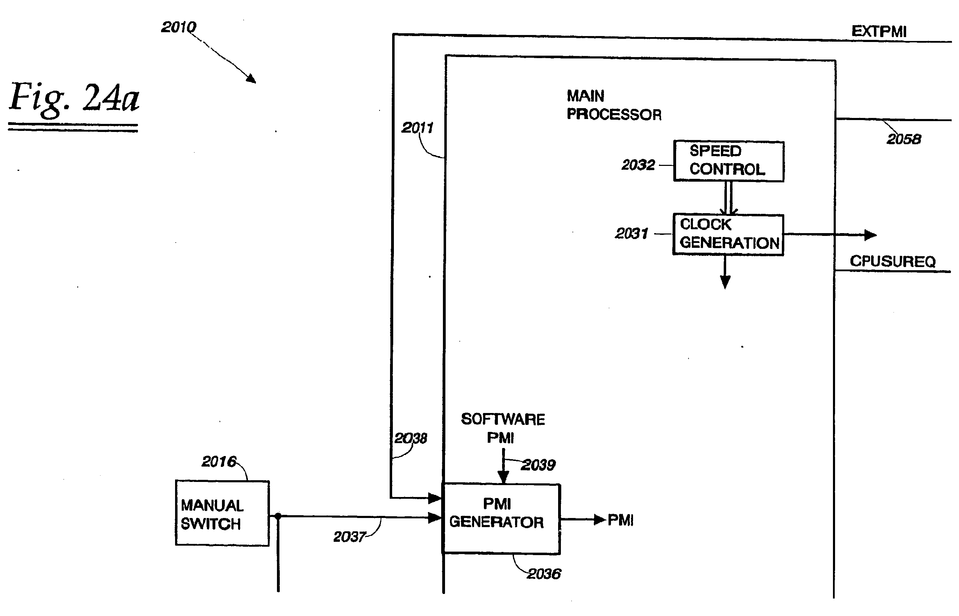

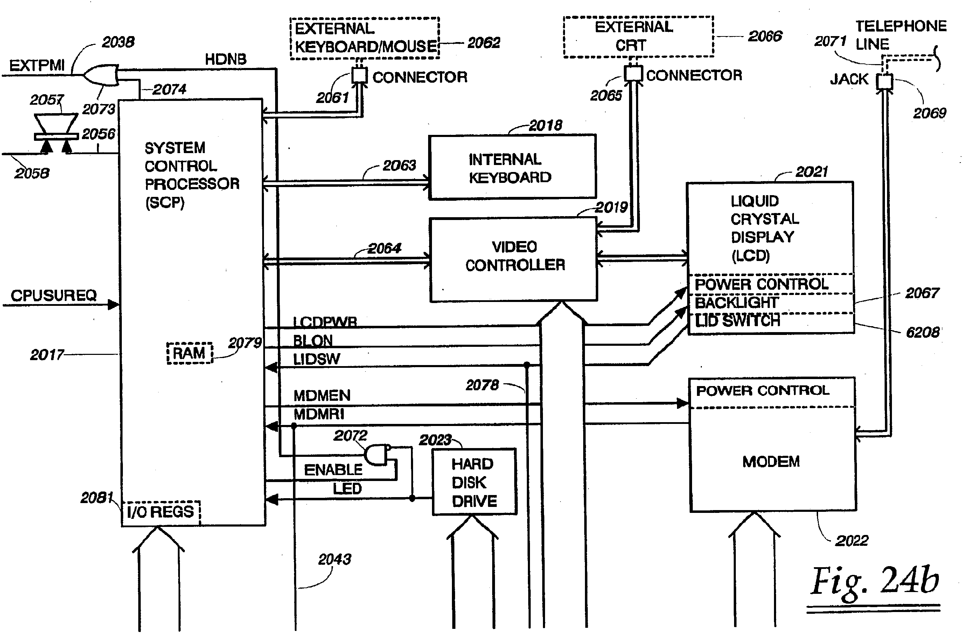

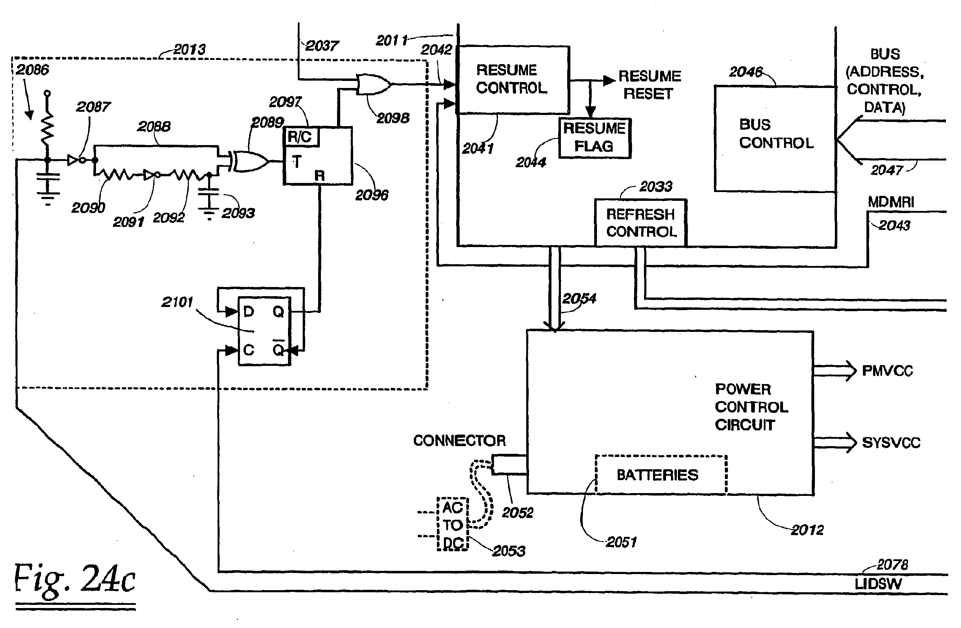

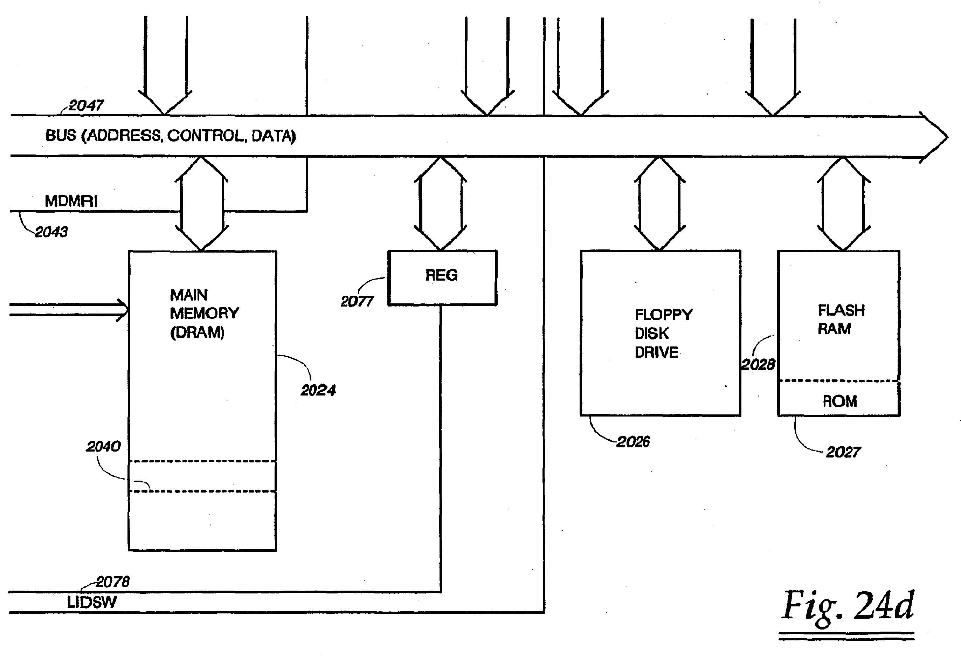

Figure 24 is a block diagram of a system 2010 which is a variation of the system 310 of Figure 1. The computer system 2010 includes a main processor 2011, a power control circuit 2012, a signal processing circuit 2013, a manually operable power control switch 2016, a system control processor (SCP) 2017, an internal keyboard 2018, a video controller 2019, a monochrome liquid crystal display (LCD) 2021, a modem 2022, a hard disk drive 2023, a main memory 2024 implemented with dynamic random access memory (DRAM) chips, a floppy disk drive 2026, a read only memory (ROM) 2027, and a flash RAM 2028. The main processor 2011 is implemented with the Intel 386SL. Components in Figure 24 Which correspond functionally to components in Figure 1 are not described again in detail here.

The processor 2011 includes a power management interrupt (PMI) generator 2036, which generates the PMI interrupt in response to several conditions, three of which are shown in Figure 24. The first is the occurrence of a signal on a line 2037 in response to manual actuation of the manual switch 2016, the second is a signal EXT PMI on a line 2038 from an external source, and the third is an interrupt which is internally generated by software running in the processor 2011 and which is indicated diagrammatically at 2039.

The processor 2011 has several conventional modes of operation, one of which is an "unprotected" mode in which the program running in the processor 2011 has access to all operational capabilities of the processor 2011, whereas the other modes are "protected" modes in which the program running in the processor 2011 has different degrees of accessibility to the operational capabilities. The occurrence of a PMI interrupt automatically forces the processor into the unprotected mode of operation, while the restore instruction will restore the processor to the mode of operation which it was in at the time the PMI interrupt occurred. Consequently, an application program which is running in one of the protected modes can be interrupted, the processor can carry out various functions in the unprotected mode without any of the limitations which would be present in one of the protected modes, and then the application program can be resumed from the point at which it was interrupted with its own protected mode back in effect.

A resume control circuit 2041 is responsive to several conditions, two of which are shown in Figure 24. The first is an output signal on line 2042 from the signal processing circuit 2013, which is described in more detail later. The other is a modem ring indicator signal MDMRI on a line 2043 from the modem 2022. When the system is in the suspend mode and a signal occurs on one of the lines 2042 and 2043, the resume control circuit 2041 produces a resume reset which internally resets the main processor 2011 and which also sets a resume flag 2044. The resume flag 2044 remains set in order to provide an indication to the software that the reset was the result of a resume event and not a standard system reset of the type which occurs when power is first applied to the system. The reset causes the processor to begin executing a special software routine in the flash RAM 2028, as described in more detail later.

Turning to the System Control Processor 2017, the SCP in the preferred embodiment is based on an Intel 87C51GB microprocessor, but other commercially available microprocessors could also be used for the SCP.

A register 2077 is coupled to the bus 2047 and produces an output on a line 2078 which is coupled to an input of the signal processing circuit 2013 and which is discussed in more detail later.

The signal processing circuit 2013 includes an R/C divider 2086 tied to the LIDSW output from the lid switch 2068, and an inverter 2087 which has an input connected to the signal LIDSW. The output 2088 of the inverter is connected to one input of a two-input exclusive-OR gate 2089, and through a resistor 2090 to an input of a further inverter 2091. The output of inverter 2091 is coupled through a resistor 2092 to the other input of the gate 2089, which is coupled to ground by a capacitor 2093. The output of the gate 2089 is connected to the trigger input of a monostable multivibrator or "one-shot" 2096, the time period of which is controlled by an R/C network 2097. When the lid switch 2068 closes or opens, the change in the state of its output signal LIDSW is applied through inverter 2087 on line 2088 to one input of the gate 2089, causing the output of gate 2089 to change, and a short period of time later is applied through resistor 2090, inverter 2091 and resistor 2092 to the other input of the gate 2089, causing the output of the gate 2089 to return to its original state. Thus, every time the lid switch 2068 opens or closes, the exclusive OR gate 2089 will produce a pulse equal in length to the propogation delay through the circuit branch containing resistor 2090, inverter 2091, resistor 2092 and capacitor 2093. This pulse will trigger the one-shot 2096, so that it produces an output which is applied to one input of an OR gate 2098, the other input of which is coupled to the output 2037 from the manual switch 2016. The output of the OR gate 2098 is the line 2042, which is connected to the resume control portion 2041 of the main processor 2011.

The signal processing circuit 2013 also includes a D-type flip-flop 2101 having a clock input to which is coupled the line 2078 from the register 2077. The inverted output of the flip-flop is connected to the D input, so that the flip-flop changes state or "toggles" each time the signal on line 2078 changes from a logic low to a logic high. The output of the flip-flop 2101 is connected to a reset input of the one-shot 2096. Consequently, by appropriately controlling the register 2077, the main processor 2011 can set or reset the flip-flop 2101, so that it enables or disables the one-shot 2096 and thus permits or prevents the one-shot 2096 from producing an output in response to a pulse from the gate 2089.

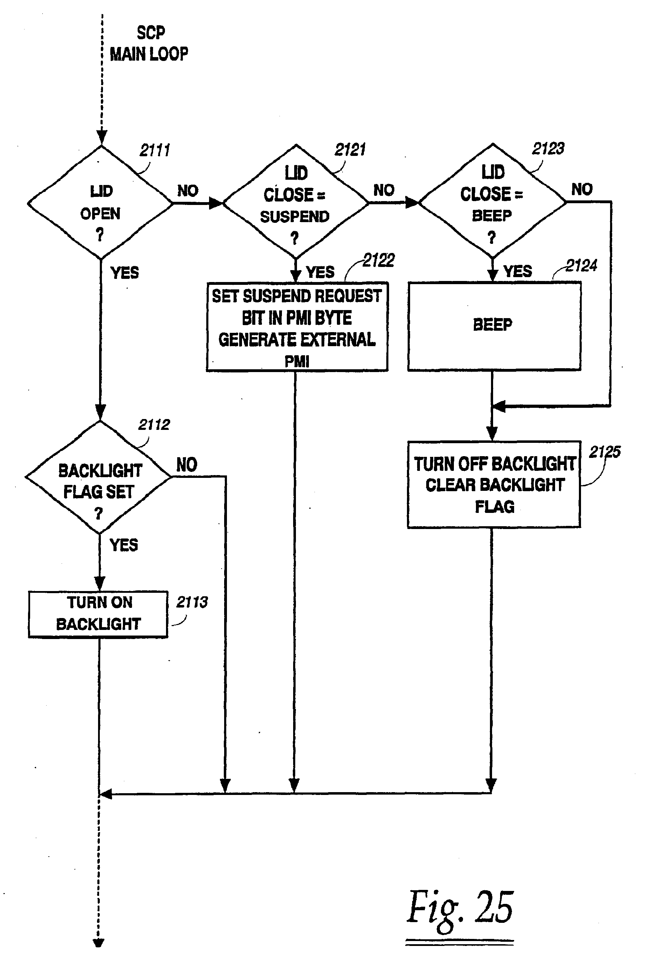

Figure 25 is a flowchart of a portion of a main loop from the operational program executed by the SCP 2017. Only the portion of the loop which is pertinent to an understanding of the present invention is shown and described in detail. In particular, this portion begins at block 2111, where the SCP checks the LIDSW signal (Figure 24) in order to determine the state of the lid switch 2068 and thus whether the lid is open. If the lid is open, then at block 2112 the SCP checks an internal flag to determine whether the backlight is presently supposed to be on, and if so then the SCP turns on the backlight at block 2113 and then continues with the main loop. on the other hand, if it is determined at block 2112 that the backlight is not supposed to be on, then block 2113 is skipped and the main loop continues.

If it was determined at block 2111 that the lid is closed, then control proceeds to block 2121, where a check is made to determine what is to happen when the lid is closed. In particular, the user is allowed to configure the system set-up information to specify that a lid close is to (1) place the system in the suspend mode, (2) turn off the backlight without stopping the system from operating, or (3) produce an audible beep and turn off the backlight without stopping system operation. If it is determined at block 2121 that the user wants the system to enter the suspend mode if the lid is closed, the control proceeds to block 2122, where the SCP sets a suspend request bit in a PMI byte. The PMI byte is a byte (8 bits) which is sent on request to the main processor in order to inform the main processor of the reason why the SCP generated a PMI interrupt. Then, also in block 2122, the SCP produces a signal on output line 2074 (Figure 24) in order to produce an external PMI to the main processor, which is handled in a manner described later. Alternatively, instead of producing the external PMI interrupt in block 2122, the SCP could set a flag in block 2122 which causes an entirely different portion of the SCP program to actually generate the PMI interrupt upon noting that the flag has been set.

If it is determined in block 2121 that a lid close is not to cause the system to be placed in suspend mode, then control proceeds to block 2123, where a check is made to see if an audible beep is to be produced when the lid is closed. If so, then the beep is produced at block 2124. In either case, control proceeds to block 2125, where the SCP turns off the backlight and clears the backlight flag. From blocks 2122 and 2125, execution of the main loop continues.

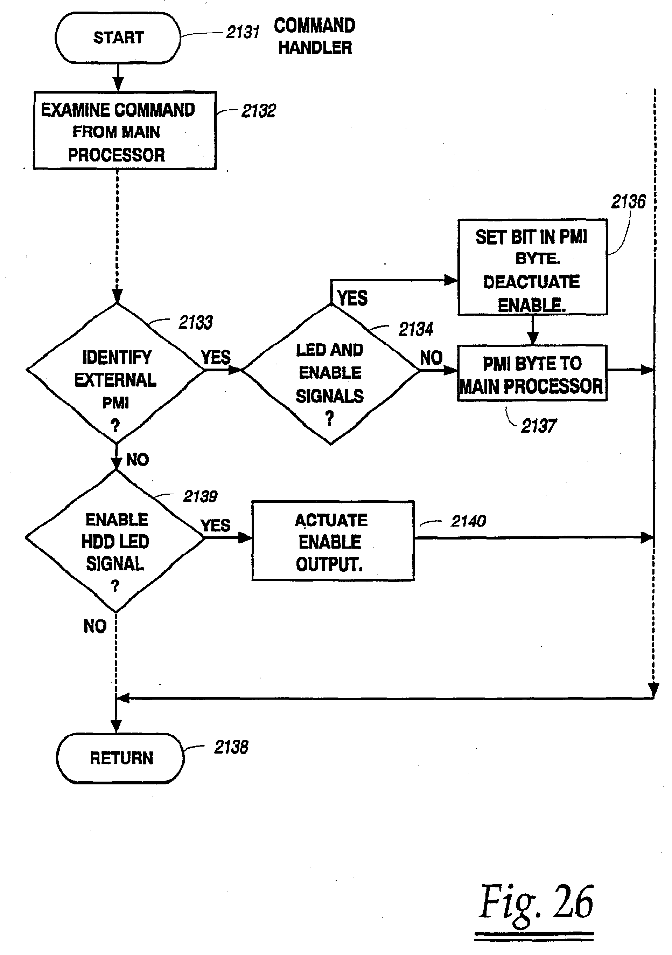

An event which can interrupt the SCP from the main routine shown in Figure 25 occurs when the main processor sends a command to the SCP. The loading of this command into an SCP interface register 2081 by the main processor automatically generates an interrupt to the SCP. The interrupt routine which handles the commands is shown in the flowchart of Figure 26. The command handler of Figure 26 is capable of handling a number of commands, only two of which are pertinent to the present invention and are depicted in Figure 26. In particular, execution begins at block 2131, and at 2132 the SCP examines the command from the main processor. The SCP then attempts to identify the particular command so that it can be handled. In particular, control can eventually proceed to block 2133, where the SCP checks to see if the command is instructing it to identify why the SCP generated an external PMI interrupt to the main processor. If this is the command sent by the main processor, then control proceeds to block 2134, where the SCP checks to see whether its ENABLE output is active and the LED signal from the hard drive 2023 is simultaneous inactive, and if so proceeds to block 2136, where it sets a bit in the PMI byte to identify this condition and then deactuates its ENABLE output. Then, or if it was determined at block 2134 that the signals do not have the specified states, control proceeds to block 2137, where the SCP passes the PMI byte to the main processor 2011 through the registers 2081. Control then proceeds to block 2138, where the SCP exits the interrupt handler of Figure 26 and returns to the point in its main program at which it was interrupted.

If it was determined at block 2133 that the command is not a request to identify the source of an external PMI, then control proceeds to block 2139 where the SCP checks to see if the command is instructing it to enable the hard disk drive LED signal, or in other words to actuate its ENABLE output. If so, the SCP proceeds to block 2140, where it actuates its ENABLE output, and then continues to block 2138, where a return is made to the calling routine.

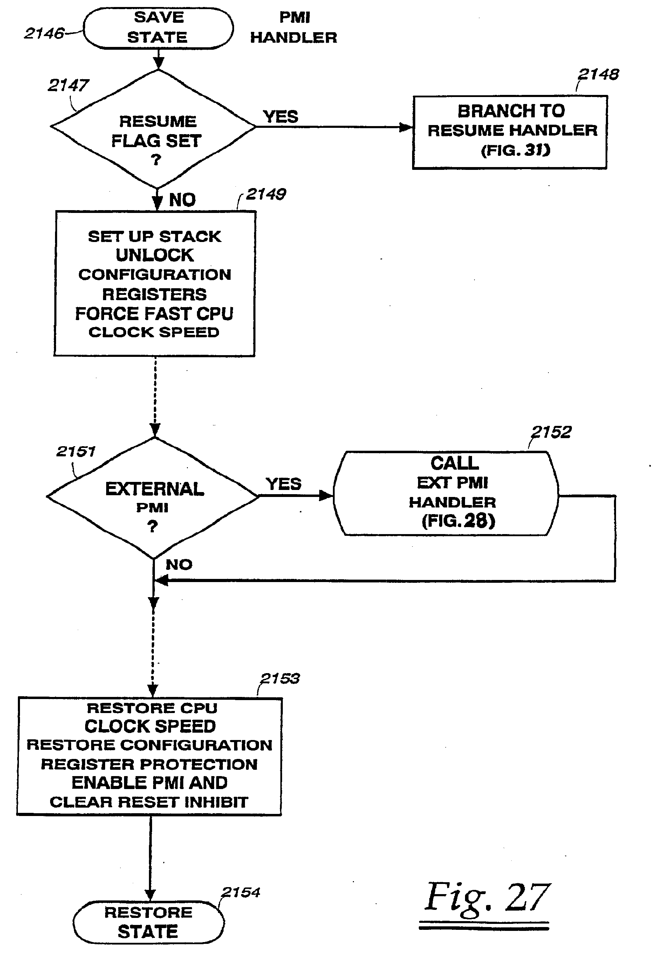

Figure 27 is a flowchart of pertinent portions of the special interrupt handling routine executed by the main processor 2011 when a PMI interrupt occurs. In particular, a PMI from any source causes the hardware of the processor 311 to automatically save its state in the portion 2040 of the main memory 2024, as shown at 2146 in Figure 27. Then, the processor automatically begins execution of the PMI handler routine (which is located at a predetermined point in the portion 2040 of the memory 2024). Regardless of the source of the PMI, the first thing the PMI handler does is to check the resume flag 2044 (Figure 24) in the processor 2011 in order to see whether the processor 2011 is in the process of resuming from a suspend state. If a resume is in progress, then at block 2148 control is transferred to a resume handler, which will be discussed later.

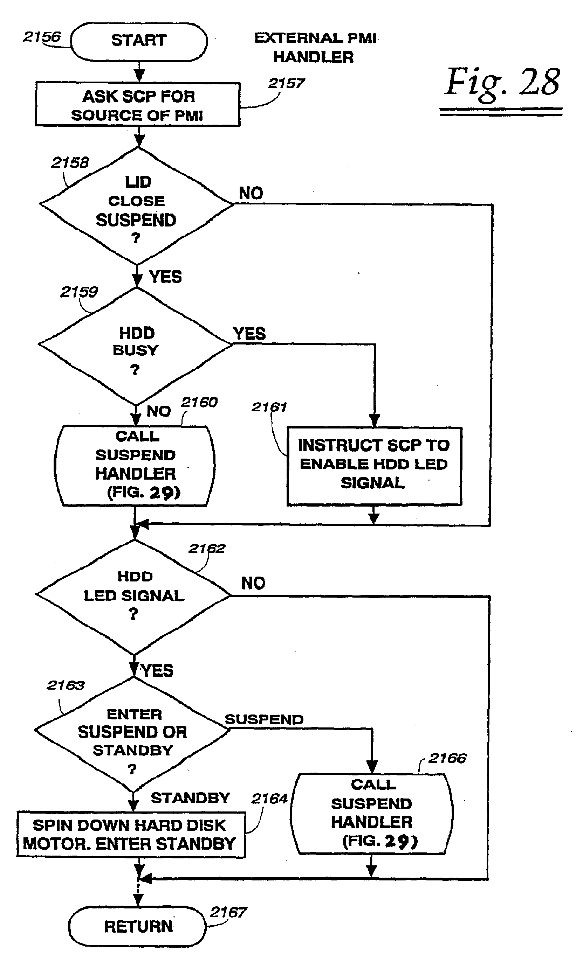

In the case of any other PMI, control proceeds to block 2149, where the processor sets up a special stack for use by the PMI handler, and unlocks configuration registers so that they can be altered, such as the control register 2032 which can be used to change the speed of the clock. Then, the processor changes the register 2032 in order to force the CPU to run at its fastest clock speed, so that the PMI routine will execute as fast as possible. The processor then proceeds to deal with various possible sources of the PMI, one of which is of interest and is shown at blocks 2151 and 2152. In particular, block 2151 checks to see if the PMI was generated as a result of a signal on the line 2038 from the SCP, and if so proceeds to block 2152, where an external PMI handler routine is shown in Figure 28 and is called. The external PMI handler routine will be described later.

After all possible sources of the PMI have been handled, control reaches block 2153, where the main processor restores to register 2032 the clock speed which was in effect when the PMI occurred, based on the information saved at block 2146. Then, the main processor locks the configuration registers, enables PMI interrupts, and clears an internal condition which prevents a reset from occurring during execution of the PMI handler routine. Then, at 2154, the processor executes a restore instruction which causes the hardware to restore to the CPU all of the state information which at block 2146 was saved in memory portion 2040, after which the CPU continues with execution of the program which was interrupted.

Figure 28 is a flowchart of the external PMI handler routine called by block 2152 in Figure 27. In Figure 28, execution begins at block 2156, and at block 2157 the main processor sends a command to the SCP asking it to identify the reason for the external PMI interrupt. The SCP returns the PMI byte (see blocks 2133-2134 and 2136-2137 in Figure 26). At block 158, the main processor checks the PMI byte to see if the SCP has initiated a request for suspend mode in response to closing of the lid. If so, then at block 2159 the main processor checks to see if the hard disk drive is busy. If it is not, then at block 2160 the main processor calls the suspend handler routine, which is described later. If the hard disk drive is busy, however, then implementation of the suspend mode must wait until the hard disk drive finishes whatever it is doing. The main processor therefore proceeds from block 2159 to block 2161, where it sends a command to the SCP which instructs the SCP to actuate its ENABLE output (see blocks 2139-2140 in Figure 26). From blocks 2160 and 2161, execution proceeds to block 2162. Execution can also proceed directly to block 2162 from block 2158 if it is determined at block 158 that the external PMI interrupt was not caused by closing of the lid.

At block 2162, the main processor checks the PMI byte from the SCP to see if the LED signal from the hard disk drive 2023 produced the PMI interrupt through the gates 2072 and 2073. If so, then at block 2163 the main processor checks to see whether it has been waiting for the hard disk drive to finish an operation so that it can enter suspend mode or so that it can enter another mode which is called standby and which is not pertinent to the subject matter of the present invention. If the system is to enter standby mode, then at block 2164 the processor turns off the hard disk drive motor, and enters the standby mode. Otherwise, at block 2166, the processor calls the suspend handler in order to enter the suspend mode. In either case, when the standby or suspend mode is eventually terminated, control proceeds to block 2167, where a return is made to the routine of Figure 27.

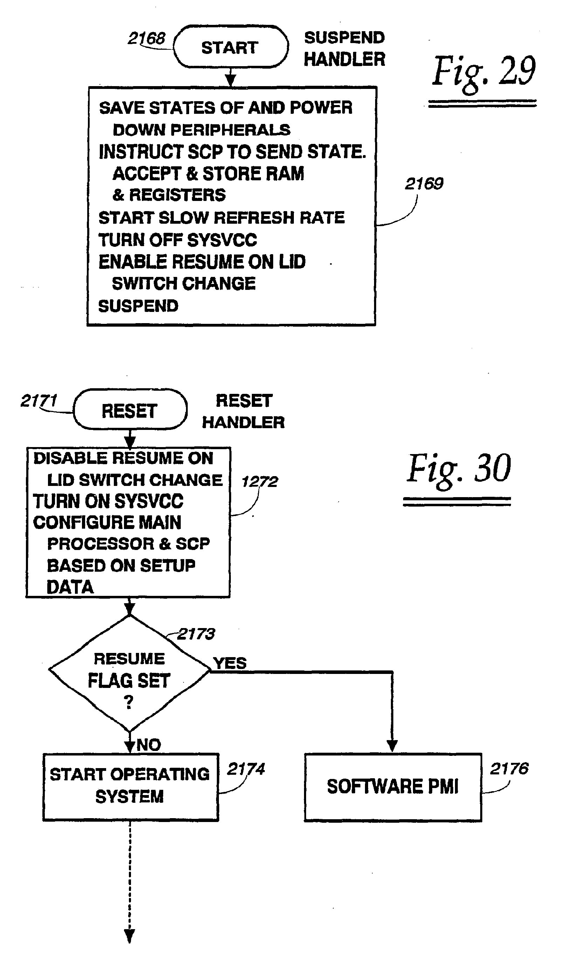

Figure 29 is a flowchart of the suspend handler routine. Execution begins at block 2168, and at block 2169 the main processor saves the states of various peripherals such as the hard disk drive 2023 and video controller 2019. The main processor also turns off power to certain peripherals. Then, the main processor sends a command to the SCP which instructs it to send its state to the main processor, and the main processor accepts and stores the contents of the RAM 2079 and all registers of the SCP. Then, the main processor sets the refresh control circuit 2033 to carry out a refresh of the main memory 2024 at a very slow rate, and instructs the power control circuit 2012 to turn off SYSVCC power, which is the power for most system components. Then, the main processor uses register 2077 to toggle the flip-flop 2101, which in turn enables the one-shot 2096 so that a signal from lid switch 2068 due to opening or closing of the lid will initiate a resume. The main processor then executes a special instruction which stops its own clock and which places it in the suspend mode, where power consumption is very low.

As previously mentioned, and with reference to Figure 24, the main processor 2011 exits the suspend mode when the resume control circuit 2041 receives a signal on line 2042 or 2043 and produces a resume reset, the resume reset setting the resume flag 2044. Any system reset, including the resume reset, causes the main processor 2011 to execute a special reset handler routine which is stored at a predetermined location in the flash RAM 2028 and which is shown in Figure 30. Execution of this routine begins at block 2171, and at block 2172 the main processor uses the register 2077 to toggle the flip flop 2101 and thus disable the one-shot 2096 so that, if the lid is opened or closed during normal operation, a further reset does not occur. The main processor then causes the power control circuit 2012 to turn on SYSVCC power, and then configures itself and the SCP for normal operation based on set-up data specified by the user in a conventional manner. Then, at block 2173, the processor checks the resume flag 2044 in order to see whether it is set. If it is not set, then the reset was a regular reset rather than a resume reset, and at block 2174 the processor starts the resident operating system. on the other hand, if the resume flag 2044 is set to indicate that a resume reset occurred, then at block 2176 the processor uses software to produce a PMI interrupt in order to force entry to the PMI handler routine of Figure 27. In Figure 27, the resume flag is again checked at 2147 and will be found to be set, so that control proceeds to block 2148 where a branch is made to the resume handler routine.

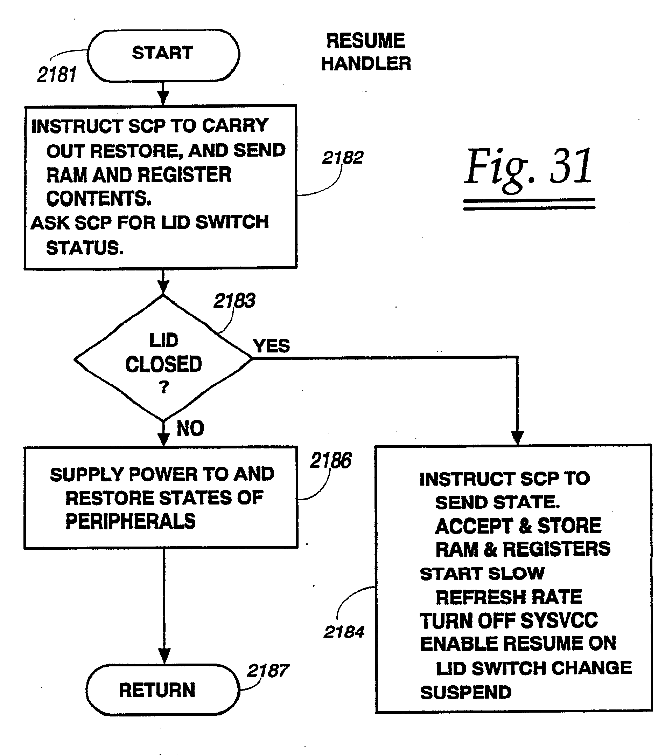

The resume handler routine is shown in Figure 31. Execution of the resume handler routine begins at block 2181, and at block 2182 the main processor sends a command to the SCP indicating that the state of the SCP is to be restored, and then sends to the SCP the contents of the SCP RAM and registers which were previously stored at block 2169 of Figure 29. Then, the main processor instructs the SCP to check the state of the lid switch 2068 and advise the main processor 2011 of the state of the switch. Based on the information from the SCP, the main processor determines at block 2183 whether the lid is closed. If it is found that the lid is closed, then the system is to be returned to suspend mode, and so at block 2184 the system carries out steps similar to those shown at block 2169 in Figure 29 in order to return the system to suspend mode.

On the other hand, if the lid is open, then the main processor 2011 proceeds from block 2183 to block 2186 and continues with the process of resuming from suspend mode, in particular by supplying power to and restoring the state of the various peripheral devices of the system. Then, at block 2187, the processor executes a return, which effectively returns control to the point at which the suspend handler was called when the system was originally suspended, for example one of the blocks 2160 or 2166 in Figure 28. Control then proceeds from that point, and will ultimately return to blocks 2153 and 2154 of Figure 27, where the state of the processor will be restored so that the interrupted application program resumes operation from the point at which it was interrupted and as if it had not been interrupted.

The operation of the system 2010 in a typical situation will now be briefly described. Assume that the system is up and running and is executing an application program, and that the user has specified that closing of the lid is to place the system in suspend mode. If, while using the system, the user closes the lid, the main loop of the SCP program (Figure 25) will determine at block 111 that the lid is now closed, will determine at block 121 that system operation is to be suspended, and at block 122 will initiate an external PMI interrupt to serve as a request to the main processor that the suspend mode be entered. This interrupt will cause the application program to be interrupted and the PMI handler routine of Figure 27 to be entered, and control will proceed through block 2151 of Figure 27 to block 2152, where the external PMI handler routine of Figure 28 is called.

In Figure 28, it will be determined at block 158 that the PMI was generated because the lid closed. Control will therefore proceed to block 2159, where for purposes of this discussion it is assumed that the processor finds that the hard disk drive is busy and proceeds to block 2161, where it sends to the SCP a command instructing the SCP to actuate its ENABLE output. The SCP services this command at blocks 2139 and 2140 of Figure 26, and actuating the ENABLE output has the effect of enabling one input of AND gate 2072. Meanwhile, the main processor exits the interrupt handler via blocks 2162, 2167, 2153 and 2154, and continues with execution of the interrupted application program.

When the hard disk drive 2023 finishes what it is doing, it deactuates its LED output, which causes the AND gate 2072 to produce an output signal indicating that the hard drive is not busy (HDNB), which passes through the OR gate 2073 and causes the PHI generator 36 to generate a further PMI interrupt, which causes another entry to the routine of Figure 27 and a call at block 2152 to the routine of Figure 28. In Figure 28, it will be determined at block 2158 that the lid did not just close, and so blocks 2159-2161 will be skipped. At block 2162, the main processor will recognize from the PMI byte that the SCP generated the PMI because the hard disk drive is no longer busy, and thus the suspend mode (which was not entered at blocks 2159-2160) can now be entered. Therefore, the main processor will proceed through block 2163 to block 2166, where the suspend handler of Figure 29 is called.

The suspend handler of Figure 29 has already been described, and concludes by placing the main processor 2011 in a low power mode in which its clock is turned off and program execution is halted. The processor remains in this mode until an event occurs which is intended to cause it to resume operation. In particular, if the lid is opened, the lid switch 2068 will, through the signal processing circuit 2013, cause the resume control circuit 2041 to produce a resume reset, which in turn causes the processor 2011 to begin executing the reset handler routine of Figure 30. The processor will proceed through blocks 2172 and 2173 to block 2176, where it generates a software PMI to effect reentry to the PMI handler routine of Figure 27. It will be determined at block 2147 that the resume flag 2044 (Figure 24) is set, and so at block 2148 the processor will branch to the resume handler of Figure 31. In the resume handler of Figure 31, execution will proceed through blocks 2182, 2183 and 2186, and the return at 2187 will return control to block 2166 in Figure 28, where execution will proceed to block 2167 for a return to block 2152 in Figure 27, after which an exit from the PMI handler routine is made through blocks 2153 and 2154. Execution of the interrupted application program thus continues from the point at which it was interrupted.

In the foregoing example, the system exited suspend mode in response to a resume reset produced by opening the lid. Events other than opening the lid can also produce a resume reset. For example, if the system is in the suspend mode and the modem 2022 receives an incoming telephone call, the modem ring indicator signal MDMRI on line 2043 will cause the resume control circuit 2041 to produce a resume reset. This resume reset will be handled in precisely the same manner as described in the foregoing example, except that when block 2183 in Figure 31 is reached, the system will find that the lid is still closed. Therefore, control will proceed to block 2184, where the main processor 2011 will return to the suspend mode in order to wait for another resume reset caused by subsequent opening of the lid.

Also, there are events other than closing of the lid which can place the system into the suspend mode. For example, manual actuation of the switch 2016 can place the system in suspend mode, while the lid remains in an open position. If the lid is then closed while the system is in suspend mode, the signal from the lid switch 2068 will cause the signal processing circuit 2013 to produce a pulse on line 2042, which in turn will cause the resume control circuit 41 to produce a resume reset. In general, this resume reset will be handled in the manner described in the preceding paragraph for the modem ring. At block 2183, it will be determined that the lid is now closed, and therefore the resume sequence will be terminated and at block 2184 the system will return to the suspend mode in order to wait for a further resume reset caused by subsequent raising of the lid.

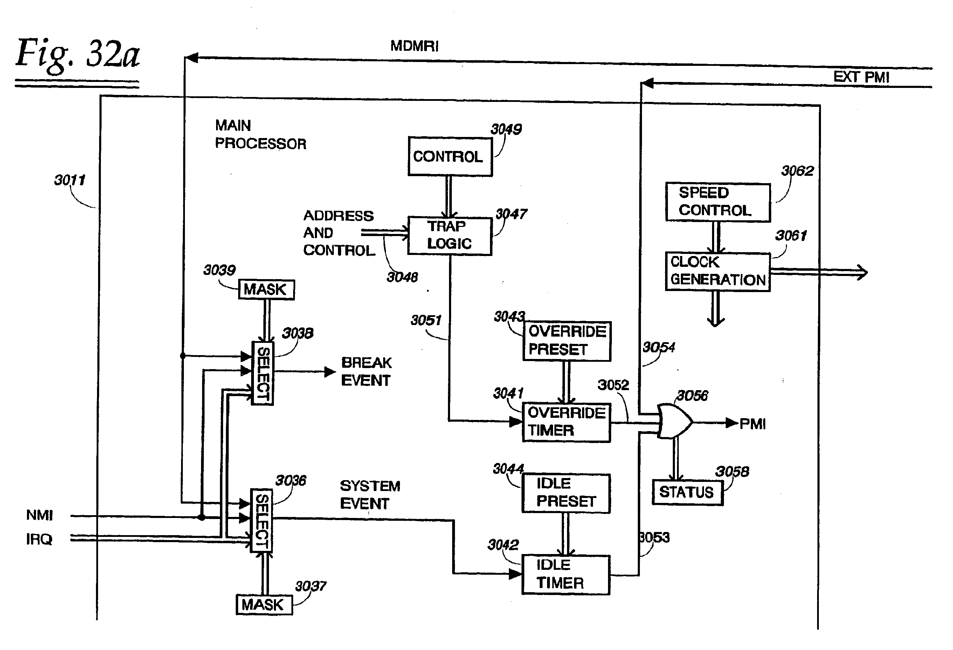

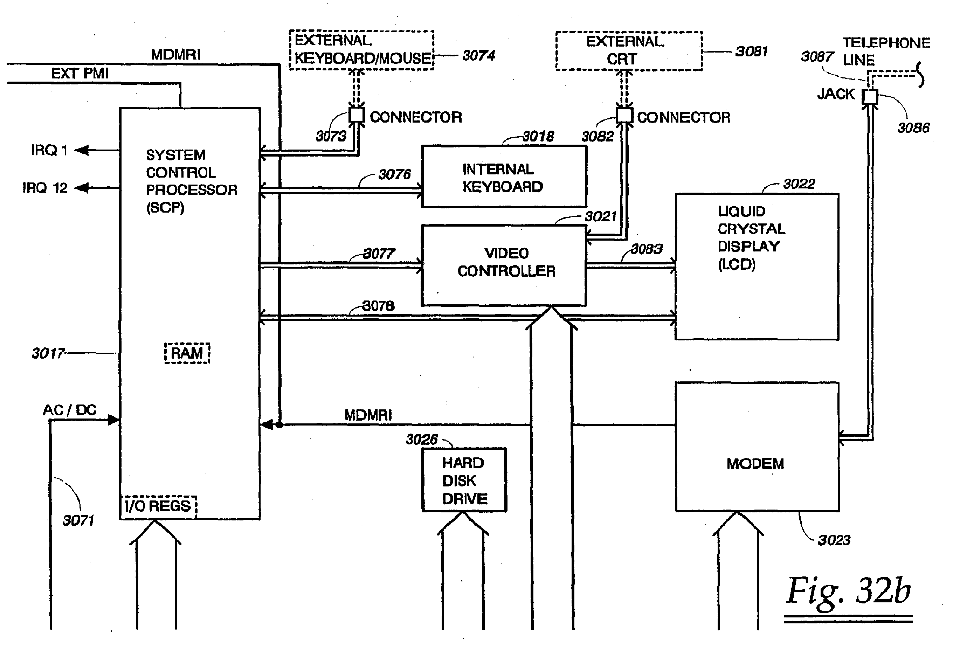

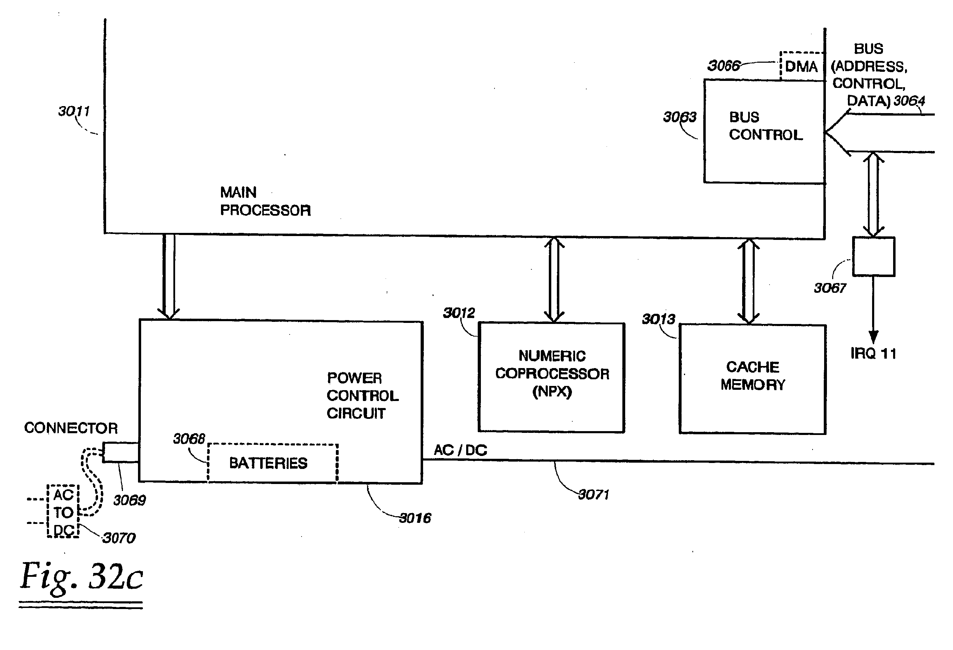

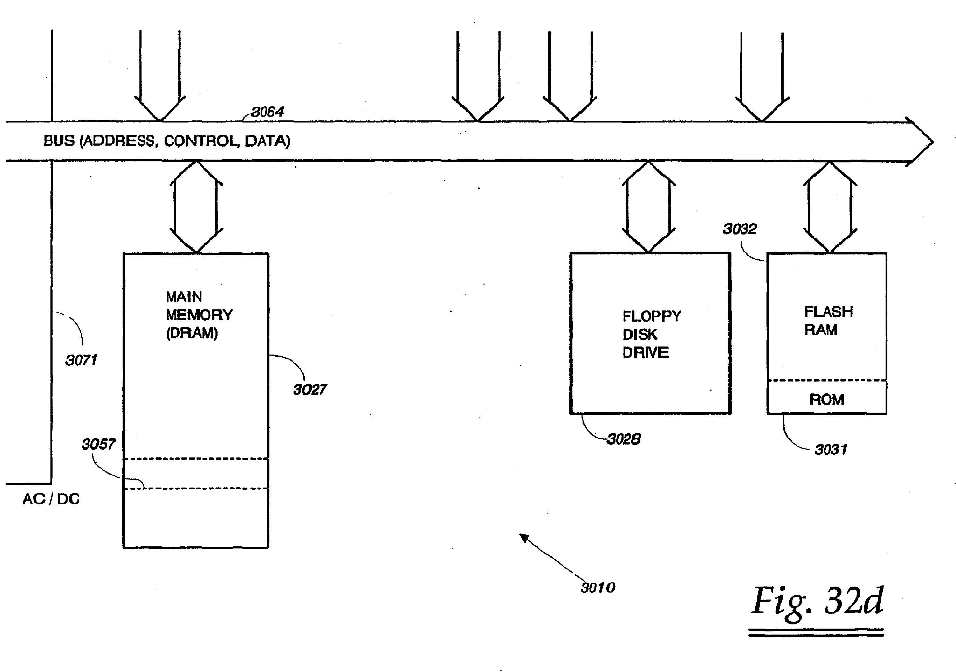

Figure 32 is a block diagram of a computer system 3010 which is a further variation of the system 310 of Figure 1. The computer system 3010 includes a main processor 3011, a conventional numeric coprocessor (NPX) 3012, a cache memory 3013, a power control circuit 3016, a system control processor (SCP) 3017, an internal keyboard 3018, a video controller circuit 3021, a monochrome liquid crystal display (LCD) unit 3022, a modem 3023, a hard disk drive (HDD) 3026, a main memory 3027 implemented with dynamic random access memory (DRAM) chips, a floppy disk drive (FDD) 3028, a read only memory (ROM) 3031, and a flash RAM 3032. The main processor 3011 is implemented with an Intel 386SL microprocessor. Components in Figure 32 which correspond functionally to components in Figure 1 are not described again in detail here.

The processor 3011 includes a number of hardware timers, two of which are shown at 3041 and 3042. These timers correspond to the local standby timer 351 and global standby timer 352 of Figure 1, but they are respectively referred to in the following discussion as an override timer and an idle timer in order to more accurately reflect the particular functions for which they are used according to the invention. Associated with each timer is a respective preset register 3043 or 3044.

The processor 3011 includes a trap logic circuit 3047, which receives address and control information at 3048 and which is controlled by a control register 3049. The register 3049 is set by software and, in the preferred embodiment, defines a range of input/output (I/O) addresses which are not accessed during normal system operation. If one of the addresses in this range is accessed, the trap logic circuit 3047 generates a signal at 3051 which resets the override timer 3041. However, since the range of addresses has been intentionally selected to include only addresses which should not be normally accessed, during normal system operation the output 3051 of the trap logic circuit 3047 should never be actuated and should thus never restart the override timer 3041. Consequently, and as discussed in more detail later, the override timer 3041 is intended to run until it expires, unless the software restarts it or disables it before it reaches expiration.

Associated with the bus control circuit 3063 is a direct memory access (DMA) circuit 3066, which can control certain transfers across the bus. A circuit 3067 is coupled to the bus 3064 and detects situations where the bus is being used to write information into video control registers or a video memory located in the video controller 3021, in response to which the circuit 3067 actuates its output line IRQ11, which is one of the IRQ lines coupled to inputs of the selectors 3036 and 3038.

Turning to the SCP 3017, the SCP in the preferred embodiment is based on an Intel 87C51GB processor, but other commercially available processors could be used for the SCP.

Before explaining pertinent portions of the programs running in the main processor and the SCP, a brief overview will be given of the idle mode, which is a part of the present invention. In the preferred embodiment, the preset for the idle timer at 3044 in Figure 32 is set to a value representing 8 seconds. so long as there is system activity generating input signals to the system event selector 3036, the selector 3036 will be producing periodic pulses on the SYSTEM EVENT line, which periodically restart the idle timer 3042 and prevent it from expiring. The most common source of active input signals to the system event selector 3036 is the group of interrupt lines IRQ, including IRQ1 which is generated by the SCP 3017 when a user presses a key on the keyboard, IRQ12 which is generated by the SCP when the user generates input with a mouse, and IRQ11 which is generated when the executing program writes data to registers or memory in the video controller 3021. Consequently, if the timer 3042 does expire, it is because a period of eight seconds has elapsed without any such activity.

Following eight seconds of inactivity, the computer system 3010 enters the idle mode, in which the system continues to operate but with certain power saving factors, such as having the processor 3011 run at a slower clock speed. The idle mode is entirely transparent to the user, in that there is no visible sign to the user that the system has entered or exited idle mode. If certain events occur while the system is in idle mode, for example if the user presses a key or the executing program reaches a portion where it updates the video display, the system will initiate an exit from the idle mode. On the other hand, if the system remains in the idle mode for a predetermined period of time, then the system will automatically transition to a standby mode, which in and of itself is conventional.

In the standby mode, various system peripherals are shifted to a low power state, the backlight for the video display is turned off, and the processor 3011 is halted. obviously, the standby state is visible to the user, because the backlight is turned off. If an event such as a keypress occurs while the system is in standby mode, the break event selector 3038 will actuate its BREAK EVENT output, which will cause the processor 3011 to start running again and to restore peripherals to their normal operational state. Since the standby mode is itself conventional, it is not discussed here in further detail. The system is technically capable of entering a further mode which is called suspend mode or rest mode, in which power is shut off to substantially all of the system. However, the suspend mode is conventional and not pertinent to an understanding of the present invention, and is therefore not described in detail.

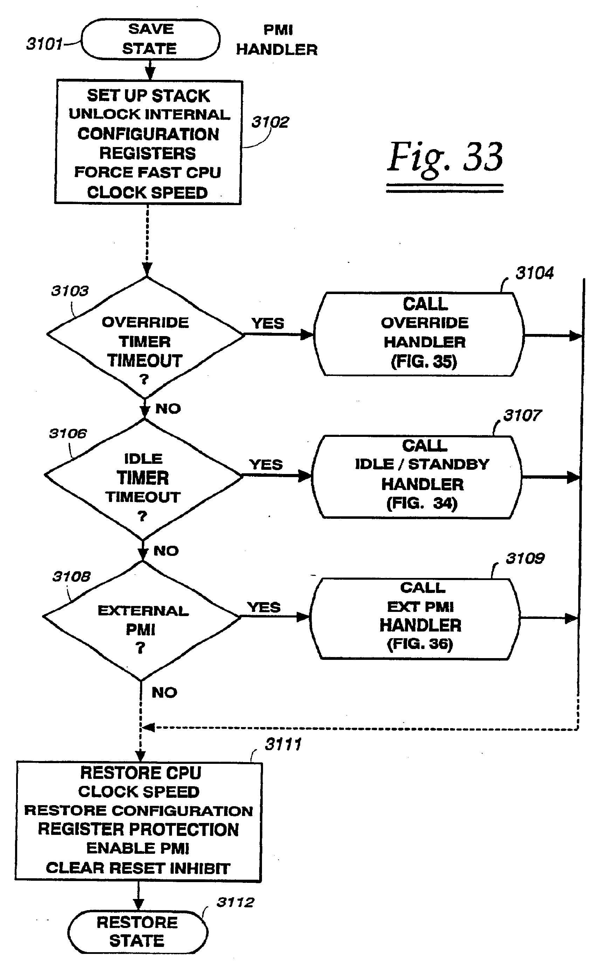

Figures 33-36 are flowcharts of respective portions of a program executed by the main processor 3011. Figure 33 shows pertinent portions of a PMI handler routine which is executed in response to a PMI interrupt. More specifically, when the processor is executing an application program, a PMI from any source causes the hardware of the processor 3011 to automatically save its state in the portion 3057 of the main memory 3027, as shown diagrammatically at block 3101 in Figure 33. Then, the processor 3011 automatically begins execution of the PMI handler routine at a predetermined point, Which is shown at 3102 in Figure 33. In particular, the PMI handler begins by setting up a special stack for its own use in the portion 3057 of the memory 3027, and unlocks certain internal configuration registers so that they can be altered, including the control register 3062 which is used to change clock speeds. Then, the processor changes the register 3062 in order to force the CPU to run at its fastest clock speed, so that the PMI routine will execute as fast as possible.

The processor 3011 then checks the bits of the status register 3058 in order to determine what event initiated the PMI interrupt. In particular, at 3103 the processor checks a bit of the status register 3058 to determine if the PMI was caused by expiration of the override timer 3041, and if so proceeds to block 3104 where it calls an override handler discussed in more detail later. Otherwise, control proceeds to block 3106, where the processor checks the status register to see if the PMI was caused by expiration of the idle timer 3042 and, if so, proceeds to block 3107 where it calls an idle/standby handler discussed in more detail later. If the PMI was not caused by the expiration of the idle timer, then control proceeds from block 3106 to block 3108, where the processor checks to see if the PMI was caused by an external PMI signal generated on line 3054 by the SCP 3017. If so, control proceeds to block 3109, where a call is made to an external PMI handler routine discussed in more detail later.

Ultimately, control will reach block 3111 in Figure 33, where the processor 3011 will look in the state information saved in the portion 3057 of the memory 3027 at block 3101 of Figure 33, to determine the CPU clock speed which was in effect at the time the PMI interrupt occurred. The processor sets the control register 3062 to restore the CPU to this clock speed. Then, the processor locks its internal configuration registers, so that they cannot be changed. The processor then enables the occurrence of PMI interrupts, so that the next such interrupt will be serviced, and clears a reset inhibit status which prevents system resets from occurring while a PMI interrupt is being serviced. Finally, at 3112, an instruction is executed which causes the saved state of the processor to be restored to the processor from the portion 3057 of main memory 3027. With its state restored, the processor continues execution of the interrupted application program from the location at which it was interrupted and as if it had not been interrupted.

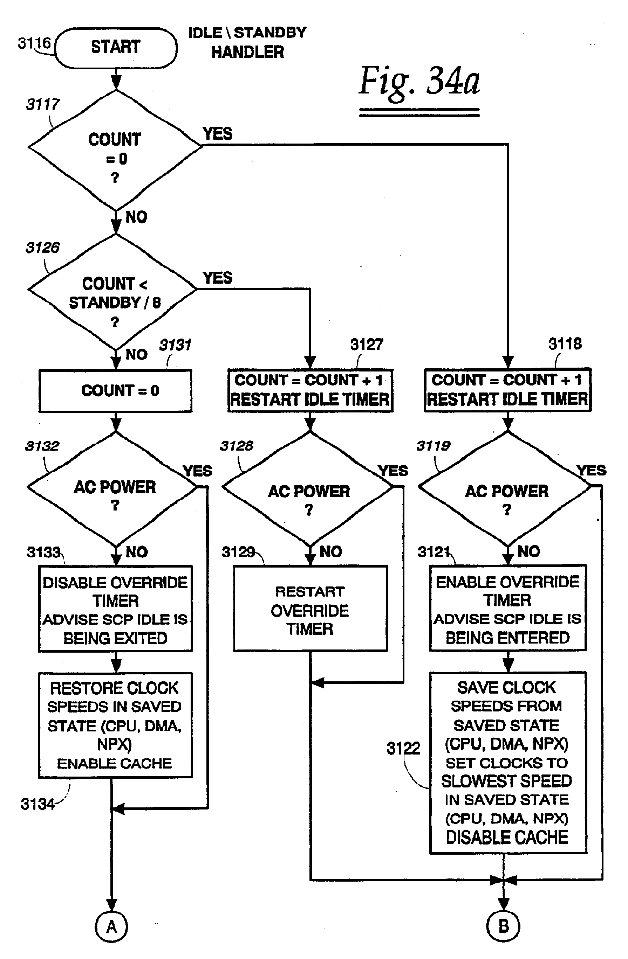

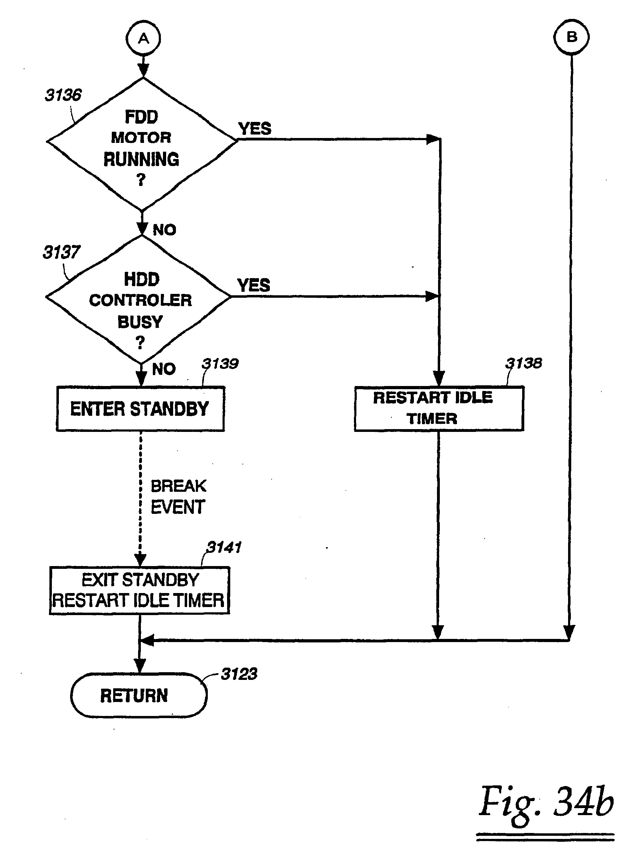

Figure 34 is a flowchart of an idle/standby handler routine which is called by block 3107 in Figure 33 when the idle timer 3042 expires. When the routine of Figure 34 is called in response to expiration of the idle timer, execution begins at block 3116 and proceeds to block 3117. At block 3117, the processor checks a software COUNT value, which is always initialized to zero when the system is first turned on. Accordingly, when the idle timer 3042 first expires after a period of system activity, the COUNT will be zero and control will therefore proceed from block 3117 to block 3118, where COUNT is incremented and the idle timer is restarted. Then, at block 3119, the main processor 3011 obtains from the SCP 3017 an indication of whether the system is operating on AC power or DC power. If operating on AC power, then the system does not enter idle mode, and in particular subsequent blocks 3121 and 3122 are skipped. However, if the system is operating on DC power, or in other words battery power, the system enters idle mode in blocks 3121 and 3122 in order to conserve power. In block 3121, the processor enables the override timer 3041 which, in the preferred embodiment, has a preset corresponding to a time interval of 12 seconds, or in other words a preset a little longer than the 8 second preset of the idle timer. Then, the main processor 3011 advises the SCP 3017 that idle mode is being entered. In block 3122, the processor 3011 extracts the clock speeds for the CPU 3011, DMA 3066 and NPX 3012 from the data saved in the portion 3057 of memory 3027 at block 3101 of Figure 33. The processor 3011 saves these clock speeds at a different location in the portion 3057 of the memory. Then, in the saved state data in portion 3057 of memory 3027, the processor 3011 changes the clock speeds for the CPU, DMA and NPX to the slowest possible speed for each. It is important to note that the PMI handler routine continues to run at the maximum clock speed, and thus the slow speed clocks will not be implemented until the saved state information is restored to the processor at block 3112 in Figure 33, or in other words when the application program is resumed. Finally, still in block 3122, the processor 3011 disables the cache memory 3013. In some systems, disabling of the cache memory may cause the system to use more power than when the cache is enabled, in which case disabling of the cache can be omitted. However, in systems where disabling the cache memory reduces power consumption, it is implemented at this point.

In the preferred embodiment, the conventional hard disk drive 3026 has internal circuitry which will automatically shift it to a reduced power mode when it has not been actively accessed for a period of time. Likewise, the conventional floppy disk drive 3028, in conjunction with some conventional software, is shifted to a reduced power mode when it has not been actively accessed for a period of time. Consequently, it is not necessary to forcibly shift either to a reduced power mode in blocks 3121 and 3122 of Figure 34. However, in some systems the operational mode of these two drives may be under the direct control of the processor, in which case they could be shifted to reduced power modes in block 3122.

Also, it would be possible to provide the usual parallel port interface circuitry, but with the capability for the main processor to shift this circuitry between a normal operational mode and a reduced power mode. In block 3122, the processor could shift this interface circuitry to its reduced power mode as idle is entered.

It should be noted that the video display is not altered as idle mode is entered. The user will continue to see the usual screen display and thus will not realize that idle mode has been entered.

From block 3122, control proceeds to block 3123, where a return is made to the calling routine of Figure 33, and then a return at 3112 to the interrupted application program.

Assuming that there is a continued period of inactivity, after eight more seconds the idle timer will expire again. It should be noted that the twelve second override timer will still have four seconds remaining. Thus, expiration of the idle timer causes a further entry to the PMI handler of Figure 33, which will in turn call the routine of Figure 34 again. Since COUNT was previously incremented at block 3118, it will not be zero when checked at block 3117, and control will therefore proceed to block 3126.

As mentioned above, it is possible for the system to go from idle mode to the standby mode or alternatively to suspend mode. For purposes of this discussion, it is assumed that the system is configured to go from idle to standby. The system determines whether it is time to enter standby mode by counting the number of times the idle timer expires. For example, if the system is to enter standby mode two minutes after it enters idle mode (if there is no intervening system activity), then the system counts 15 timeouts of the idle counter (8 seconds x 15 = 120 seconds = 2 minutes). Therefore, in block 3126, COUNT is compared to a value which is the standby period divided by 8 seconds. If COUNT has not yet reached this value, then control proceeds to block 3127, where COUNT is incremented and the idle timer is restarted. At 3128, the processor checks to see if the system is operating on AC power. If it is, then idle mode is not in effect and block 3129 is skipped. Otherwise, control proceeds to block 3129, where the override timer is restarted. Control then proceeds to block 3123 where a return is made to the calling routine of Figure 33, and then at 3112 to the interrupted application program.

It is possible for the user to specify that there is to be no automatic transition from idle mode to standby or suspend mode, in which case the standby time interval is set to a very long period and thus block 3126 compares COUNT to a very large value which as a practical matter COUNT cannot reach, and control will always go from block 3126 to block 3127 until the system exits idle mode. However, for purposes of this discussion, it is assumed that the user has enabled a transition from idle to standby. After the idle timer has expired several times and the processor has executed the branch containing blocks 3127-3129 several times, the idle timer will expire again, and in Figure 34, it will be determined at 3126 that the count has now reached a value corresponding to the standby interval divided by 8 seconds. This means that standby mode is to be entered. Control therefore proceeds to block 3131, where COUNT is reset to zero. Then, at block 3132, the processor checks to see if the system is operating on AC power. If it is, then idle mode is not in effect and there is no need to execute blocks 3133 and 3134 in order to exit idle mode. On the other hand, if it is found at block 3132 that the system is operating on DC power, then at block 3133 the processor disables the override timer and advises the SCP that idle mode is being exited. Then, at block 3134, it changes the saved state of the processor in the portion 3059 of the main memory 3027 in a manner restoring the clock speeds which were in effect when the state of the processor was actually saved in the portion 3057 of the memory 3027. Again, it should be noted that these clock speeds do not immediately take effect. Instead, the processor 3011 continues operating at its maximum clock speed until it eventually reaches block 3112 of Figure 33 and restores its prior state from the portion 3057 of the memory 3027, at which point the clock speeds in the saved state are actually implemented for purposes of continuing the interrupted application program. Finally, still in block 3134, the cache memory is enabled. In systems where the processor must directly control the operational modes of the hard disk drive, floppy disk drive, and/or parallel port, these components would also be restored to a normal operational state at this point.

The system cannot enter standby mode if the floppy disk drive is busy or the hard disk drive is busy. Accordingly, at blocks 3136 and 3137, the state of each of these drives is checked, and if either is busy then the entry to standby mode is cancelled and control proceeds to block 3138, where the idle timer is restarted. Then, a return is made at 3123 to the calling routine of Figure 33, and eventually at block 3112 the system returns to execution of the interrupted application program.

On the other hand, if the floppy disk drive and hard disk drive are not busy, then control proceeds from blocks 3136 and 3137 to block 3139, where the system enters the standby mode. As mentioned above, the system could alternatively enter the suspend mode, but this is not important for purposes of the present invention and it is therefore not described in detail. The various steps carried out to prepare for entry to the standby mode are conventional, and they are therefore not shown in detail in block 3139. When the processor 11 enters the standby mode in block 3139, it stops its clock and thus halts. It remains in the halted state until one of the inputs to the break event selector 3038 is actuated and in turn actuates the BREAK EVENT signal, which at 3141 causes the processor to restart its clock and then perform in reverse order the sequence of events carried out to enter the standby mode. In block 3141, the idle timer 3042 is also restarted. Then, at block 3123, a return is made to the calling routine of Figure 33.

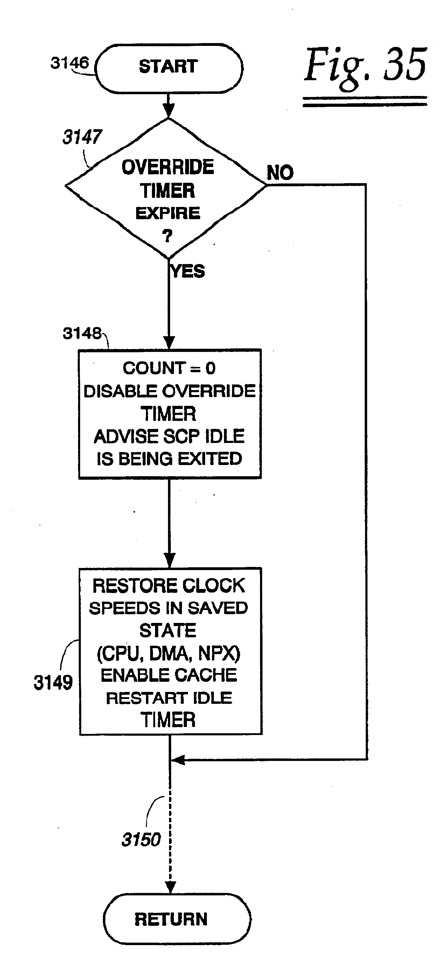

Once the system has entered the idle mode, the 8-second idle timer 3042 should normally time out before the 12-second override timer 3041. However, if an event occurs which actuates the SYSTEM EVENT signal, for example actuation of the modem ring indicator signal MDMRI in response to an incoming telephone call, then the SYSTEM EVENT signal will restart the idle timer before it expires, and thus the 12-second override timer 3041 will eventually expire before the restarted idle timer and will produce a PMI interrupt. As previously mentioned, this will be detected at block 3103 in Figure 33 and will result in a call to a routine shown in Figure 35. The routine of Figure 35 will typically handle functions other than just expiration of the override timer, but only the portion of this routine which handles the override timer is pertinent to the present invention and therefore only this portion is shown and described in detail.

Execution in Figure 35 begins at block 3146, and at block 3147 the processor checks to see if the cause of the PMI was expiration of the override timer. If not, exiting from the idle mode at blocks 3148 and 3149 is skipped, and the processor continues at 150 to look for other sources of the PMI. On the other hand, if it is determined at block 3147 that the override timer has expired, it means that a system event has occurred and restarted the idle timer, and that idle mode should be exited. Accordingly, at block 3148, COUNT is set to zero, the override timer is disabled, and the SCP is advised to exit idle mode. Then, at block 3149, the clock speeds saved at block 3122 in Figure 34 are restored to the saved state information in portion 3057 of memory 3027, the cache is enabled, and the idle timer 3042 is restarted. Execution then continues at 3150.

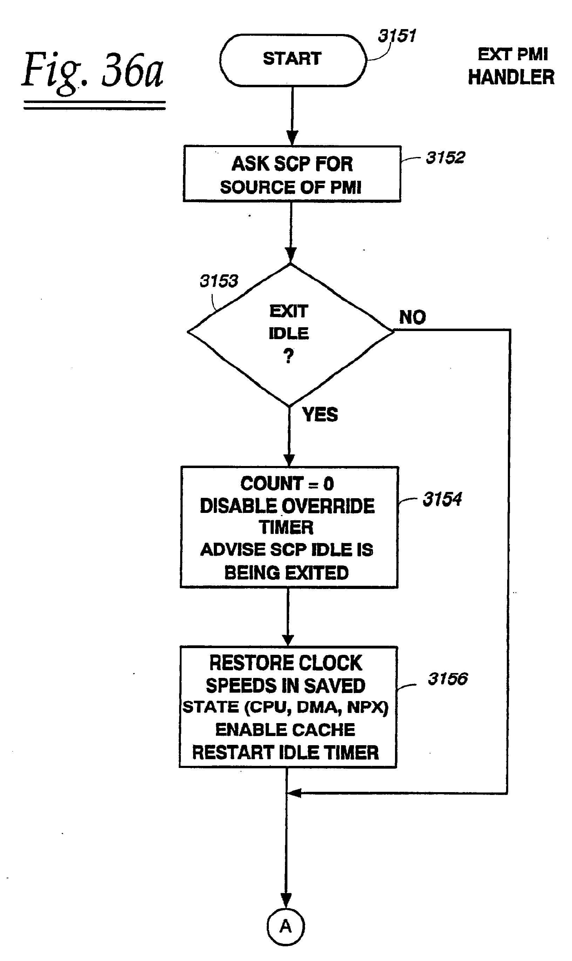

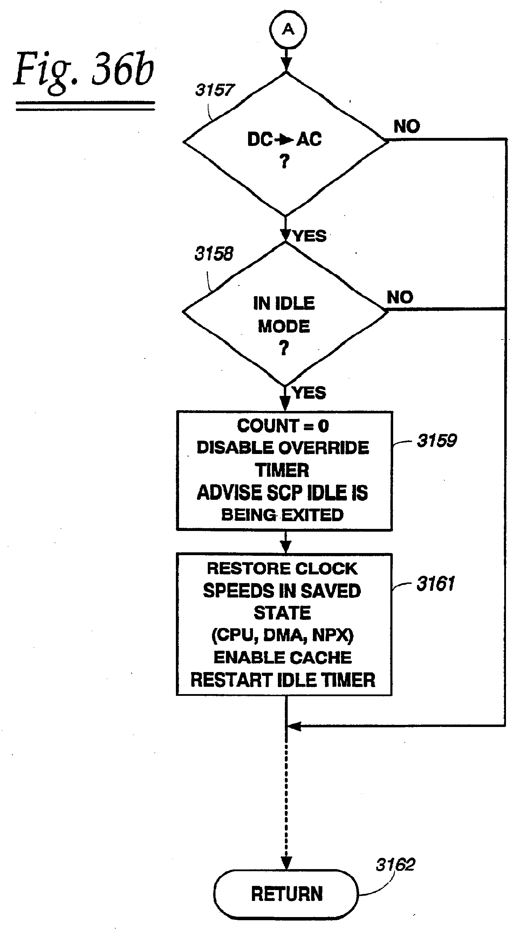

It should be evident that, when a system event occurs and resets the idle timer, it may be several seconds before the override timer expires and brings the system out of idle mode. In the case where a user presses a key on the keyboard, it is desirable that the system immediately exit idle mode. Accordingly, when the SCP 3017 detects that a key has been pressed, it not only actuates interrupt line IRQ1 in order to coordinate transfer to the processor 11 of a control code representing the key which was pressed, but in addition it actuates the external PMI line 3054 in order to create a PMI interrupt in the processor 3011. In Figure 33, the fact that the PMI was initiated by the SCP is detected at block 3108, and in block 3109 the processor calls the external PMI handler routine, which is shown in Figure 36.

Execution of the routine of Figure 36 begins at block 3151, and at block 3152 the main processor 3011 asks the SCP 3017 to identify the reason for the external PMI. In reply, the SCP 3017 returns a PMI byte having several bits which can be set to indicate respective causes for the PMI. At block 3153, the processor 3011 checks the PMI byte to determine if the SCP is instructing it to exit idle mode as a result of pressing of a key on one of the internal and external keyboards, or as a result of input from a mouse 3074. If not, then blocks 3154 and 3156 are skipped. However, if the SCP has indicated that idle mode is to be exited, then blocks 3154 and 3156 are executed in order to exit the idle mode. Blocks 3154 and 3156 are similar to blocks 3148 and 3149 in Figure 35.

At block 3157, the processor 3011 checks the PMI byte to see if the SCP 3017 has just detected a switch from DC power to AC power. Since power consumption is less critical in the AC mode, idle mode can be exited if the AC mode is in effect. Therefore, in block 3158, the processor checks to see if it is currently in idle mode. If it is, then blocks 3159 and 3161 are executed in order to exit idle mode, these blocks being identical to blocks 3154 and 3156. Otherwise, blocks 3159 and 3161 are skipped.

Ultimately, control proceeds to block 3162, where a return is made to the calling routine of Figure 33.

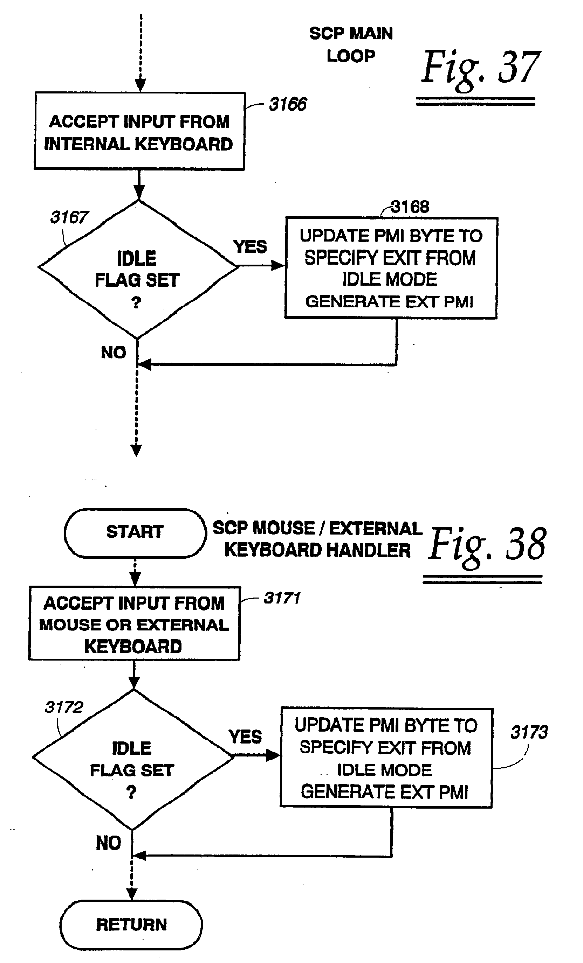

Figures 37-40 are flowcharts of pertinent portions of the program executed by the system control processor (SCP) 3017. Figure 37 shows a portion of the main loop of the SCP program. At block 3166, the SCP accepts input from the internal keyboard 3018 in response to a user pressing a key. Then, at block 3167, the SCP checks to see if an internal idle flag is set. The idle flag is a software flag which is set by the SCP when the main processor advises the SCP that it is entering idle mode, and which is cleared by the SCP when the main processor advises the SCP that it is exiting idle mode. If the idle flag is set to indicate that the system is in idle mode, then the fact that the user has pressed a key on the keyboard means that the system needs to immediately exit idle mode.. Accordingly, at block 3168, the SCP updates its PMI byte to set a bit which instructs the main processor to exit idle mode, and then generates an external PMI on line 3054.

Figure 38 shows a portion of a routine which handles input from a mouse or external keyboard connected to the system, and is similar to Figure 37. In particular, input from the mouse or external keyboard is accepted at block 3171, and if it is found at block 3172 that the idle flag is set, then at block 3173 the PMI byte is updated to set the bit instructing the main processor to exit idle mode, and then a PMI is generated.

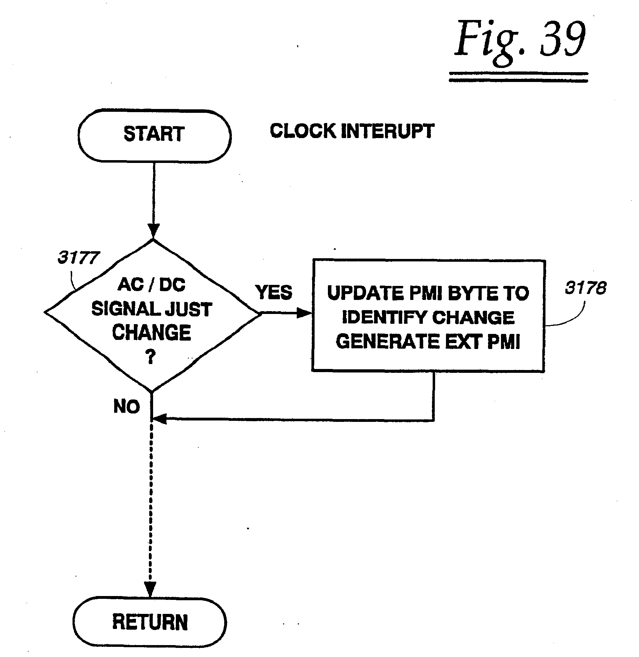

Figure 39 depicts part of a clock interrupt routine in the SCP. The clock interrupt occurs periodically at predefined intervals. At block 3177, the SCP 3017 checks the AC/DC line 3071 from the power circuit 3016 in order to determine whether the power control circuit 3016 has just switched from AC power to DC power, or vice versa. If so, then at block 3178 the SCP updates the PMI byte to identify the particular change, and then generates a PMI.

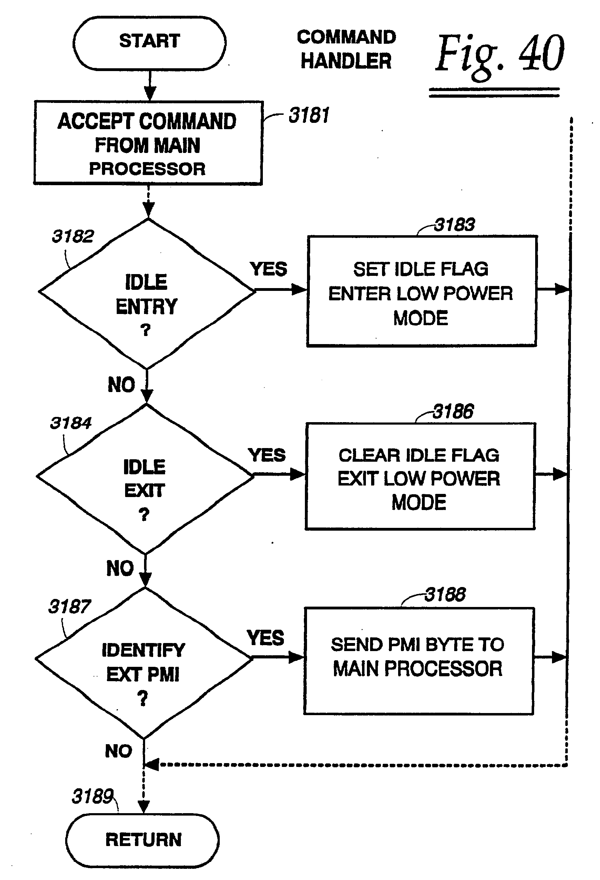

Figure 40 shows a routine which is executed by the SCP when it receives a command from the main processor. The preferred embodiment includes many commands, but only three which are pertinent to the present invention are shown. In particular, at block 3181 the SCP accepts a command from the main processor, and then examines the command in order to determine what the SCP is being instructed to do.

If it is determined at block 3182 that the main processor is advising the SCP 3017 that idle mode is being entered, then at block 3183 the SCP sets its idle flag, and enters a low power mode in which it continues to operate but at a lower clock speed than normal. On the other hand, if it is determined at block 3184 that the main processor is advising the SCP that it is exiting idle mode, then at block 3186 the SCP clears its idle flag and then returns from its low power mode to its normal operational mode. Alternatively, if it is determined at block 3187 that the main processor 11 is instructing the SCP 3017 to identify the reason why the SCP generated an external PMI, then at block 3188 the SCP sends the PMI byte to the main processor so that the main processor can examine the byte and determine the reason that the SCP generated a PMI. From each of blocks 3183, 3186 and 3188, control proceeds to block 3189, where a return is made.

The operation of the system of Figure 32 will now be briefly summarized. For purposes of this discussion, assume that the system is operating on DC power. When a user is actively typing on one of the keyboards or is using the mouse, and/or when an executing program is periodically updating the video display, interrupts IRQ1, IRQ11 and/or interrupt IRQ12 Will be periodically generated and will cause the system event selector 3036 to output a string of pulses on the SYSTEM EVENT line. The override timer will be disabled, but the idle timer 3042 will be enabled and will be restarted by each pulse on the SYSTEM EVENT line, so that the idle timer does not reach expiration.

If this system activity ceases, then the idle timer will expire after 8 seconds, and the idle mode will be entered at blocks 3118-3119 and 3121-3122 of Figure 34, which includes enabling the override timer 3041 and shifting the processor 3011 to its slowest clock speed. control then returns to the interrupted application program. If there is no activity for another 8 seconds, then the idle timer will expire again and generate another PMI, which will lead to execution of blocks 3127-3129 in Figure 34, where both timers are restarted and the count of idle timer expirations is incremented. Eventually, if system inactivity continues, the count of expirations of the idle timer will reach a value corresponding to the time interval at which an automatic entry to standby mode is to be effected. Therefore, at blocks 3131-3134 of Figure 34, the system exits idle mode and then, provided the floppy disk and hard disk are not busy, enters standby mode at block 3139. Standby includes stopping the clock of the processor 3011 so that the processor 3011 halts. The processor 3011 remains in standby mode until the user generates input using a keyboard or the mouse, these events causing the break selector 3038 to produce a BREAK EVENT signal which automatically restarts the clock of the processor 3011 and causes it to exit standby mode at block 3141, after which execution returns to the interrupted application program.

Assuming for sake of discussion that the processor 3011 has entered and is currently carrying out program execution in idle mode, there are various events which can force the system out of the idle mode and back to its normal operational mode. For example, if the modem receives an incoming call while the system is in idle mode, the associated ring indicator signal MDMRI will produce a SYSTEM EVENT signal which resets the idle timer 3042. other not-illustrated events can have the same effect, but they are not themselves essential to an understanding of the present invention and are therefore not described in detail. Since each such event resets the idle timer 3042, the timer 3042 will not expire and generate a PMI, and therefore the override timer 41 will in due course expire and generate a PMI. Blocks 3147-3149 of Figure 35 show how the system exits idle mode in response to expiration of the override timer. It should be noted that, from the point in time when a system event occurs and restarts the idle timer 3042, several seconds may elapse before the override timer 3041 expires and effects an exit from the idle mode in a manner shown in Figure 35. This approach is acceptable for certain signals (such as the modem ring indicator signal) which are internal to the computer system and which actuate the SYSTEM EVENT line, but it is not acceptable for a user to have to wait several seconds after pressing a key or using the mouse in order to have the system run normally again. Therefore, if the SCP detects input from one of the keyboards or from the mouse, then as shown in Figures 37 and 38 it instructs the main processor to immediately exit the idle mode, and at blocks 3153, 3154 and 3156 in Figure 36 the system does exit idle.

As mentioned above, the processor 3011 enters idle mode only if the system is operating on DC battery power. When the system is operating on AC power, entry to idle mode is not necessary because there is no critical need to save power. With this in mind, if the user supplies AC power to the system while the system is in idle mode, it is appropriate to immediately exit idle mode. In this regard, with reference to Figure 39, when the SCP detects that a change has just occurred in the source of power, it notifies the main processor, and if the main processor determines at block 3157 in Figure 36 that the change is from DC power to AC power, and if the system is found to be in idle mode at block 3158, then at blocks 3159 and 3161 the system exits the idle mode.

In the preferred embodiment described above, the preset register 3044 is always loaded with a value representing a value of 8 seconds, regardless of whether the system is operating on AC or DC power. An alternative approach is to load the preset register with a value representing 8 seconds when the system is operating on DC power and to load it with a value representing the actual standby time interval when the system is operating on AC power. With reference to Figure 36, block 3161 would, just before restarting the idle timer 42, set the associated preset register 3044 to the full standby time interval, because the system is commencing operation on AC power. The route in Figure 36 would also include a new block checking for a switch from AC power to DC power, and upon detection of this condition would load the preset register 3044 with a value of 8 seconds and then restart the idle timer 3042 for operation in DC power mode. In Figure 34, an additional decision block would be added between blocks 3116 and 3117, and would check to see whether the system is currently operating on AC power. If so, then the initial expiration Of timer 3042 represents expiration of the full standby time interval, and control would proceed directly to block 3136, whereas if it was determined that the system was operating on DC power, control would proceed to block 3117. Blocks 3132, 3128 and 3119 would be omitted. under this approach, entry to and the various exits from the idle mode would, at a broad level, still occur in the same manner as for the first described embodiment and in response to the same conditions. This alternative approach is therefore mentioned only to make it clear that it is regarded to be a part of the present invention.

It must be emphasized that, as a practical matter, the standby mode is very visible to the user, because the display goes blank and, if the user presses a key, there is a brief delay until the display returns and the system continues operating. Thus, while the standby mode does provide a significant power saving in order to reduce the amount of electricity drawn from the battery, it can be annoying to a user. The idle mode according to the invention is intended to provide an intermediate level of power savings in response to system inactivity in a manner so that the user is entirely unaware that idle mode has been entered or exited.

The following part of the description summarizes the main features of the invention:
1. An apparatus comprising: a first memory which can store image information, a display, means for displaying on said display an image based on image information from said first memory, a second memory, and control means responsive to a first condition for saving said image information from said first memory in said second memory and thereafter reducing power to said first memory, and responsive to a second condition for restoring power to said first memory and thereafter restoring said image information to said first memory from said second memory.
2. An apparatus comprising: a processor operable in normal and reduced power modes, a power supply for supplying power to said processor, a manually acuable power button, means for identifying as a configuration condition a selected one of first and second conditions, and means responsive to manual operation of said power button for deactuating said power supply when said configuration condition is said first condition and for placing said processor in said reduced power state when said configuration condition is said second condition.
3. An apparatus comprising: a processor, a power supply for supplying power to said processor from an AC source when said AC source is receiving AC energy and from a DC source in response to the absence of AC energy for said AC source, means for performing a predetermined function which is dependent on a parameter, means for storing an AC value and a DC value for said parameter, and means for causing said AC value to be used as said parameter when said power supply is supplying power from said AC source and for causing said DC value to be used as said parameter when said power supply is supplying power from said DC source.
4. An apparatus comprising: a processor having normal and reduced power modes, power supply means for supplying power to said processor, a manually actuable power button, means responsive to a first predetermined condition for placing said processor in said reduced power mode, and means responsive to a second predetermined condition which includes manual operation of said power button for providing an operator perceptible warning that a transition is being made to a state where said power supply is deactuated, and for thereafter requesting user confirmation that said power supply is to be deactuated.
5. An apparatus comprising: a processor operable in normal and reduced power modes, a disk drive which is operationally coupled to said processor, and control means responsive to a predetermined condition for checking said disk drive and for thereafter switching said processor from said normal mode to said reduced power mode when said disk drive is inactive and for displaying an operator perceptible warning and maintaining said processor in said normal mode when said disk drive is active.
6. An apparatus comprising: a processor operable in normal and reduced power modes, a disk drive which is operationally coupled to said processor and can removably receive a disk, and means responsive to a first predetermined condition for storing an indication of whether a disk is in said disk drive, for thereafter placing said processor in said reduced power mode, for thereafter restoring said processor to said normal mode in response to the occurrence of a predetermined condition, and for thereafter displaying an operator perceptible warning regarding the need for the same disk in said disk drive when said stored indication indicates a disk was in said disk drive at said first predetermined condition.
7. An apparatus comprising: a computer system having first memory means for storing a first set of configuration information and having second memory means for storing a second set of configuration information, and means responsive to a predetermined condition for effecting system configuration using the configuration information from said first memory means.
8. An apparatus comprising: a processor having an interrupt input, first and second mask registers controlled by said processor and each having a bit indicating whether an interrupt signal present at said interrupt input is enabled or disabled, first means for respectively permitting and obstructing recognition of said interrupt signal by said processor when said bit of said first mask register is respectively indicating that said interrupt signal is respectively enabled and disabled, second means for respectively permitting and obstructing recognition of said interrupt signal by a further circuit when said second mask register is respectively indicating that said interrupt signal is respectively enabled and disabled, and means responsive to loading of said first mask register by said processor for conforming said bit of said second mask register to said bit of said first mask register.
9. An apparatus comprising: a main processor operable in a normal mode and a reduced power mode, a first memory operationally coupled to said main processor, an auxiliary processor operationally coupled to said main processor, power supply means controlled by said main processor for selectively effecting and obstructing a supply of power to said auxiliary processor, and control means responsive to a predetermined condition for obtaining from said auxiliary processor and storing in said first memory information defining an internal status of said auxiliary processor, for thereafter causing said power supply means to terminate power to said auxiliary processor, for thereafter placing said main processor in said reduced power mode, for thereafter returning said main processor to said normal mode in response to a predetermined condition, for thereafter causing said power supply means to restore power to said auxiliary processor, and for thereafter restoring to said auxiliary processor from said first memory said information defining said internal status of said auxiliary processor.
10. An apparatus comprising: a processor having a program execution mode and a non-execution mode, a memory operationally coupled to said processor, a real time clock circuit operationally coupled to said processor and maintaining time information, a program executed by said processor and maintaining time information in said memory based on said time information in said real time clock circuit, and control means responsive to a predetermined condition for switching said processor from said execution mode to said non-execution mode, for thereafter switching said processor from said non-execution mode to said execution mode in response to a further condition, and for thereafter updating said time information maintained in said memory based on said time information in said real time clock circuit.
11. An apparatus comprising: a main processor having a normal operational mode and a reduced power mode, an auxiliary processor operationally coupled to said main processor, a modem adapted to be coupled to a telephone line and having means for producing a ring signal in response to an incoming telephone call on the telephone line, and means responsive to a predetermined condition for switching said main processor from said normal operational mode to said reduced power mode, and means for causing said auxiliary processor to monitor said ring signal from said modem when said main processor is in said reduced power mode and to switch said main processor from said reduced power mode to said normal mode in response to the occurrence of said ring signal at said output of said modem.
12. An apparatus comprising: processing means, a pointing device coupled to said processing means and having information stored therein, power supply means controlled by said processing means for selectively supplying and terminating power to said pointing device, and control means responsive to a first predetermined condition for causing said processing device to obtain and save said information from said pointing device, for causing said power supply means to thereafter terminate power to said pointing device, for subsequently causing said power supply means to restore power to said pointing device in response to a second predetermined condition, and for thereafter restoring said saved information to said pointing device.
13. An apparatus comprising: a processor having a normal operational mode in which said processor executes instructions and a further operational mode in which said processor is halted, a light emitting element, and means responsive to said processor being in said further operational mode for flashing said light emitting element in a predetermined pattern.
14. An apparatus comprising: a processor having a normal operational mode in which said processor executes instructions and a further operational mode in which said processor is halted, a disk drive which is operationally coupled to said processor and can removably receive a disk, a memory operationally coupled to said processor and containing a program which is executed by said processor and which maintains in said memory a flag set in response to the insertion or removal of a disk from said disk drive, and control means responsive to a first predetermined condition for switching said processor from said normal operational mode to said further operational mode, and responsive to a second predetermined condition for switching said processor from said further operational mode to said normal operational mode and thereafter setting said flag to provide a forced indication of insertion or removal of a disk.
15. An apparatus comprising: a processor having a normal operational mode in which said processor executes instructions and a further operational mode in which said processor is halted; a disk drive which is operationally coupled to said processor and which can removably receive a disk; and control means responsive to a predetermined condition for saving an indication of whether a disk is present in said disk drive and for thereafter switching said processor from said normal operational mode to said further operational mode.
16. An apparatus comprising: a computer system having a keyboard which includes a plurality of manually operable keys, means responsive to a first predetermined key operation for causing said system to wait for a second predetermined key operation.
17. An apparatus comprising: a computer system having a memory and a disk drive, said disk drive including a register, and means responsive to a transfer of information to said register in said disk drive for storing said information in a shadow location of said memory.
18. An apparatus comprising: a processor, and means for supplying to said processor in response to a request therefrom a hardware revision level identification.
19. An apparatus comprising: a computer system which includes a housing, a lid supported on said housing for movement between open and closed positions, a processor having a first operational mode in which said processor executes instructions and a second operational mode in which said processor is halted, and means for generating an operator perceptible warning in response to said lid being moved to said closed position while said processor is in said first operational mode.
20. An apparatus comprising: a processor having a normal operational mode in which said processor executes instructions and having a further operational mode in which said processor is halted, a memory operationally coupled to said processor, power supply means for selectively permitting and obstructing a supply of power to said memory, a disk drive having a disk therein, and means responsive to a first predetermined condition for saving the contents of said memory on said disk, thereafter terminating power to said memory, and thereafter shifting said processor from said normal operational mode to said further operational mode, and responsive to a second from predetermined condition for shifting said processor from said further operational mode to said normal operational mode, thereafter restoring the supply of power to said memory, and thereafter transferring from said disk drive to said memory said contents of said memory stored on said disk drive.
21. An apparatus comprising: a processor which maintains keyboard status information, a first keyboard coupled to said processor and operated in accord with said keyboard status information; keyboard connector means for releasably coupling a second keyboard to said processor; and control means for causing said processor to turn off power to said keyboard connector means, to subsequently turn on power to said keyboard connector means, and to thereafter send said status information to said second keyboard through said keyboard connector means.
22. An apparatus comprising: a processor operable at a first clock speed and at a second clock speed slower than said first clock speed, said processor consuming less power when operating at said second clock speed than when operating at said first clock speed; and control means responsive to a predetermined condition for automatically switching said processor from said first clock speed to said second clock speed.
23. An apparatus comprising: a processor operable in a normal mode and a reduced power mode, a hard disk drive operationally coupled to said processor and having a selectively actuable motor, means defining a timer for measuring a time interval, and control means responsive to a first predetermined condition for deactuating said motor of said hard disk drive and for thereafter placing said processor in said reduced power mode, and responsive to a second predetermined condition for returning said processor to said normal operational mode, for actuating said disk drive motor, for starting said timer and for resuming normal operation while inhibiting accesses to said hard disk until said timer has expired.
24. A computer system, comprising: storage means for storing data, and a peripheral having an operational status, said peripheral having means responsive to a first predetermined condition for facilitating storage in said storage means of the complete operational status of said peripheral, and responsive to a second predetermined condition for facilitating restoration to said peripheral of the operational status thereof stored in said storage means.
25. An apparatus comprising: a processor which can issue commands, including a first command and a second command; storage means for storing data; and a peripheral having a control circuit which has an operational status, said peripheral having first means responsive to said first command for facilitating storage in said storage means of the complete operational status of said peripheral, and second means responsive to said second command for facilitating restoration to said peripheral of said operational status thereof stored in said storage means.
26. An apparatus as in # 25, wherein said peripheral is a disk drive having a magnetic disk, said storage means being a portion of said disk, said first means storing said operational status on said portion of said disk and said second means retrieving said operational status from said portion of said disk.
27. An apparatus as in # 25, wherein said storage means is physically separate from said peripheral, wherein said first means transmits said operational status to said processor and said processor includes means for storing said operational status in said storage means, and wherein said processor includes means for retrieving said operational status from said storage means and transmitting said retrieved operational status to said second means.
28. An apparatus as in # 27, wherein said peripheral is a hard disk drive.
29. An apparatus as in # 27, wherein said first means incorporates said operational status into a data block of predetermined size and transmits said data block to said processor for storage in said storage means, and wherein said processor returns said data block to said peripheral following said second command and said second means extracts said operational status from said data block.
30. An apparatus as in # 29, wherein said data block has a size of 512 bytes.
31. An apparatus as in # 25, including power control means responsive to said processor for respectively providing and interrupting electrical power to said peripheral, said processor including means for causing said power control means to terminate the supply of power to said peripheral following storage of said operational status in said storage means and for thereafter restoring the supply of power to said peripheral prior to transmission to said peripheral of said second command.
32. An apparatus as in # 25, wherein said first command includes a first portion which causes said first means to collect said operational status of said peripheral, and includes a second portion which is sent subsequent to said first portion and which causes said first means to facilitate storage of said operational status in said storage means.
33. A method of operating a system which includes a processor, a storage device, and a peripheral, comprising the steps of: transmitting a first command from said processor to said peripheral, collecting in response to said first command a complete operational status of said peripheral and storing said operational status in said storage device; thereafter transmitting a second command from said processor to said peripheral; and retrieving from said storage device in response to said second command said complete operational status and restoring to said peripheral said operational status.
34. A method as in # 33, wherein said peripheral is a disk drive having a magnetic disk which is said storage device, said storing step including the step of saving said complete operational state on a predetermined portion of said disk.
35. A method as in # 33, wherein said storage device is physically separate from said peripheral, and wherein said step of storing said operational status includes the steps of sending said operational status from said peripheral to said processor and then causing said processor to store said operational status in said storage device, and wherein said step of retrieving said operational status includes the steps of causing said processor to retrieve said operational status from said storage device and to send said operational status to said peripheral.
36. A method as in # 33, including subsequent to said step of storing said operational status in said storage device and prior to said step of transmitting said second command, the steps of terminating a supply of power to said peripheral and subsequently restoring the supply of power to said peripheral.
37. A method as in # 33, wherein said step of transmitting said first command includes the steps of transmitting a first portion of said first-command, said collecting step being carried out in response to receipt of said first portion of said command, and the step of subsequently transmitting a second portion of said first command, said storing step being carried out in response to receipt of said second portion of said first command.
38. An apparatus comprising: a processor having an interrupt input; a disk drive having means for outputting a light element control line which can have first and second states and selectively actuable means for coupling said light element control line of said disk drive to said interrupt input of said processor, said processor including means for selectively actuating and deactuating said selectively actuable means.
39. An apparatus as in # 38, wherein said processor has a selectively actuable output; and wherein said selectively actuable means includes an AND gate having one input input coupled to said output of said processor and a second input coupled to said light element control line from said disk drive, and means coupling said output of said AND gate to said interrupt input of said processor.
40. A method of operating a system which includes a processor having an interrupt input and includes a disk drive outputting a light element control signal which can have first and second logical states, including the step of: interrupting said processor when said light element control line changes from said first logical state to said second logical state during a predetermined operational condition.
41. A method as in # 40, wherein said processor has an output line, and including the steps of causing said processor to selectively set said output line to one of first and second logical states, said predetermined operational condition existing when said output line has said first logical state.
42. An apparatus comprising: a computer system which includes a housing, a lid supported on said housing for movement between open and closed positions, a processor provided in said housing and having a first operational mode in which said processor executes instructions and a second operational mode in which said processor is halted in a reduced power state from which said processor can automatically exit in response to a predetermined condition, and means responsive to movement of said lid to said closed position when said processor is in said first operational mode for switching said processor to said second operational mode.
43. An apparatus as in # 42, including means responsive to movement of said lid away from said closed position for switching said processor from said second operational mode to said first operational mode, said processor thereafter continuing in said first operational mode from the point at which said first operational mode was discontinued for said switch to said second operational mode.
44. An apparatus as in # 43, wherein said means for switching said processor from said second operational mode to said first operational mode includes switch means for producing a signal having first and second states respectively indicating that said lid is in said open and closed positions, said signal being applied to one input of an exclusive OR gate, and delay means for applying to a second input of said exclusive OR gate an inverted and delayed version of said signal, said exclusive OR gate having an output connected to a trigger input of a monostable multivibrator, and said monostable multivibrator having an output which is coupled to an input of said processor, said processor being responsive to an output signal from said monostable multivibrator for effecting said switching from said second operational mode to said first operational mode.
45.An apparatus as in # 44, wherein said switch means includes a switch coupled to said lid and having an output, a first resistor connected between said output of said switch and a source of power, a first capacitor coupled between said output of said switch and ground, and a first inverter having an input coupled to said output of said switch and having an output, said output of said first inverter being said signal having said first and second states, and wherein said delay means includes a second resistor having first and second ends respectively connected to said output of said first inverter and an input of a second inverter, a third resistor having first and second ends respectively connected to said output of said second inverter and said second input of said exclusive OR gate, and a second capacitor connected between said second input of said exclusive OR gate and ground.
46.An apparatus as in # 45, including a flip-flop having a clock input and arranged to alternate between first and second states in response to the application of successive clock pulses thereto, and having an output coupled to a reset input of said monostable multivibrator, and including means for permitting said processor to selectively apply clock pulses to said clock input of said flip-flop in order to selectively enable and disable said monostable multivibrator.
47.An apparatus as in # 43, including means responsive to a condition other than the position of said lid for initiating a switch from said second operational mode to said first operational mode, and further means responsive to said lid being in said closed position for terminating a switch from said second operational mode to said first operational mode and for returning said processor to said second operational mode.
48. An apparatus as in # 43, wherein said computer system includes a plurality of peripherals operationally coupled to said processor, and means for permitting said processor to selectively switch each said peripheral between a normal operational state and a reduced power state, wherein as said processor is switched from said first operational mode to said second operational mode said processor saves an internal state of each said peripheral and switches each said peripheral from said normal operational state to said reduced power state, and wherein when said processor is switched from said second operational mode to said first operational mode said processor switches each said peripheral from said reduced power state to said normal operational state and restores to said peripherals said saved internal states thereof.
49.An apparatus as in # 43, wherein said first operational mode includes an unprotected mode in which said processor has a predetermined set of operational capabilities and a protected operational mode in which said processor can perform a first subset of said operational capabilities and is inhibited from performing a second subset of said operational capabilities different from said first subset, means responsive to closing of said lid for forcing said processor to said unprotected mode and for causing said processor to execute a predetermined program which effects said switching of said processor to said second operational mode, and including means responsive to opening of said lid for shifting said processor from said second operational mode to said unprotected mode and for causing said processor to then execute a program which concludes by instructing said processor to operate in one of said protected mode and said unprotected mode in which said processor was operating at the time the lid was closed.
50.An apparatus as in # 42, including a further processor which is responsive to the position of said lid and which notifies said first-mentioned processor when said lid is moved to a closed position.
51.An apparatus as in # 42, wherein said computer system includes a keyboard supported on said housing and a display supported on said lid, said keyboard and display being exposed when said lid is in said open position and being covered when said lid is in said closed position.
52. An apparatus comprising: a computer system which includes a housing, a lid supported on said housing for movement between open and closed positions, a processor having a first operational mode in which said processor executes instructions and a second operational mode in which said processor is halted in a reduced power state from which said processor can automatically exit in response to a predetermined condition, means for permitting an operator to select one of first and second events to occur when said lid is moved to said closed position, said first event being switching of said processor from said first operational mode to said second operational mode.
53. An apparatus as in # 52, wherein said computer system includes a display which is exposed and hidden when said lid is respectively open and closed, and including a backlight for illuminating said display, said second event being turning off of said back light.
54.An apparatus as in # 52, wherein said computer system includes means for generating an audible sound, said second event being generation of said audible sound.
55.A computer system, comprising: a processor operable in a normal operational mode and in a reduced power mode, and means responsive to the absence of a predetermined event during a predetermined time interval for automatically switching said processor from said normal operational mode to said reduced power mode, said processor carrying out program execution in each of said normal operational mode and said reduced power mode.
56. A system as in # 55, wherein said processor has a clock speed which can be varied, and wherein in said reduced power mode said clock speed is set to a very low speed.
57.A system as in # 55, including a cache memory coupled to said processor, wherein said processor disables said cache memory upon entry to said reduced power mode.
58.A system as in # 55, including means responsive to the occurrence of a predetermined event when said processor is in said reduced power mode for switching said processor from said reduced power mode to said normal operational mode.
59.A system as in # 55, wherein said system can be operated on DC power or AC power, and wherein said means for automatically switching prevents switching of said processor to said reduced power mode when said system is operating on AC power.
60. A system as in # 55, wherein said means for automatically switching includes first timer means for timing said predetermined time interval, said first timer means being restarted by the occurrence of said predetermined event, and includes means responsive to expiration of said first timer means for effecting said automatic switching from said normal operational mode to said reduced power mode.
61.A system as in # 60, including second timer means for timing a further time interval which is longer than said predetermined time interval, said system restarting said first and second timer means in response to each expiration of said first timer means, and including means responsive to expiration of said second timer means in the absence of expiration of said first timer means for switching said processor from said reduced power mode to said normal operational mode.
62. A system as in # 60, including means for counting successive expirations said first timer means, and means responsive to said count reaching a predetermined value for automatically switching said system to a standby mode in which operation of said processor is halted.
63. A system as in # 55, including a video display apparatus coupled to said processor, and means responsive to accesses to said video display apparatus for generating a signal which is said predetermined event.
64.A system as in # 55, including a further processor, said further processor being responsive to input from one of a keyboard and mouse for generating a signal which is said predetermined event.
65.A system as in # 55, wherein entry to and exit from said reduced power mode is imperceptible to a person using the computer system.

## Claims

1. A computer system (310; 3010) comprising a CPU (311; 3011) having multiple speeds of operation and further comprising a control circuit (311; 3011) for causing said computer system to enter a reduced power state in response to one or more predetermined events,
**characterized in**
**that** said control circuit (311; 3011) has a first reduced power state in which power is reduced to at least one peripheral (318, 321, 322, 327, 331; 3021, 3022, 3023, 3026, 3028, 3031) and a second reduced power state in which the operating speed of said CPU (311; 3011) is reduced to further limit power to said computer system (310; 3010).

2. The computer system (310; 3010) as recited in claim 1, further **characterized in**
**that** at least one of said predetermined events includes a software generated signal.

3. The computer system (310; 3010) as recited in claim 1 or 2, further **characterized in**
**that** at least one of said predetermined events includes a hardware generated signal.

4. The computer system (310; 3010) as recited in any one of the foregoing claims,
further **characterized in**
**that** said control circuit (311; 3011) includes means (361; 3048) for detecting bus accesses to a predetermined range of addresses and at least one first timer (351, 352; 3041) having a predetermined time out period and controlled as a function of bus accesses in said predetermined range of addresses and, in response to a time out, causes one or more of said peripherals (318, 321, 327; 3021, 3026, 3028) to save its current status and enter said first reduced power state.

5. The computer system (310; 3010) as recited in claim 4, further **characterized in**
**that** said control circuit (311; 3011) includes at least one second timer (353; 3042) responsive to the time out of an idle first timer (351; 3042) which causes said CPU (311; 3011) to reduce its operating speed to further conserve power defining a suspend mode.

6. The computer system (310; 3010) as recited in claim 5, further **characterized in**
**that** said suspend mode may be disabled by user configuration.

7. The computer system (310; 3010) as recited in any one of the foregoing claims,
further **characterized by**
a power control circuit (312) for providing a signal indicative of whether the computer system (310; 3010) is being powered from an AC source (398) or a DC source (396, 397).

8. The computer system (310; 3010) as recited in claim 7 in combination with claim 5,
further **characterized in**
**that** said second timer (353; 3042) is disabled when said computer system is operating from an AC power source (398).

9. The computer system (310; 3010) as recited in any one of the foregoing claims,
further **characterized in**
**that** said control circuit (311; 3011) is configured to return the computer system to the operating state just before entering a reduced power state in response to at least one resume signal.

10. The computer system (310; 3010) as recited in claim 9, further **characterized in**
**that** said resume signal is a hardware signal.

11. The computer system (310; 3010) as recited in claim 9 or 10, further **characterized in**
**that** said resume signal is a signal indicating that a device has been activated.

12. The computer system (310; 3010) as recited in claim 11, further **characterized in**
**that** said resume signal is a modem signal.

13. The computer system (310; 3010) as recited in any one of the foregoing claims,
further **characterized in**
**that** the operating state of the peripherals (318, 321, 322, 327, 331; 3021, 3022, 3023, 3026, 3028, 3031) is saved in a main memory (326; 3027) in said reduced power state in which power is maintained.

14. The computer system (310, 3010) as recited in claim 13, further **characterized in**
**that** the operating state of said peripherals (318, 321, 322, 327, 331; 3021, 3022, 3023, 3026, 3028, 3031) is saved in a non-volatile memory (323; 3026) and said main memory (326; 3027) is powered down during said first reduced power states.

15. The computer system (310; 3010) as recited in claim 14, further **characterized in**
**that** said non-volatile memory is a hard disk drive (323; 3026).
